# EUROPEAN PATENT APPLICATION

(11) **EP 4 832 649 A1**
(43) Date of publication of application: **28.10.2026**
(21) Application number: 24905586.4
(22) Date of filing: 14.08.2024
(51) Int. Cl.: H04W 76/10

(54) **INFORMATION TRANSMISSION METHOD AND APPARATUS, AND STORAGE MEDIUM**

(30) Priority: 18.12.2023 CN 202311745080
(71) Applicant: Datang Mobile Communications Equipment Co., Ltd., Beijing 100085 (CN)
(72) Inventor: CAI, Yu, Beijing 100085 (CN); WAN, Qing, Beijing 100085 (CN)
(74) Representative: Studio Torta S.p.A.
(86) International application number: PCT/CN2024/112129
(87) International publication number: WO 2025/130091

(57) **Abstract**

Disclosed are a method for transmitting information and apparatus, a device, and a storage medium. The information transmission method includes: receiving first information sent by a first terminal device or a first logical function entity, where the first information is used for instructing to initiate target information exchange, the target information exchange includes information exchange for a target business or a target function or a target service, and the target information exchange is information exchange between the first terminal device and the first logical function entity; and indicating, to the first terminal device, first indication information corresponding to the target information exchange, and/or obtaining the first indication information corresponding to the target information exchange determined by the first terminal device, where the first indication information is used for indicating second information for target information exchange sent by the first terminal device to the first logical function entity, and/or the first indication information is used for indicating third information for target information exchange sent by the first logical function entity to the first terminal device.

## Description

### CROSS REFERENCE OF RELATED APPLICATION

This application claims a priority to Chinese Patent Application No. 202311745080.9 filed on December 18, 2023 and title "INFORMATION TRANSMISSION METHOD, APPARATUS, AND STORAGE MEDIUM" the disclosures of which are incorporated in their entirety by reference herein.

### FIELD

The present disclosure relates to the field of communication technologies, and in particular, to a method for transmitting information, apparatus, and storage medium.

### BACKGROUND

In 5G (5th Generation Mobile Communication Technology), it is necessary to define different RRC (Radio Resource Control) information elements or RRC messages in standard protocols to carry control plane information transmitted between UE (User Equipment) and RAN (Radio Access Network), so that the RAN can identify the corresponding control plane information based on the RRC information elements and RRC messages.

However, in the future 6G (6th Generation Mobile Communication Technology), the RAN may be reconfigured into multiple wireless network functions, such as a radio access function, a positioning function, a sensing function, an AI (Artificial Intelligence) function, etc. The information interacted between each separated wireless network function and the UE needs to be transmitted through the RAN. If the existing technology is still used to define special RRC information elements or RRC messages for each type of information in the standard protocols to carry the messages, the workload will be large, the protocol will be cumbersome and redundant, the readability will be poor, and there may be coupling between different functional protocols.

### SUMMARY

Embodiments of the present disclosure provide a method for transmitting information, apparatus, and storage medium.

According to an aspect of the embodiments of the present disclosure, there is provided a method for transmitting information applied to an access network device, the method including: receiving first information sent by a first terminal device or a first logical functional entity; where the first information is used to indicate initiating a target information interaction, the target information interaction includes an information interaction of a target service or a target function or a target servicing, and the target information interaction is an information interaction between the first terminal device and the first logical functional entity; and indicating, to the first terminal device, first indication information corresponding to the target information interaction, and/or obtaining the first indication information corresponding to the target information interaction determined by the first terminal device; where the first indication information is used to indicate second information of the target information interaction sent by the first terminal device to the first logical functional entity, and/or the first indication information is used to indicate third information of the target information interaction sent by the first logical functional entity to the first terminal device.

According to another aspect of the embodiments of the present disclosure, there is provided a method for transmitting information applied to a first terminal device, the method including: sending first information to an access network device; where the first information is used to indicate initiating a target information interaction, the target information interaction includes an information interaction of a target service or a target function or a target servicing, and the target information interaction is an information interaction between the first terminal device and a first logical functional entity; and indicating, to the access network device, first indication information corresponding to the target information interaction, and/or obtaining the first indication information corresponding to the target information interaction determined by the access network device; where the first indication information is used to indicate second information of the target information interaction sent by the first terminal device to the access network device, and/or the first indication information is used to indicate third information of the target information interaction sent by the first logical functional entity to the first terminal device.

According to another aspect of the embodiments of the present disclosure, there is provided a method for transmitting information applied to a first terminal device, the method including: indicating, to an access network device, first indication information corresponding to a target information interaction, and/or obtaining the first indication information corresponding to the target information interaction determined by the access network device; where the target information interaction includes an information interaction of a target service or a target function or a target servicing, and the target information interaction is an information interaction between the first terminal device and a first logical functional entity; the first indication information is used to indicate second information of the target information interaction sent by the first terminal device to the access network device, and/or the first indication information is used to indicate third information of the target information interaction sent by the first logical functional entity to the first terminal device.

According to another aspect of the embodiments of the present disclosure, there is provided a method for transmitting information applied to a first logical functional entity, the method including: sending first information to an access network device; where the first information is used to indicate initiating a target information interaction, the target information interaction includes an information interaction of a target service or a target function or a target servicing, the target information interaction is an information interaction between a first terminal device and the first logical functional entity, and the target information interaction corresponds to first indication information; where the first indication information is used to indicate second information of the target information interaction sent by the first terminal device to the first logical functional entity, and/or the first indication information is used to indicate third information of the target information interaction sent by the first logical functional entity to the first terminal device.

According to another aspect of the embodiments of the present disclosure, there is provided a method for transmitting information applied to a first logical functional entity, the method including: indicating, to an access network device, second indication information corresponding to a target information interaction, and/or obtaining the second indication information corresponding to the target information interaction determined by the access network device; where the target information interaction includes an information interaction of a target service or a target function or a target servicing, and the target information interaction is an information interaction between the first terminal device and the first logical functional entity; the second indication information is used to indicate second information of the target information interaction sent by the first terminal device to the first logical functional entity, and/or the second indication information is used to indicate third information of the target information interaction sent by the first logical functional entity to the first terminal device.

According to another aspect of the embodiments of the present disclosure, there is provided an apparatus for transmitting information including a memory, a transceiver, and a processor: the memory is used to store a computer program; the transceiver is used to send and receive data under the control of the processor; the processor is used to read the computer program in the memory and execute the following operations: receiving first information sent by a first terminal device or a first logical functional entity; where the first information is used to indicate initiating a target information interaction, the target information interaction includes an information interaction of a target service or a target function or a target servicing, and the target information interaction is an information interaction between the first terminal device and the first logical functional entity; and indicating, to the first terminal device, first indication information corresponding to the target information interaction, and/or obtaining the first indication information corresponding to the target information interaction determined by the first terminal device; where the first indication information is used to indicate second information of the target information interaction sent by the first terminal device to the first logical functional entity, and/or the first indication information is used to indicate third information of the target information interaction sent by the first logical functional entity to the first terminal device.

According to another aspect of the embodiments of the present disclosure, there is provided an apparatus for transmitting information including a memory, a transceiver, and a processor: the memory is used to store a computer program; the transceiver is used to send and receive data under the control of the processor; the processor is used to read the computer program in the memory and execute the following operations: sending first information to an access network device; where the first information is used to indicate initiating a target information interaction, the target information interaction includes an information interaction of a target service or a target function or a target servicing, and the target information interaction is an information interaction between the first terminal device and a first logical functional entity; and indicating, to the access network device, first indication information corresponding to the target information interaction, and/or obtaining the first indication information corresponding to the target information interaction determined by the access network device; where the first indication information is used to indicate second information of the target information interaction sent by the first terminal device to the access network device, and/or the first indication information is used to indicate third information of the target information interaction sent by the first logical functional entity to the first terminal device.

According to another aspect of the embodiments of the present disclosure, there is provided an apparatus for transmitting information including a memory, a transceiver, and a processor: the memory is used to store a computer program; the transceiver is used to send and receive data under the control of the processor; the processor is used to read the computer program in the memory and execute the following operations: indicating, to an access network device, first indication information corresponding to a target information interaction, and/or obtaining the first indication information corresponding to the target information interaction determined by the access network device; where the target information interaction includes an information interaction of a target service or a target function or a target servicing, and the target information interaction is an information interaction between the first terminal device and a first logical functional entity; the first indication information is used to indicate second information of the target information interaction sent by the first terminal device to the access network device, and/or the first indication information is used to indicate third information of the target information interaction sent by the first logical functional entity to the first terminal device.

According to another aspect of the embodiments of the present disclosure, there is provided an apparatus for transmitting information including a memory, a transceiver, and a processor: the memory is used to store a computer program; the transceiver is used to send and receive data under the control of the processor; the processor is used to read the computer program in the memory and execute the following operations: sending first information to an access network device; where the first information is used to indicate initiating a target information interaction, the target information interaction includes an information interaction of a target service or a target function or a target servicing, the target information interaction is an information interaction between a first terminal device and the first logical functional entity, and the target information interaction corresponds to first indication information; where the first indication information is used to indicate second information of the target information interaction sent by the first terminal device to the first logical functional entity, and/or the first indication information is used to indicate third information of the target information interaction sent by the first logical functional entity to the first terminal device.

According to another aspect of the embodiments of the present disclosure, there is provided an apparatus for transmitting information including a memory, a transceiver, and a processor: the memory is used to store a computer program; the transceiver is used to send and receive data under the control of the processor; the processor is used to read the computer program in the memory and execute the following operations: indicating, to an access network device, second indication information corresponding to a target information interaction, and/or obtaining the second indication information corresponding to the target information interaction determined by the access network device; where the target information interaction includes an information interaction of a target service or a target function or a target servicing, and the target information interaction is an information interaction between the first terminal device and the first logical functional entity; the second indication information is used to indicate second information of the target information interaction sent by the first terminal device to the first logical functional entity, and/or the second indication information is used to indicate third information of the target information interaction sent by the first logical functional entity to the first terminal device.

According to another aspect of the embodiments of the present disclosure, there is provided an apparatus for transmitting information applied to an access network device, the apparatus including: a first receiving unit, configured to receive first information sent by a first terminal device or a first logical functional entity; where the first information is used to indicate initiating a target information interaction, the target information interaction includes an information interaction of a target service or a target function or a target servicing, and the target information interaction is an information interaction between the first terminal device and the first logical functional entity; and a first processing unit, configured to indicate, to the first terminal device, first indication information corresponding to the target information interaction, and/or obtain the first indication information corresponding to the target information interaction determined by the first terminal device; where the first indication information is used to indicate second information of the target information interaction sent by the first terminal device to the first logical functional entity, and/or the first indication information is used to indicate third information of the target information interaction sent by the first logical functional entity to the first terminal device.

According to another aspect of the embodiments of the present disclosure, there is provided an apparatus for transmitting information applied to a first terminal device, the apparatus including: a first sending unit, configured to send first information to an access network device; where the first information is used to indicate initiating a target information interaction, the target information interaction includes an information interaction of a target service or a target function or a target servicing, and the target information interaction is an information interaction between the first terminal device and a first logical functional entity; and a fourth processing unit, configured to indicate, to the access network device, first indication information corresponding to the target information interaction, and/or obtain the first indication information corresponding to the target information interaction determined by the access network device; where the first indication information is used to indicate second information of the target information interaction sent by the first terminal device to the access network device, and/or the first indication information is used to indicate third information of the target information interaction sent by the first logical functional entity to the first terminal device.

According to another aspect of the embodiments of the present disclosure, there is provided an apparatus for transmitting information applied to a first terminal device, the apparatus including: a sixth processing unit, configured to indicate, to an access network device, first indication information corresponding to a target information interaction, and/or obtain the first indication information corresponding to the target information interaction determined by the access network device; where the target information interaction includes an information interaction of a target service or a target function or a target servicing, and the target information interaction is an information interaction between the first terminal device and a first logical functional entity; the first indication information is used to indicate second information of the target information interaction sent by the first terminal device to the access network device, and/or the first indication information is used to indicate third information of the target information interaction sent by the first logical functional entity to the first terminal device.

According to another aspect of the present disclosure, there is provided an apparatus for transmitting information applied to a first logical functional entity, the apparatus including: a fifth sending unit, configured to send first information to an access network device; where the first information is used to indicate initiating a target information interaction, the target information interaction includes an information interaction of a target service or a target function or a target servicing, the target information interaction is an information interaction between a first terminal device and the first logical functional entity, and the target information interaction corresponds to first indication information; where the first indication information is used to indicate second information of the target information interaction sent by the first terminal device to the first logical functional entity, and/or the first indication information is used to indicate third information of the target information interaction sent by the first logical functional entity to the first terminal device.

According to another aspect of the embodiments of the present disclosure, there is provided an apparatus for transmitting information applied to a first logical functional entity, the apparatus including: a tenth processing unit, configured to indicate, to an access network device, second indication information corresponding to a target information interaction, and/or obtain the second indication information corresponding to the target information interaction determined by the access network device; where the target information interaction includes an information interaction of a target service or a target function or a target servicing, and the target information interaction is an information interaction between the first terminal device and the first logical functional entity; the second indication information is used to indicate second information of the target information interaction sent by the first terminal device to the first logical functional entity, and/or the second indication information is used to indicate third information of the target information interaction sent by the first logical functional entity to the first terminal device.

According to another aspect of the embodiments of the present disclosure, there is provided a processor-readable storage medium, the processor-readable storage medium storing a computer program, the computer program being used to cause the processor to execute the information transmission method according to any one of the above embodiments.

According to another aspect of the embodiments of the present disclosure, there is provided a computer program product including a computer program, the computer program implementing the information transmission method according to any one of the above embodiments when executed by a processor.

According to another aspect of the embodiments of the present disclosure, there is provided a computer program including computer program code, which when run on a computer, causes the computer to execute the information transmission method according to any one of the above embodiments.

The technical solution of the present disclosure receives first information sent by a first terminal device or a first logical functional entity, where the first information is used to indicate initiating a target information interaction, the target information interaction includes an information interaction of a target service or a target function or a target servicing, and the target information interaction is an information interaction between the first terminal device and the first logical functional entity; indicates, to the first terminal device, first indication information corresponding to the target information interaction, and/or obtains the first indication information corresponding to the target information interaction determined by the first terminal device, where the first indication information is used to indicate second information of the target information interaction sent by the first terminal device to the first logical functional entity, and/or the first indication information is used to indicate third information of the target information interaction sent by the first logical functional entity to the first terminal device. Thus, by allocating indication information for different information interactions, it is avoided to define special RRC information elements or RRC messages for each information interaction in the standard protocol to carry the messages, and the protocol design is flexible. Meanwhile, different first indication information can be allocated to information interactions of different network function instances of the same type of network function, so that the problem of the UE interacting with multiple network functions of the same type at the same time can be solved.

It should be understood that the content described in this section is not intended to identify key or important features of the embodiments of the present disclosure, nor is it intended to limit the scope of the present disclosure. Other features of the present disclosure will become easily understood through the following description.

### BRIEF DESCRIPTION OF THE DRAWINGS

The drawings are used to better understand the solution and do not constitute a limitation to the present disclosure. Among them:

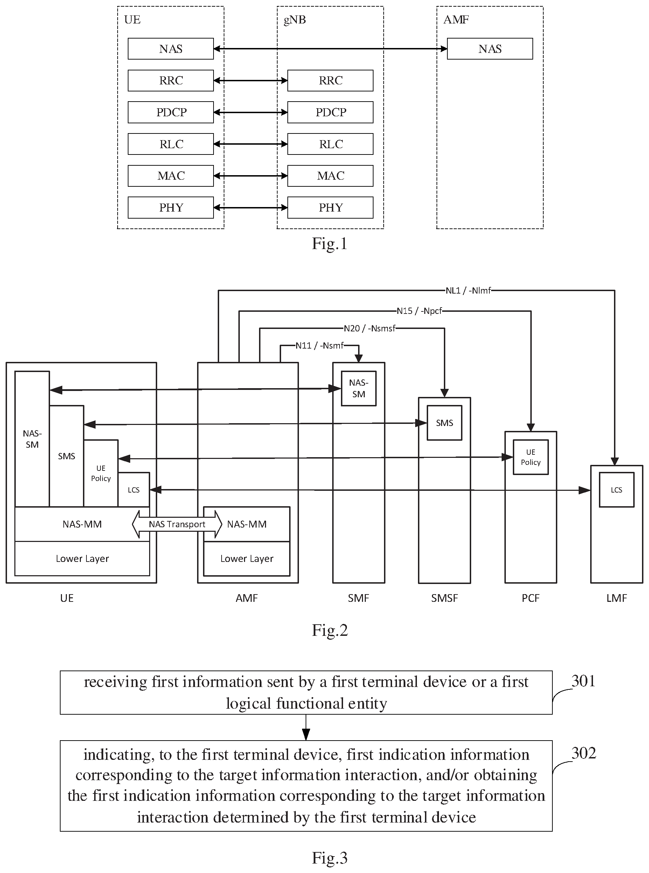

FIG. 2 is a schematic diagram of NAS transmission of SM, SMS, UE policy, and LCS in the related art;
FIG. 1 is a schematic diagram of a control plane protocol stack in the related art;
FIG. 3 is a schematic flowchart of a method for transmitting information provided by an embodiment of the present disclosure;
FIG. 4 is a schematic flowchart of another information transmission method provided by an embodiment of the present disclosure;
FIG. 5 is a schematic flowchart of another information transmission method provided by an embodiment of the present disclosure;
FIG. 6 is a schematic flowchart of another information transmission method provided by an embodiment of the present disclosure;
FIG. 7 is a schematic flowchart of another information transmission method provided by an embodiment of the present disclosure;
FIG. 8 is a schematic flowchart of another information transmission method provided by an embodiment of the present disclosure;
FIG. 9 is a schematic flowchart of another information transmission method provided by an embodiment of the present disclosure;
FIG. 10 is a schematic flowchart of another information transmission method provided by an embodiment of the present disclosure;
FIG. 11 is a schematic flowchart of another information transmission method provided by an embodiment of the present disclosure;
FIG. 12 is a schematic flowchart of another information transmission method provided by an embodiment of the present disclosure;
FIG. 13 is a schematic flowchart of another information transmission method provided by an embodiment of the present disclosure;
FIG. 14 is a schematic flowchart of another information transmission method provided by an embodiment of the present disclosure;
FIG. 15 is a schematic flowchart of another information transmission method provided by an embodiment of the present disclosure;
FIG. 16 is a schematic flowchart of another information transmission method provided by an embodiment of the present disclosure;
FIG. 17 is a schematic flowchart of another information transmission method provided by an embodiment of the present disclosure;
FIG. 18 is a schematic flowchart of a method for transmitting information in a scenario provided by an embodiment of the present disclosure;
FIG. 19 is a schematic diagram of a connection relationship between an access network device, a first terminal device, and a first logical functional entity in a scenario provided by an embodiment of the present disclosure;
FIG. 20 is a schematic diagram of a connection relationship between an access network device, a first terminal device, and a first logical functional entity in a scenario provided by an embodiment of the present disclosure;
FIG. 21 is a schematic structural diagram of an apparatus for transmitting information provided by an embodiment of the present disclosure;
FIG. 22 is a schematic structural diagram of another information transmission apparatus provided by an embodiment of the present disclosure;
FIG. 23 is a schematic structural diagram of another information transmission apparatus provided by an embodiment of the present disclosure;
FIG. 24 is a schematic structural diagram of another information transmission apparatus provided by an embodiment of the present disclosure;
FIG. 25 is a schematic structural diagram of another information transmission apparatus provided by an embodiment of the present disclosure;
FIG. 26 is a schematic structural diagram of another information transmission apparatus provided by an embodiment of the present disclosure;
FIG. 27 is a schematic structural diagram of another information transmission apparatus provided by an embodiment of the present disclosure;
FIG. 28 is a schematic structural diagram of another information transmission apparatus provided by an embodiment of the present disclosure;
FIG. 29 is a schematic structural diagram of another information transmission apparatus provided by an embodiment of the present disclosure; and
FIG. 30 is a schematic structural diagram of another information transmission apparatus provided by an embodiment of the present disclosure.

### DETAILED DESCRIPTION

The term "and/or" in the embodiments of the present disclosure describes the association relationship of associated objects, indicating that there may be three relationships, for example, A and/or B, which may indicate: A exists alone, A and B exist simultaneously, and B exists alone. The character "/" generally indicates that the associated objects are in an "or" relationship.

The term "plurality" in the embodiments of the present disclosure refers to two or more, and other quantifiers are similar thereto.

The technical solutions in the embodiments of the present disclosure will be clearly and completely described below with reference to the accompanying drawings in the embodiments of the present disclosure. Obviously, the described embodiments are only a part of the embodiments of the present disclosure, not all of them. Based on the embodiments in the present disclosure, all other embodiments obtained by those of ordinary skill in the art without creative work shall fall within the protection scope of the present disclosure.

In the related art, the signaling interacted between the UE and the network in 5G includes RRC messages between the UE and the RAN, and NAS (Non-Access Stratum) messages between the UE and the CN (Core Network). The NAS messages are transmitted over the air interface on top of the RRC, and the RRC messages define a plurality of messages that can carry NAS information. In a base station architecture where the gNB-CU (Centralized Unit) and the gNB-DU (Distributed Unit) are separated, the end point of the RRC protocol in the base station is the gNB-CU. In a base station architecture where the gNB-CU-CP (Control Plane) and the gNB-CU-UP (User Plane) are separated, the end point of the RRC protocol in the base station is the gNB-CU-CP.

FIG. 1 is a schematic diagram of a control plane protocol stack in the related art. As shown in FIG. 1, the control plane protocol stack mainly includes NAS, RRC, PDCP (Packet Data Convergence Protocol), RLC (Radio Link Control), MAC (Medium Access Control), and PHY (Physical Layer). Among them, the PDCP layer provides encryption and integrity protection functions, the functions performed by the control plane in the RLC layer and the MAC layer are the same as those in the user plane, the RRC layer protocol terminates at the gNB, and mainly provides functions such as broadcasting, paging, RRC connection management, RB (Radio Bearer) control, mobility management, UE measurement reporting and control, etc., and the NAS layer terminates at the AMF (Access and Mobility Management Function), which mainly implements mobility management, paging, security control and other functions of the 5GS (5G System).

Among them, there is a NAS-MM (Mobility Management) protocol between the UE and the AMF in the CN. There are a variety of protocols between the terminal and core network functions (excluding the AMF) that need to be transmitted through the NAS-MM protocol. These protocols include: session management signaling, short messages, UE policy, and LCS (Location Service). The NAS messages of these protocols are forwarded between the UE and the corresponding core network functions through the AMF. Optionally, the NAS transmission of SM (Session Management), SMS (Short Messaging Service), UE Policy, and LCS may be as shown in FIG. 2.

In addition, the 5G system architecture includes a set of NFs (Network Functions). An NF is a processing function in the system, which defines functional behaviors and interfaces. An NF can be implemented as a network element on dedicated hardware, or as a software instance running on dedicated hardware, or as a virtualized function instantiated on a platform, such as on cloud infrastructure. The 5G system architecture is defined as a service-based architecture, that is, a system architecture that implements system functions by a set of NFs providing services to other authorized NFs to access their services. An NF service is a function exposed by an NF (as an NF service producer) to other authorized NFs (as NF service consumers) through a service-based interface. An NF service can support one or more NF service operations. An NF can provide different NF services.

In summary, the control plane information transmitted between the UE and the RAN in 5G can only be identified by the RAN into two types: one is the information generated by the RRC protocol layer itself, and the other is the NAS information. The endpoints of the two types of information interactions are the base station and the AMF respectively. The method for distinguishing these two types of information is to define different RRC information elements or RRC messages in the standard protocol to carry these two types of information respectively, and distinguish these two types of information according to the RRC information elements and RRC messages.

However, in the future 6G, the RAN may be reconfigured into multiple wireless network functions, such as a radio access function, a positioning function, a sensing function, an AI function, etc. Each separated wireless network function can evolve independently, be developed independently, and be deployed independently. Moreover, in the future 6G, the NFs of the CN may interact directly with the RAN without being forwarded through the AMF. For example, the SMF (Session Management Function) and the LMF (Location Management Function) can interact directly with the RAN. That is, in the future 6G, there will be more types of NFs (NFs in the RAN and NFs in the CN) exchanging signaling with the UE, and the information exchanged between various NFs and the UE needs to be transmitted through the RAN. If the existing technology is still used to define special RRC information elements or RRC messages for each type of information in the standard protocol to carry the messages, the workload will be large, the protocol will be cumbersome and redundant, the readability will be poor, and there may be coupling between different functional protocols. In addition, the existing technology does not design for the case where the UE interacts with multiple network functions of the same service/function type at the same time.

Therefore, in order to solve the above problems, the embodiments of the present disclosure propose a method for transmitting information, apparatus, and storage medium to realize that when multiple NFs are supported to interact with the UE, and the UE interacts with multiple NFs of the same type at the same time, the RAN can forward the interacted information to the corresponding NFs, the NFs can identify the services corresponding to the interacted information, and the UE can deliver the interacted information to the corresponding processing entities in the UE.

The method and the apparatus are based on the same application concept. Since the principles of solving the problems by the method and the apparatus are similar, the implementation of the apparatus and the method can be referred to each other, and the repeated parts will not be described again.

The technical solutions provided by the embodiments of the present disclosure can be applied to various systems, especially future communication systems, such as 6G systems. For example, the applicable systems may be GSM (Global System for Mobile Communications), CDMA (Code Division Multiple Access) systems, WCDMA (Wide-band Code Division Multiple Access) systems, GPRS (General Packet Radio Service) systems, LTE (Long Term Evolution) systems, LTE FDD (Frequency Division Duplex) systems, LTE TDD (Time Division Duplex) systems, LTE-A (Long Term Evolution Advanced) systems, UMTS (Universal Mobile Telecommunication System), WiMAX (Worldwide Interoperability for Microwave Access) systems, 5G systems, etc. These various systems all include terminal devices and network devices. The system may also include a core network part, such as EPS (Evolved Packet System), 5GC (5G Core Network), etc.

The terminal device involved in the embodiments of the present disclosure may be a device that provides voice and/or data connectivity to a user, a handheld device with a wireless connection function, or other processing devices connected to a wireless modem, etc. In different systems, the name of the terminal device may also be different. For example, in the 5G system, the terminal device may be called a UE. A wireless terminal device may communicate with one or more CNs via the RAN. The wireless terminal device may be a mobile terminal device, such as a mobile phone (or called a "cellular" phone) and a computer with a mobile terminal device. For example, it may be a portable, pocket-sized, handheld, computer-built-in or vehicle-mounted mobile device that exchanges language and/or data with the wireless access network. For example, PCS (Personal Communication Service) phones, cordless phones, SIP (Session Initiated Protocol) phones, WLL (Wireless Local Loop) stations, PDA (Personal Digital Assistant) and other devices. The wireless terminal device may also be called a system, a subscriber unit, a subscriber station, a mobile station, a mobile, a remote station, an access point, a remote terminal device, an access terminal device, a user terminal device, a user agent, a user device, which is not limited in the embodiments of the present disclosure.

The network device involved in the embodiments of the present disclosure may be a base station, which may include multiple cells providing services to terminals. Depending on the specific application scenario, the base station may also be called an access point, or a device in the access network that communicates with wireless terminal devices through one or more sectors on the air interface, or other names. The network device can be used to exchange received air frames with IP (Internet Protocol) packets, acting as a router between the wireless terminal device and the rest of the access network; the rest of the access network may include an Internet Protocol (IP) communication network. The network device can also coordinate the attribute management of the air interface. For example, the network device involved in the embodiments of the present disclosure may be a BTS (Base Transceiver Station) in GSM or CDMA, a Node B (network device) in WCDMA, an eNB or e-NodeB (evolutional Node B) in the LTE system, a 5G base station (gNB) in the next generation system (next generation system), a HeNB (Home evolved Node B), a relay node (relay node), a femto base station (femto), a pico base station (pico), etc., which is not limited in the embodiments of the present disclosure. In some network structures, the network device may include a CU (Centralized Unit) node and a DU (Distributed Unit) node, and the CU and the DU may also be arranged separately geographically.

The information transmission method, apparatus, and storage medium of the embodiments of the present disclosure will be described below with reference to the accompanying drawings.

It should be noted that, in the embodiments of the present disclosure, when the senders and receivers of different information are the same, the different information may be sent in the same message or different messages. Each step in the embodiments of the present disclosure is not mandatory, and other steps may be included between the steps. The steps in the embodiments of the present disclosure are not limited to being executed in sequence, and some steps may be executed in parallel.

FIG. 3 is a schematic flowchart of a method for transmitting information provided by an embodiment of the present disclosure.

It should be noted that the information transmission method of the embodiment of the present disclosure is applied to an access network device. Optionally, the access network device may be any device in the RAN. As an example, the access network device may be any logical functional entity in the RAN, such as a network function, a logical node, a logical unit, etc.

Optionally, the logical functional entity may be implemented as a network element on dedicated hardware, or as a software instance running on dedicated hardware, or as a virtualized function instantiated on a platform, which is not limited in the embodiments of the present disclosure.

As shown in FIG. 3, the information transmission method may include steps: 301-302.

Step 301: receiving first information sent by a first terminal device or a first logical functional entity.

The first information is used to indicate initiating a target information interaction, the target information interaction includes an information interaction of a target service or a target function or a target servicing, and the target information interaction is an information interaction between the first terminal device and the first logical functional entity.

The first logical functional entity is a logical functional entity in a network or a second terminal device, and the logical functional entity in the network is a logical functional entity in an access network or a logical functional entity in a core network.

It should be noted that the second terminal device is a terminal device other than the first terminal device. When the first logical functional entity is the second terminal device, the target information interaction is an information interaction between the first terminal device and the second terminal device.

Optionally, when the first logical functional entity is the second terminal device, the first terminal device may perform a target information interaction with a logical functional entity in the second terminal device. At this time, the logical functional entity performing the target information interaction with the first terminal device is a logical functional entity in a terminal device other than the first terminal device.

Similarly, the first logical functional entity may be implemented as a network element on dedicated hardware, or as a software instance running on dedicated hardware, or as a virtualized function instantiated on a platform, which is not limited in the embodiments of the present disclosure.

For example, the first logical functional entity includes one or more of the following: a logical functional entity in an access network, a logical functional entity in a core network. Alternatively, the first logical functional entity includes one or more of the following: a logical functional entity of a control plane, a logical functional entity of a user plane.

For another example, the first logical functional entity may be at least one of the following: SMF, AMF, base station, base station centralized unit, base station user plane transmission unit, sensing function, location/positioning function, AI function, short message function, UE policy function, user plane function, UE data transmission function in the access network, UE data transmission management/control function in the access network, data management/control function in the access network, wireless connection management/control function, etc. The UE data includes one or more of the following: data between the UE and the data network, data between the UE and the logical functional entity in the network, data between the UE and another UE.

The target service or the target function or the target servicing includes at least one of the following: UE data transmission, session management, short message, UE policy, location or positioning, sensing, AI, service or function or servicing of the core network.

It should be noted that different services/functions/servicings may belong to the same type of service/function/servicing. For example, the UE data transmission of slice 1 and the UE data transmission of slice 2 both belong to the service/function/servicing of the UE data transmission type. For another example, the session management of slice 1 and the session management of slice 2 both belong to the service/function/servicing of the session management type. For another example, the session management of session 1 and the session management of session 2 both belong to the service/function/servicing of the session management type. For another example, the sensing providing capability/service quality 1 and the sensing providing capability/service quality 2 both belong to the service/function/servicing of the sensing type. For another example, the sensing of service 1 and the sensing of service 2 both belong to the service/function/servicing of the sensing type. And so on.

It should be noted that, in the embodiments of the present disclosure, the first terminal device may perform information interactions of multiple services/functions/servicings respectively at the same time. Optionally, the first terminal device may perform information interactions of multiple types of services/functions/servicings respectively at the same time, or the first terminal device may perform information interactions of multiple services/functions/servicings of the same type of service/function/servicing respectively at the same time. For example, the first terminal device may perform information interaction of session management and information interaction of UE policy respectively at the same time. For another example, the first terminal device may perform information interaction of session management of slice 1 and information interaction of session management of slice 2 respectively at the same time. For another example, the first terminal device may perform information interaction of sensing of service 1 and information interaction of sensing of service 2 respectively at the same time, and so on.

It should be noted that, in the embodiments of the present disclosure, there is a corresponding relationship between the target information interaction and the first logical functional entity. Optionally, one target information interaction may be in one-to-one correspondence with one first logical functional entity, that is, the first terminal device performs an information interaction of one target service or target function or target servicing with one first logical functional entity. For example, the information interaction of session management of slice 1 corresponds to SMF1. The information interaction of session management of slice 2 corresponds to SMF2. Optionally, multiple target information interactions may also correspond to one first logical functional entity, that is, the first terminal device performs information interactions of multiple target services or target functions or target servicings with one first logical functional entity. As an example, when one first logical functional entity includes multiple target services or target functions or target servicings, the first terminal device may perform information interactions of multiple target services or target functions or target servicings with the first logical functional entity. For example, the information interaction of session management of session 1 and the information interaction of session management of session 2 correspond to the same SMF. For another example, the information interaction of sensing of service 1 and the information interaction of sensing of service 2 correspond to the same sensing function.

In the embodiment of the present disclosure, the access network device may receive the first information sent by the first terminal device or the first logical functional entity for indicating initiating the target information interaction (the information interaction between the first terminal device and the first logical functional entity) to inform the access network device that the first terminal device or the first logical functional entity intends to initiate the target information interaction.

It should be noted that, in the embodiment of the present disclosure, if the first terminal device indicates that an information interaction of a target service or a target function or a target servicing (target information interaction) needs to be performed, that is, the access network device receives the first information sent by the first terminal device, at this time, since the first terminal device does not indicate the first logical functional entity performing the target information interaction with the first terminal device, the access network device may determine the first logical functional entity corresponding to the target information interaction.

As a possible implementation manner, the access network device may determine the first logical functional entity performing the target information interaction with the first terminal device according to the target service or the target function or the target servicing, where the first logical functional entity supports the target service or the target function or the target servicing. Alternatively, the first logical functional entity performing the target information interaction with the first terminal device may be determined according to the target logical functional entity type of the target information interaction, where the first logical functional entity belongs to the target logical functional entity type. Alternatively, the first logical functional entity performing the target information interaction with the first terminal device determined by the second logical functional entity may be received.

Optionally, the access network device may indicate the target service or the target function or the target servicing to a logical functional entity (second logical functional entity), and the logical functional entity indicates the first logical functional entity performing the target information interaction with the first terminal device to the access network device. For example, for the target service or the target function or the target servicing included in the core network function, the access network device may indicate the target service or the target function or the target servicing to a logical functional entity in the core network (for example, AMF or NRF), so that the logical functional entity in the core network indicates the first logical functional entity performing the target information interaction with the first terminal device to the access network device.

When the access network device indicates the target service or the target function or the target servicing, the access network device may indicate one or more of the following: the service/function/servicing/logical functional entity type of the target service or the target function or the target servicing, the relevant parameter information of the target service or the target function or the target servicing. When the access network device indicates the service/function/servicing type of the target service or the target function or the target servicing, the first logical functional entity includes the service/function/servicing of the service/function/servicing type. When the access network device indicates the logical functional entity type of the target service or the target function or the target servicing, the first logical functional entity belongs to the logical functional entity type.

It should be noted that, when the first terminal device indicates that an information interaction of a target service or a target function or a target servicing (target information interaction) needs to be performed, the first terminal device may indicate one or more of the following: the service/function/servicing/logical functional entity type of the target service or the target function or the target servicing, the relevant parameter information of the target service or the target function or the target servicing. When the first terminal device indicates the service/function/servicing type of the target service or the target function or the target servicing, the first logical functional entity includes the service/function/servicing of the service/function/servicing type. When the first terminal device indicates the logical functional entity type of the target service or the target function or the target servicing, the first logical functional entity belongs to the logical functional entity type.

It should be noted that, in the embodiment of the present disclosure, if the first logical functional entity indicates that an information interaction of a target service or a target function or a target servicing (target information interaction) needs to be performed, that is, the access network device receives the first information sent by the first logical functional entity, the first logical functional entity may indicate to the access network device that the first terminal device performing the target information interaction with the first logical functional entity is the first terminal device, so the access network device may determine that the target information interaction is an information interaction between the first terminal device and the first logical functional entity.

When the first terminal device indicates that an information interaction of a target service or a target function or a target servicing (target information interaction) needs to be performed, optionally, the first terminal device may also send relevant service information of the information interaction of the target service or the target function or the target servicing to the access network device. The first terminal device may indicate initiating the target information interaction to the access network device and send the relevant service information to the access network device in one message or different messages.

Similarly, when the first logical functional entity indicates that an information interaction of a target service or a target function or a target servicing (target information interaction) needs to be performed, optionally, the first logical functional entity may also send relevant service information of the information interaction of the target service or the target function or the target servicing to the access network device. The first logical functional entity may indicate initiating the target information interaction to the access network device and send the relevant service information to the access network device in one message or different messages.

Step 302: indicating, to the first terminal device, first indication information corresponding to the target information interaction, and/or obtaining the first indication information corresponding to the target information interaction determined by the first terminal device.

The first indication information is used to indicate second information of the target information interaction sent by the first terminal device to the first logical functional entity, and/or the first indication information is used to indicate third information of the target information interaction sent by the first logical functional entity to the first terminal device.

It can also be understood that the first indication information is used to indicate relevant service information of the target information interaction between the first terminal device and the access network device.

In the embodiment of the present disclosure, the access network device may indicate, to the first terminal device, the first indication information corresponding to the target information interaction, and/or obtain the first indication information corresponding to the target information interaction determined by the first terminal device. That is, the first indication information may be determined solely by the access network device, or solely by the first terminal device, or jointly determined by the access network device and the first terminal device, which is not limited in the embodiments of the present disclosure.

Optionally, the first indication information may be one of the following: number, identifier, index, radio bearer, logical channel, transport channel, physical channel.

It should be noted that, in the embodiments of the present disclosure, there is a corresponding relationship between the target information interaction and the first indication information. Optionally, one target information interaction may be in one-to-one correspondence with one first indication information. For example, the first indication information 1 corresponds to the target information interaction 1. The first indication information 2 corresponds to the target information interaction 2. Optionally, multiple target information interactions may also correspond to one first indication information. For example, both the target information interaction 1 and the target information interaction 2 may correspond to the first indication information 1.

Assuming that the target information interaction 1 (the information interaction between the first terminal device and the first logical functional entity 1) already corresponds to the first indication information 1, if the target information interaction 2 is an information interaction between the first logical functional entity 1 and the first terminal device or another terminal device or another logical functional entity, since the first logical functional entity 1 already corresponds to the first indication information 1, the target information interaction 2 may correspond to the first indication information 2 different from the first indication information 1 or the first indication information 1, which is not limited in the embodiments of the present disclosure. It can also be understood that the access network determines the first indication information corresponding to the target information interaction according to the first indication information corresponding to the first logical functional entity. The first indication information corresponding to the target information interaction may be the first indication information corresponding to the first logical functional entity.

As a possible implementation manner, the first indication information includes one indication information, so that the access network device may determine the first indication information corresponding to the target information interaction and indicate the first indication information corresponding to the target information interaction to the first terminal device. Alternatively, the first indication information corresponding to the target information interaction indicated by the first terminal device is received (at this time, the first indication information is determined solely by the first terminal device.

As another possible implementation manner, the first indication information includes first type indication information and first instance indication information, so that the access network device may perform at least one of the following operations:
determine the first type indication information in the first indication information corresponding to the target information interaction, and indicate the first type indication information corresponding to the target information interaction to the first terminal device; or,
determine the first instance indication information in the first indication information corresponding to the target information interaction, and indicate the first instance indication information corresponding to the target information interaction to the first terminal device; or,
determine the first type indication information and the first instance indication information in the first indication information corresponding to the target information interaction, and indicate the first type indication information and the first instance indication information corresponding to the target information interaction to the first terminal device; or,
receive the first type indication information in the first indication information corresponding to the target information interaction indicated by the first terminal device; or,
receive the first instance indication information in the first indication information corresponding to the target information interaction indicated by the first terminal device; or,
receive the first type indication information and the first instance indication information in the first indication information corresponding to the target information interaction indicated by the first terminal device.

Optionally, the first indication information may correspond to one or more of the following: information interaction of one or more services/functions/servicings, information interaction of one logical functional entity. Moreover, the first indication information may be per UE.

In summary, the first indication information may have the following two ways:
Way 1: The first indication information includes one indication information.

The first indication information 1 corresponds to the information interaction of the service/function/servicing/logical functional entity 1, and the first indication information 2 corresponds to the information interaction of the service/function/servicing/logical functional entity 2. The service/function/servicing/logical functional entity 1 and the service/function/servicing/logical functional entity 2 may be different types of services/functions/servicings/logical functional entities or the same type of services/functions/servicings/logical functional entities, which is not limited in the embodiments of the present disclosure.

For example, the first indication information 1 corresponds to the information interaction of session management of slice 1. The first indication information 2 corresponds to the information interaction of session management of slice 2. The first indication information 3 corresponds to the information interaction of sensing of service 1. The first indication information 4 corresponds to the information interaction of sensing of service 2.

For another example, the first indication information 1 corresponds to the information interaction of the logical functional entity 1, and the logical functional entity 1 includes session management of slice 1. The first indication information 2 corresponds to the information interaction of the logical functional entity 2, and the logical functional entity 2 includes session management of slice 2. The first indication information 3 corresponds to the information interaction of the logical functional entity 3, and the logical functional entity 3 includes sensing of service 1. The first indication information 4 corresponds to the information interaction of the logical functional entity 4, and the logical functional entity 4 includes sensing of service 2.

Note: It is not excluded that multiple first indication information correspond to one logical functional entity.

Way 2: The first indication information includes first type indication information and first instance indication information.

The first type indication information indicates a type of a service/function/servicing/logical functional entity. The first instance indication information indicates one or more of the following: information interaction of one or more services/functions/servicings in one service/function/servicing type, information interaction of one logical functional entity in one logical functional entity type.

The first type indication information 1 corresponds to the information interaction of the service/function/servicing/logical functional entity type 1, and the first type indication information 2 corresponds to the information interaction of the service/function/servicing/logical functional entity type 2. The first instance indication information 1 corresponds to the information interaction of the service/function/servicing/logical functional entity 1 of a given service/function/servicing/logical functional entity type, and the first instance indication information 2 corresponds to the information interaction of the service/function/servicing/logical functional entity 2 of the same given service/function/servicing/logical functional entity type.

For example, the first indication information 1 corresponds to the information interaction of session management of slice 1, and the first indication information 1 is a combination of the first type indication information 1 and the first instance indication information 1 (the first instance indication information 1 under the first type indication information 1). The first indication information 2 corresponds to the information interaction of session management of slice 2, and the first indication information 2 is a combination of the first type indication information 1 and the first instance indication information 2 (the first instance indication information 2 under the first type indication information 1). The first indication information 3 corresponds to the information interaction of sensing of service 1, and the first indication information 3 is a combination of the first type indication information 2 and the first instance indication information 1 (the first instance indication information 1 under the first type indication information 2). The first indication information 4 corresponds to the information interaction of sensing of service 2, and the first indication information 4 is a combination of the first type indication information 2 and the first instance indication information 2 (the first instance indication information 2 under the first type indication information 2).

For another example, the first indication information 1 corresponds to the information interaction of the logical functional entity 1, the logical functional entity 1 includes session management of slice 1, and the first indication information 1 is a combination of the first type indication information 1 and the first instance indication information 1 (the first instance indication information 1 under the first type indication information 1). The first indication information 2 corresponds to the information interaction of the logical functional entity 1, the logical functional entity 1 includes session management of slice 2, and the first indication information 2 is a combination of the first type indication information 1 and the first instance indication information 2 (the first instance indication information 2 under the first type indication information 1). The first indication information 3 corresponds to the information interaction of the logical functional entity 1, the logical functional entity 1 includes sensing of service 1, and the first indication information 3 is a combination of the first type indication information 2 and the first instance indication information 1 (the first instance indication information 1 under the first type indication information 2). The first indication information 4 corresponds to the information interaction of the logical functional entity 1, the logical functional entity 1 includes sensing of service 2, and the first indication information 4 is a combination of the first type indication information 2 and the first instance indication information 2 (the first instance indication information 2 under the first type indication information 2).

Service/function/servicing types, for example, session management type, short message type, UE policy type, location/positioning type, sensing type, AI type, core network service/function/servicing type.

Logical functional entity types, for example, session management function type, short message function type, UE policy function type, location/positioning function type, sensing function type, AI function type, core network logical functional entity type.

The corresponding relationship between the first type indication information and the service/function/servicing/logical functional entity type indicated thereby may be defined in a standard protocol. The first type indication information may be one of the following: number, identifier, index, radio bearer, logical channel, transport channel, physical channel, message name/type, information element.

The first instance indication information may be one of the following: number, identifier, index, radio bearer, logical channel, transport channel, physical channel.

Note: It is not excluded that multiple first instance indication information correspond to one logical functional entity.

Optionally, for the above two ways of the first indication information, when the access network device determines the first indication information, the following situations may exist:
For Way 1, the access network device needs to allocate/configure the first indication information corresponding to the target information interaction. For Way 2, one implementation manner is that the access network device allocates/configures the first instance indication information in the first indication information corresponding to the target information interaction. The first type indication information may be predefined or preconfigured. Another implementation manner is that the access network device separately allocates/configures the first type indication information and the second instance indication information in the first indication information corresponding to the target information interaction.

Optionally, for the above two ways of the first indication information, when the access network device indicates the first indication information to the first terminal device, the following situations may exist:
For Way 1, the access network device indicates the first indication information corresponding to the target information interaction to the first terminal device. For Way 2, one implementation manner is that the access network device indicates the first instance indication information in the first indication information corresponding to the target information interaction to the first terminal device. Another implementation manner is that the access network device indicates the first type indication information and the first instance indication information in the first indication information corresponding to the target information interaction to the first terminal device. Another implementation manner is that the access network device indicates the first type indication information in the first indication information to the first terminal device. Another implementation manner is that the access network device indicates to the first terminal device to allocate/configure the first type indication information and the first instance indication information in the first indication information corresponding to the target information interaction.

Similarly, for the above two ways of the first indication information, when the first terminal device determines the first indication information, the following situations may exist:
For Way 1, the first terminal device needs to allocate/configure the first indication information corresponding to the target information interaction. For Way 2, one implementation manner is that the first terminal device allocates/configures the first instance indication information in the first indication information corresponding to the target information interaction. The first type indication information may be predefined or preconfigured. Another implementation manner is that the first terminal device separately allocates/configures the first type indication information and the second instance indication information in the first indication information corresponding to the target information interaction.

Optionally, for the above two ways of the first indication information, when the first terminal device indicates the first indication information to the access network device, the following situations may exist:
For Way 1, the first terminal device indicates the first indication information corresponding to the target information interaction to the access network device. For Way 2, one implementation manner is that the first terminal device indicates the first instance indication information in the first indication information corresponding to the target information interaction to the access network device. Another implementation manner is that the first terminal device indicates the first type indication information and the first instance indication information in the first indication information corresponding to the target information interaction to the access network device. Another implementation manner is that the first terminal device indicates the first type indication information in the first indication information to the access network device. Another implementation manner is that the first terminal device indicates to the access network device to allocate/configure the first type indication information and the first instance indication information in the first indication information corresponding to the target information interaction.

Optionally, according to different subjects that allocate/configure the first indication information, there may be the following different ways to determine the first indication information:
Way 1: The access network device allocates/configures the first indication information corresponding to the target information interaction.

The access network device allocates/configures the first indication information corresponding to the target information interaction, or the first instance indication information in the first indication information corresponding to the target information interaction, or the first type indication information and the first instance indication information in the first indication information corresponding to the target information interaction.

Way 2: The first terminal device allocates/configures the first indication information corresponding to the target information interaction.

The first terminal device allocates/configures the first indication information corresponding to the target information interaction, or the first instance indication information in the first indication information corresponding to the target information interaction, or the first type indication information and the first instance indication information in the first indication information corresponding to the target information interaction.

The first terminal device sends the allocated/configured first indication information corresponding to the target information interaction, or the first instance indication information in the first indication information corresponding to the target information interaction, or the first type indication information and the first instance indication information in the first indication information corresponding to the target information interaction to the access network device.

Way 3: The access network device and the first terminal device allocate/configure the first indication information corresponding to the target information interaction.

The access network device allocates/configures the first type indication information in the first indication information corresponding to the target information interaction, the first terminal device allocates/configures the first instance indication information in the first indication information corresponding to the target information interaction, and the first terminal device sends the allocated/configured first instance indication information in the first indication information corresponding to the target information interaction to the access network device.

Alternatively, the access network device allocates/configures the instance indication information in the first indication information corresponding to the target information interaction, the first terminal device allocates/configures the first type indication information in the first indication information corresponding to the target information interaction, and the first terminal device sends the allocated/configured first type indication information in the first indication information corresponding to the target information interaction to the access network device.

It should be noted that, in the embodiment of the present disclosure, the access network device indicating the first indication information corresponding to the target information interaction to the first terminal device may be explicit indication or implicit indication. Explicit indication: for example, the first terminal device indicates to the access network device that an information interaction of a target service or a target function or a target servicing (target information interaction) needs to be performed, and the access network device indicates the first indication information corresponding to the target information interaction to the first terminal device. Implicit indication: for example, the access network device sends third information from the first logical functional entity to the first terminal device and indicates that the third information corresponds to the first indication information, and the third information belongs to the information interaction of the target service or the target function or the target servicing (target information interaction), then the target information interaction corresponds to the first indication information.

The first terminal device indicating initiating the target information interaction to the access network device and indicating the first indication information corresponding to the target information interaction to the access network device may be indicated to the access network device in one message or different messages. In the case of indicating to the access network device in one message, the message may further include relevant service information of the target information interaction.

When the first terminal device indicates that an information interaction of a target service or a target function or a target servicing (target information interaction) needs to be performed and sends relevant service information of the information interaction of the target service or the target function or the target servicing to the access network device, the access network device sends the relevant service information to the first logical functional entity.

When the first logical functional entity indicates that an information interaction of a target service or a target function or a target servicing (target information interaction) needs to be performed and sends relevant service information of the information interaction of the target service or the target function or the target servicing to the access network device, the access network device sends the relevant service information to the first terminal device. The access network device sending the relevant service information to the first terminal device and indicating the first indication information corresponding to the target information interaction to the first terminal device may be sent and indicated to the first terminal device in one message or different messages.

In the embodiment of the present disclosure, since an information interaction of a service/function/servicing between the UE and the network function is allocated a first indication information, the access network device can associate the first indication information with the network function corresponding to the service/function/servicing, thereby being able to forward the relevant service information of the information interaction of the service/function/servicing to the corresponding network function. And the UE can also associate the first indication information with the information interaction of the service/function/servicing, thereby being able to identify and process the relevant service information of the information interaction of the service/function/servicing. In addition, since the first indication information can correspond to different network function instances of the same type of network function, the problem of the UE interacting with multiple network functions of the same type at the same time can be solved.

The information transmission method provided by the embodiment of the present disclosure, the access network device receives first information sent by a first terminal device or a first logical functional entity, where the first information is used to indicate initiating a target information interaction, thereby indicating, to the first terminal device, first indication information corresponding to the target information interaction, and/or obtaining the first indication information corresponding to the target information interaction determined by the first terminal device, where the first indication information is used to indicate second information of the target information interaction sent by the first terminal device to the first logical functional entity, and/or the first indication information is used to indicate third information of the target information interaction sent by the first logical functional entity to the first terminal device. Thus, by allocating indication information for different information interactions, it is avoided to define special RRC information elements or RRC messages for each information interaction in the standard protocol to carry the messages, and the protocol design is flexible. Meanwhile, different first indication information can be allocated to information interactions of different network function instances of the same type of network function, so that the problem of the UE interacting with multiple network functions of the same type at the same time can be solved.

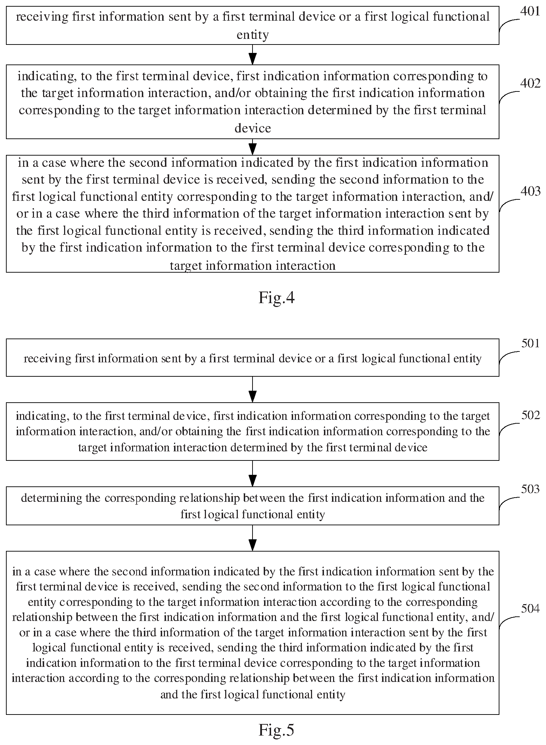

To clearly illustrate the previous embodiment, the embodiment of the present disclosure provides another information transmission method. FIG. 4 is a schematic flowchart of another information transmission method provided by the embodiment of the present disclosure.

Similarly, the information transmission method of the embodiment of the present disclosure is applied to an access network device. Optionally, the access network device may be any device in the RAN. As an example, the access network device may be any logical functional entity in the RAN, such as a network function, a logical node, a logical unit, etc.

Similarly, the logical functional entity may be implemented as a network element on dedicated hardware, or as a software instance running on dedicated hardware, or as a virtualized function instantiated on a platform, which is not limited in the embodiments of the present disclosure.

As shown in FIG. 4, the information transmission method may include steps: 401-403.

Step 401: receiving first information sent by a first terminal device or a first logical functional entity.

Step 402: indicating, to the first terminal device, first indication information corresponding to the target information interaction, and/or obtaining the first indication information corresponding to the target information interaction determined by the first terminal device.

It should be noted that the execution process of steps 401-402 may refer to the execution process of steps 301-302 in the above embodiment, and the principle is the same, which will not be repeated here.

Step 403: in a case where the second information indicated by the first indication information sent by the first terminal device is received, sending the second information to the first logical functional entity corresponding to the target information interaction, and/or in a case where the third information of the target information interaction sent by the first logical functional entity is received, sending the third information indicated by the first indication information to the first terminal device corresponding to the target information interaction.

It should be noted that the access network device in the embodiment of the present disclosure includes a routing function for forwarding relevant service information of the target information interaction to the corresponding first terminal device or first logical functional entity. The first terminal device includes a routing marking function for indicating the first indication information corresponding to the target information interaction to the access network device. For uplink interaction information, the first terminal device generates relevant service information (second information) of the target information interaction, the first terminal device determines the first indication information corresponding to the target information interaction, and sends the second information indicated by the first indication information to the access network device (indicating that the second information corresponds to the first indication information). After receiving the second information indicated by the first indication information, the access network device sends the second information to the first logical functional entity corresponding to the target information interaction. The first logical functional entity processes the relevant service information (second information) of the target information interaction. For downlink interaction information, the first logical functional entity generates relevant service information (third information) of the information interaction of the target service or the target function or the target servicing, and sends the third information to the access network device. After receiving the third information, the access network device sends the third information indicated by the first indication information to the first terminal device (indicating that the third information corresponds to the first indication information). After receiving the third information indicated by the first indication information, the first terminal device determines that the third information corresponds to the target information interaction according to the target information interaction corresponding to the first indication information. The first terminal device processes the relevant service information

(third information) of the target information interaction. Optionally, the first terminal device may deliver the third information to the logical functional entity for processing the target information interaction. The logical functional entity in the first terminal device for processing the target information interaction processes the third information.

As a possible implementation manner, in a case where the second information indicated by the first indication information sent by the first terminal device is received, the access network device may send the second information to the first logical functional entity corresponding to the target information interaction according to the corresponding relationship between the first indication information and the target information interaction, and/or in a case where the third information of the target information interaction sent by the first logical functional entity is received, the access network device may send the third information indicated by the first indication information to the first terminal device corresponding to the target information interaction according to the corresponding relationship between the first indication information and the target information interaction.

Specifically, in a case where the second information indicated by the first indication information sent by the first terminal device is received, the access network device may determine the target information interaction corresponding to the first indication information according to the corresponding relationship between the first indication information and the target information interaction, and send the second information to the first logical functional entity corresponding to the target information interaction. In a case where the third information of the target information interaction sent by the first logical functional entity is received, the access network device may determine the first indication information corresponding to the target information interaction according to the corresponding relationship between the first indication information and the target information interaction, and send the third information indicated by the first indication information to the first terminal device corresponding to the target information interaction.

Optionally, before the access network device sends the second information to the first logical functional entity corresponding to the target information interaction, the access network device may further determine the first logical functional entity corresponding to the target information interaction according to the corresponding relationship between the first indication information and the target information interaction and the corresponding relationship between the target information interaction and the first logical functional entity.

It should be noted that, in the embodiment of the present disclosure, after the access network device determines the first logical functional entity corresponding to the target information interaction, when the first terminal device sends the relevant service information (second information) of the information interaction of the target service or the target function or the target servicing to the access network device, the access network device forwards the second information to the first logical functional entity.

It should be noted that, in the embodiment of the present disclosure, if the first logical functional entity indicates that an information interaction of a target service or a target function or a target servicing (target information interaction) needs to be performed, that is, the access network device receives the first information sent by the first logical functional entity, the first logical functional entity may indicate to the access network device that the first terminal device performing the target information interaction with the first logical functional entity is the first terminal device, so the access network device may directly send the third information indicated by the first indication information to the first terminal device corresponding to the target information interaction when receiving the third information of the target information interaction sent by the first logical functional entity. Optionally, the first logical functional entity may indicate that the target information interaction is with the first terminal device when sending the third information of the target information interaction to the access network device.

In summary, when the first terminal device indicates that an information interaction of a target service or a target function or a target servicing (target information interaction) needs to be performed and sends relevant service information (second information) of the information interaction of the target service or the target function or the target servicing to the access network device, the access network device may forward the second information to the first logical functional entity after determining the first logical functional entity corresponding to the target information interaction.

When the first logical functional entity indicates that an information interaction of a target service or a target function or a target servicing (target information interaction) needs to be performed and sends relevant service information (third information) of the information interaction of the target service or the target function or the target servicing to the access network device, the access network device may send the third information indicated by the first indication information to the first terminal device corresponding to the target information interaction (the first logical functional entity will indicate to the access network device that the target information interaction is with the first terminal device when indicating to the access network device that the target information interaction needs to be performed) after determining the first indication information corresponding to the target information interaction.

The information transmission method provided by the embodiment of the present disclosure, the access network device may send the second information to the first logical functional entity corresponding to the target information interaction in a case where the second information indicated by the first indication information sent by the first terminal device is received, and/or send the third information indicated by the first indication information to the first terminal device corresponding to the target information interaction in a case where the third information of the target information interaction sent by the first logical functional entity is received. Thus, the access network device can forward the relevant service information of the target information interaction to the corresponding first terminal device or first logical functional entity based on the first indication information.

In the present disclosure, the access network device may further determine the corresponding relationship between the first indication information and the first logical functional entity, which will be described below with reference to FIG. 5.

FIG. 5 is a schematic flowchart of another information transmission method provided by an embodiment of the present disclosure.

Similarly, the information transmission method of the embodiment of the present disclosure is applied to an access network device. Optionally, the access network device may be any device in the RAN. As an example, the access network device may be any logical functional entity in the RAN, such as a network function, a logical node, a logical unit, etc.

Similarly, the logical functional entity may be implemented as a network element on dedicated hardware, or as a software instance running on dedicated hardware, or as a virtualized function instantiated on a platform, which is not limited in the embodiments of the present disclosure.

As shown in FIG. 5, the information transmission method may include steps: 501-504.

Step 501: receiving first information sent by a first terminal device or a first logical functional entity.

Step 502: indicating, to the first terminal device, first indication information corresponding to the target information interaction, and/or obtaining the first indication information corresponding to the target information interaction determined by the first terminal device.

It should be noted that the execution process of steps 501-502 may refer to the execution process of steps 301-302 in the above embodiment, and the principle is the same, which will not be repeated here.

Step 503: determining the corresponding relationship between the first indication information and the first logical functional entity.

In the embodiment of the present disclosure, the access network device may associate the first indication information corresponding to the target information interaction with the first logical functional entity corresponding to the target information interaction. Optionally, it may be directly associated or indirectly associated, which is not limited in the embodiments of the present disclosure. Indirect association: for example, the first indication information is associated with the target information interaction, and the target information interaction is associated with the first logical functional entity. Correspondingly, the access network device determines the corresponding relationship between the first indication information and the target information interaction, and the corresponding relationship between the target information interaction and the first logical functional entity.

Optionally, the access network device may store/apply the corresponding relationship between the first indication information and the first logical functional entity. Alternatively, the access network device may store/apply the corresponding relationship between the first indication information and the target information interaction, and the corresponding relationship between the target information interaction and the first logical functional entity.

Optionally, one first logical functional entity may be in one-to-one correspondence with one first indication information. For example, the first logical functional entity 1 corresponds to the first indication information 1. The first logical functional entity 2 corresponds to the first indication information 2. Optionally, one first logical functional entity may also correspond to multiple first indication information. For example, when information interactions of multiple services/functions/servicings correspond to one first logical functional entity, and an information interaction of one service/function/servicing corresponds to one first indication information, one first logical functional entity corresponds to multiple first indication information. For example, the first logical functional entity 1 corresponds to the first indication information 1 and the first indication information 2.

Step 504: in a case where the second information indicated by the first indication information sent by the first terminal device is received, sending the second information to the first logical functional entity corresponding to the target information interaction according to the corresponding relationship between the first indication information and the first logical functional entity, and/or in a case where the third information of the target information interaction sent by the first logical functional entity is received, sending the third information indicated by the first indication information to the first terminal device corresponding to the target information interaction according to the corresponding relationship between the first indication information and the first logical functional entity.

For uplink interaction information, the first terminal device generates relevant service information (second information) of the target information interaction, the first terminal device determines the first indication information corresponding to the target information interaction, and sends the second information indicated by the first indication information to the access network device (indicating that the second information corresponds to the first indication information). After receiving the second information indicated by the first indication information, the access network device determines the first logical functional entity corresponding to the first indication information according to the corresponding relationship between the first indication information and the first logical functional entity, and sends the second information to the first logical functional entity. The first logical functional entity processes the relevant service information (second information) of the target information interaction. For downlink interaction information, the first logical functional entity generates relevant service information (third information) of the information interaction of the target service or the target function or the target servicing, and sends the third information to the access network device. After receiving the third information, the access network device determines the first indication information corresponding to the first logical functional entity according to the corresponding relationship between the first indication information and the first logical functional entity, and sends the third information indicated by the first indication information to the first terminal device (indicating that the third information corresponds to the first indication information). After receiving the third information indicated by the first indication information, the first terminal device determines that the third information corresponds to the target information interaction according to the target information interaction corresponding to the first indication information. The first terminal device processes the relevant service information (third information) of the target information interaction. Optionally, the first terminal device may deliver the third information to the logical functional entity for processing the target information interaction. The logical functional entity in the first terminal device for processing the target information interaction processes the third information.

The access network device determining the first logical functional entity corresponding to the first indication information according to the corresponding relationship between the first indication information and the first logical functional entity may be direct determination or indirect determination. Indirect determination: for example, the access network device determines the target information interaction corresponding to the first indication information according to the corresponding relationship between the first indication information and the target information interaction, and then determines the first logical functional entity corresponding to the target information interaction according to the corresponding relationship between the target information interaction and the first logical functional entity. The access network device determining the first indication information corresponding to the first logical functional entity according to the corresponding relationship between the first indication information and the first logical functional entity may be direct determination or indirect determination. Indirect determination: for example, the access network device determines the target information interaction corresponding to the first logical functional entity according to the corresponding relationship between the first logical functional entity and the target information interaction, and then determines the first indication information corresponding to the target information interaction according to the corresponding relationship between the target information interaction and the first indication information.

The information transmission method provided by the embodiment of the present disclosure, the access network device determines the corresponding relationship between the first indication information and the first logical functional entity, thereby sending the second information to the first logical functional entity corresponding to the target information interaction according to the corresponding relationship between the first indication information and the first logical functional entity in a case where the second information indicated by the first indication information sent by the first terminal device is received, and/or sending the third information indicated by the first indication information to the first terminal device corresponding to the target information interaction according to the corresponding relationship between the first indication information and the first logical functional entity in a case where the third information of the target information interaction sent by the first logical functional entity is received. Thus, the access network device can forward the relevant service information of the target information interaction to the corresponding first terminal device or first logical functional entity based on the corresponding relationship between the first indication information and the first logical functional entity.

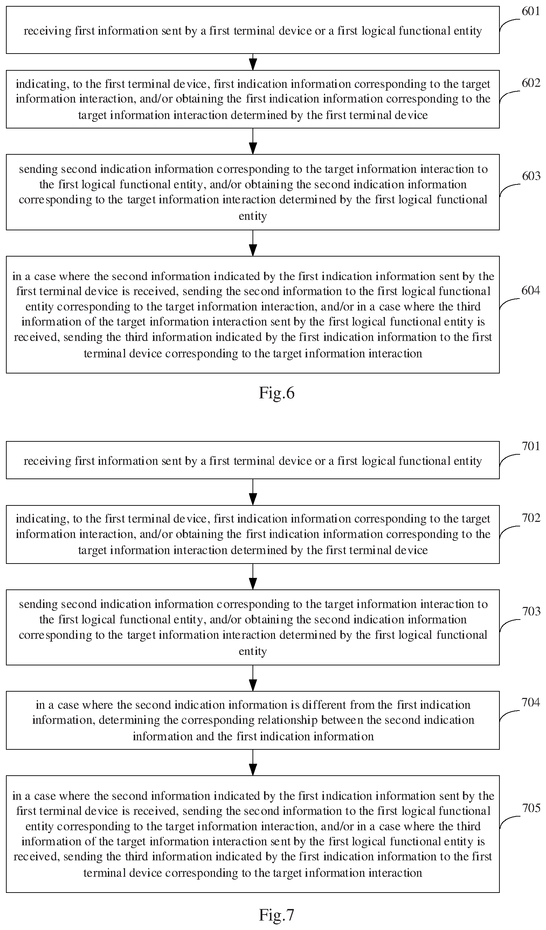

In the present disclosure, a second indication information may also be allocated for the target information interaction, which will be described below with reference to FIG. 6.

FIG. 6 is a schematic flowchart of another information transmission method provided by an embodiment of the present disclosure.

Similarly, the information transmission method of the embodiment of the present disclosure is applied to an access network device. Optionally, the access network device may be any device in the RAN. As an example, the access network device may be any logical functional entity in the RAN, such as a network function, a logical node, a logical unit, etc.

Similarly, the logical functional entity may be implemented as a network element on dedicated hardware, or as a software instance running on dedicated hardware, or as a virtualized function instantiated on a platform, which is not limited in the embodiments of the present disclosure.

As shown in FIG. 6, the information transmission method may include steps: 601-604.

Step 601: receiving first information sent by a first terminal device or a first logical functional entity.

Step 602: indicating, to the first terminal device, first indication information corresponding to the target information interaction, and/or obtaining the first indication information corresponding to the target information interaction determined by the first terminal device.

It should be noted that the execution process of steps 601-602 may refer to the execution process of steps 301-302 in the above embodiment, and the principle is the same, which will not be repeated here.

Step 603: sending second indication information corresponding to the target information interaction to the first logical functional entity, and/or obtaining the second indication information corresponding to the target information interaction determined by the first logical functional entity.

The second indication information is used to indicate second information of the target information interaction sent by the first terminal device to the first logical functional entity, and/or the second indication information is used to indicate third information of the target information interaction sent by the first logical functional entity to the first terminal device.

It can also be understood that the second indication information is used to indicate relevant service information of the target information interaction between the first logical functional entity and the access network device.

In the embodiment of the present disclosure, the access network device may send the second indication information corresponding to the target information interaction to the first logical functional entity, and/or obtain the second indication information corresponding to the target information interaction determined by the first logical functional entity. That is, the second indication information may be determined solely by the access network device, or solely by the first logical functional entity, or jointly determined by the access network device and the first logical functional entity, which is not limited in the embodiments of the present disclosure.

Optionally, the second indication information may be one of the following: number, identifier, index, radio bearer, logical channel, transport channel, physical channel.

It should be noted that, in the embodiments of the present disclosure, there is also a corresponding relationship between the target information interaction and the second indication information. Optionally, one target information interaction may be in one-to-one correspondence with one second indication information. For example, the second indication information 1 corresponds to the target information interaction 1. The second indication information 2 corresponds to the target information interaction 2. Optionally, multiple target information interactions may also correspond to one second indication information. For example, both the target information interaction 1 and the target information interaction 2 may correspond to the second indication information 1.

It should be noted that, in the embodiment of the present disclosure, the access network device sending the second indication information corresponding to the target information interaction to the first logical functional entity may be explicit indication or implicit indication. Explicit indication: for example, the first logical functional entity indicates to the access network device that an information interaction of a target service or a target function or a target servicing (target information interaction) needs to be performed, and the access network device indicates the second indication information corresponding to the target information interaction to the first logical functional entity. Implicit indication: for example, the access network device sends second information from the first terminal device to the first logical functional entity and indicates that the second information corresponds to the second indication information, and the second information belongs to the information interaction of the target service or the target function or the target servicing (target information interaction), then the target information interaction corresponds to the second indication information.

In the embodiment of the present disclosure, since an information interaction of a service/function/servicing between the UE and the network function is allocated a second indication information, the network function can associate the second indication information with the relevant service information of the information interaction of the service/function/servicing, so as to be able to identify and process the relevant service information of the information interaction of the service/function/servicing. In addition, since the second indication information can correspond to information interactions of different services/functions/servicings of the same network function, the problem of the UE performing information interactions of multiple services/functions/servicings with the same network function at the same time can be solved.

As a possible implementation manner, the second indication information includes one indication information, so that the access network device may determine the second indication information corresponding to the target information interaction and indicate the second indication information corresponding to the target information interaction to the first logical functional entity. Alternatively, the second indication information corresponding to the target information interaction indicated by the first logical functional entity is received (at this time, the second indication information is determined solely by the first logical functional entity).

As another possible implementation manner, the second indication information includes second type indication information and second instance indication information, so that the access network device may perform at least one of the following operations:
determine the second type indication information in the second indication information corresponding to the target information interaction, and indicate the second type indication information corresponding to the target information interaction to the first logical functional entity; or,
determine the second instance indication information in the second indication information corresponding to the target information interaction, and indicate the second instance indication information corresponding to the target information interaction to the first logical functional entity; or,
determine the second type indication information and the second instance indication information in the second indication information corresponding to the target information interaction, and indicate the second type indication information and the second instance indication information corresponding to the target information interaction to the first logical functional entity; or,
receive the second type indication information in the second indication information corresponding to the target information interaction indicated by the first logical functional entity; or,
receive the second instance indication information in the second indication information corresponding to the target information interaction indicated by the first logical functional entity; or,
receive the second type indication information and the second instance indication information in the second indication information corresponding to the target information interaction indicated by the first logical functional entity.

Optionally, the second indication information may correspond to one or more of the following: information interaction of a service/function/servicing, information interaction of a logical functional entity in the UE. Moreover, the second indication information may be per UE, or per first logical functional entity, or both per UE and per first logical functional entity, which is not limited in the embodiments of the present disclosure.

It should be noted that, in the embodiment of the present disclosure, the second indication information and the first indication information may be the same or different. In the case where the second indication information is the same as the first indication information, the access network device determining the first indication information is also determining the second indication information.

The first logical functional entity indicating initiating the target information interaction to the access network device and indicating the second indication information corresponding to the target information interaction to the access network device may be indicated to the access network device in one message or different messages. In the case of indicating to the access network device in one message, the message may further include relevant service information of the target information interaction.

Step 604: in a case where the second information indicated by the first indication information sent by the first terminal device is received, sending the second information to the first logical functional entity corresponding to the target information interaction, and/or in a case where the third information of the target information interaction sent by the first logical functional entity is received, sending the third information indicated by the first indication information to the first terminal device corresponding to the target information interaction.

It should be noted that the execution process of this step may refer to the execution process of step 403 in the above embodiment, and the principle is the same, which will not be repeated here. The execution process of this step may also refer to the execution process of step 504 in the above embodiment. Before this step, the access network device may further execute step 503, and the principle is the same, which will not be repeated here.

As a possible implementation manner, in a case where the second information indicated by the first indication information sent by the first terminal device is received, the access network device may send the second information indicated by the second indication information to the first logical functional entity corresponding to the target information interaction, and/or in a case where the third information indicated by the second indication information sent by the first logical functional entity is received, send the third information indicated by the first indication information to the first terminal device corresponding to the target information interaction.

For uplink interaction information, the first terminal device generates relevant service information (second information) of the target information interaction, the first terminal device determines the first indication information corresponding to the target information interaction, and sends the second information indicated by the first indication information to the access network device (indicating that the second information corresponds to the first indication information). After receiving the second information indicated by the first indication information, the access network device sends the second information indicated by the second indication information to the first logical functional entity corresponding to the target information interaction. After receiving the second information indicated by the second indication information, the first logical functional entity determines that the second information corresponds to the target information interaction according to the target information interaction corresponding to the second indication information. The first logical functional entity processes the relevant service information (second information) of the target information interaction. For downlink interaction information, the first logical functional entity generates relevant service information (third information) of the information interaction of the target service or the target function or the target servicing, the first logical functional entity determines the second indication information corresponding to the target information interaction, and sends the third information indicated by the second indication information to the access network device (indicating that the third information corresponds to the second indication information). After receiving the third information indicated by the second indication information, the access network device sends the third information indicated by the first indication information to the first terminal device (indicating that the third information corresponds to the first indication information). After receiving the third information indicated by the first indication information, the first terminal device determines that the third information corresponds to the target information interaction according to the target information interaction corresponding to the first indication information. The first terminal device processes the relevant service information (third information) of the target information interaction. Optionally, the first terminal device may deliver the third information to the logical functional entity for processing the target information interaction. The logical functional entity in the first terminal device for processing the target information interaction processes the third information.

As a possible implementation manner, in a case where the second information indicated by the first indication information sent by the first terminal device is received, the access network device may send the second information indicated by the second indication information to the first logical functional entity corresponding to the target information interaction according to the corresponding relationship between the first indication information and the target information interaction and the corresponding relationship between the second indication information and the target information interaction, and/or in a case where the third information indicated by the second indication information sent by the first logical functional entity is received, the access network device may send the third information indicated by the first indication information to the first terminal device corresponding to the target information interaction according to the corresponding relationship between the first indication information and the target information interaction and the corresponding relationship between the second indication information and the target information interaction.

Specifically, in a case where the second information indicated by the first indication information sent by the first terminal device is received, the access network device may determine the target information interaction corresponding to the first indication information according to the corresponding relationship between the first indication information and the target information interaction, determine the second indication information corresponding to the target information interaction according to the corresponding relationship between the target information interaction and the second indication information, and send the second information indicated by the second indication information to the first logical functional entity corresponding to the target information interaction. In a case where the third information indicated by the second indication information sent by the first logical functional entity is received, the access network device may determine the target information interaction corresponding to the second indication information according to the corresponding relationship between the target information interaction and the second indication information, determine the first indication information corresponding to the target information interaction according to the corresponding relationship between the first indication information and the target information interaction, and send the third information indicated by the first indication information to the first terminal device.

It can also be understood that, in a case where the second information indicated by the first indication information sent by the first terminal device is received, the access network device may determine the target information interaction corresponding to the first indication information according to the corresponding relationship between the first indication information and the target information interaction, determine <the first logical functional entity, the second indication information> corresponding to the target information interaction according to the corresponding relationship between the target information interaction and <the first logical functional entity, the second indication information>, and send the second information indicated by the second indication information to the first logical functional entity corresponding to the target information interaction. In a case where the third information indicated by the second indication information sent by the first logical functional entity is received, the access network device may determine the target information interaction corresponding to <the first logical functional entity, the second indication information> according to the corresponding relationship between the target information interaction and <the first logical functional entity, the second indication information>, determine the first indication information corresponding to the target information interaction according to the corresponding relationship between the first indication information and the target information interaction, and send the third information indicated by the first indication information to the first terminal device.

It should be noted that the symbol <X, Y> throughout the text represents a combination of the two, for example, the above <the first logical functional entity, the second indication information> represents a combination of the first logical functional entity and the second indication information.

Optionally, before the access network device sends the second information indicated by the second indication information to the first logical functional entity corresponding to the target information interaction, the access network device may further determine the first logical functional entity corresponding to the target information interaction according to the corresponding relationship between the first indication information and the target information interaction and the corresponding relationship between the target information interaction and the first logical functional entity.

Optionally, before the access network device sends the second information indicated by the second indication information to the first logical functional entity corresponding to the target information interaction, the access network device may further determine the first logical functional entity corresponding to the first indication information according to the corresponding relationship between the first indication information and the first logical functional entity.

The information transmission method provided by the embodiment of the present disclosure, the access network device may send the second indication information corresponding to the target information interaction to the first logical functional entity, and/or obtain the second indication information corresponding to the target information interaction determined by the first logical functional entity. Thus, the network function can associate the second indication information with the relevant service information of the information interaction of the service/function/servicing, so as to be able to identify and process the relevant service information of the information interaction of the service/function/servicing. Meanwhile, different second indication information can be allocated to information interactions of different services/functions/servicings of the same network function, so that the problem of the UE performing information interactions of multiple services/functions/servicings with the same network function at the same time can be solved.

It should be noted that, in the present disclosure, the access network device may further determine the corresponding relationship between the second indication information and the first indication information in the case where the second indication information is different from the first indication information. This process will be described below with reference to FIG. 7.

FIG. 7 is a schematic flowchart of another information transmission method provided by an embodiment of the present disclosure.

Similarly, the information transmission method of the embodiment of the present disclosure is applied to an access network device. Optionally, the access network device may be any device in the RAN. As an example, the access network device may be any logical functional entity in the RAN, such as a network function, a logical node, a logical unit, etc.

Similarly, the logical functional entity may be implemented as a network element on dedicated hardware, or as a software instance running on dedicated hardware, or as a virtualized function instantiated on a platform, which is not limited in the embodiments of the present disclosure.

As shown in FIG. 7, the information transmission method may include steps: 701-705.

Step 701: receiving first information sent by a first terminal device or a first logical functional entity.

Step 702: indicating, to the first terminal device, first indication information corresponding to the target information interaction, and/or obtaining the first indication information corresponding to the target information interaction determined by the first terminal device.

Step 703: sending second indication information corresponding to the target information interaction to the first logical functional entity, and/or obtaining the second indication information corresponding to the target information interaction determined by the first logical functional entity.

It should be noted that the execution process of steps 701-703 may refer to the execution process of steps 601-603 in the above embodiment, and the principle is the same, which will not be repeated here.

Step 704: in a case where the second indication information is different from the first indication information, determining the corresponding relationship between the second indication information and the first indication information.

In the embodiment of the present disclosure, the access network device may determine the corresponding relationship between the second indication information and the first indication information in the case where the second indication information is different from the first indication information. It can also be understood that the access network device associates the first indication information corresponding to the target information interaction with the second indication information corresponding to the target information interaction. Optionally, it may be directly associated or indirectly associated, which is not limited in the embodiments of the present disclosure. Indirect association: for example, the first indication information is associated with the target information interaction, and the target information interaction is associated with the second indication information. Correspondingly, the access network device determines the corresponding relationship between the first indication information and the target information interaction, and the corresponding relationship between the target information interaction and the second indication information. In one way, the second indication information may be the first instance indication information in the first indication information.

Optionally, the access network device may store/apply the corresponding relationship between the second indication information and the first indication information. Alternatively, the access network device may store/apply the corresponding relationship between the first indication information and the target information interaction, and the corresponding relationship between the target information interaction and the second indication information.

Optionally, one second indication information may be in one-to-one correspondence with one first indication information. For example, the second indication information 1 corresponds to the first indication information 1. The second indication information 2 corresponds to the first indication information 2. Optionally, one second indication information may also correspond to multiple first indication information. For example, when information interactions of multiple services/functions/servicings correspond to one second indication information, and an information interaction of one service/function/servicing corresponds to one first indication information, one second indication information corresponds to multiple first indication information. For example, the second indication information 1 corresponds to the first indication information 1 and the first indication information 2.

Step 705: in a case where the second information indicated by the first indication information sent by the first terminal device is received, sending the second information to the first logical functional entity corresponding to the target information interaction, and/or in a case where the third information of the target information interaction sent by the first logical functional entity is received, sending the third information indicated by the first indication information to the first terminal device corresponding to the target information interaction.

It should be noted that the execution process of this step may refer to the execution process of step 604 in the above embodiment, and the principle is the same, which will not be repeated here.

As a possible implementation manner, in a case where the second information indicated by the first indication information sent by the first terminal device is received, the access network device may send the second information indicated by the second indication information to the first logical functional entity corresponding to the target information interaction according to the corresponding relationship between the second indication information and the first indication information, and/or in a case where the third information indicated by the second indication information sent by the first logical functional entity is received, the access network device may send the third information indicated by the first indication information to the first terminal device corresponding to the target information interaction according to the corresponding relationship between the second indication information and the first indication information.

Specifically, in a case where the second information indicated by the first indication information sent by the first terminal device is received, the access network device may determine the second indication information corresponding to the first indication information according to the corresponding relationship between the first indication information and the second indication information, and send the second information indicated by the second indication information to the first logical functional entity corresponding to the target information interaction. In a case where the third information indicated by the second indication information sent by the first logical functional entity is received, the access network device may determine the first indication information corresponding to the second indication information according to the corresponding relationship between the second indication information and the first indication information, and send the third information indicated by the first indication information to the first terminal device.

The access network device determining the second indication information corresponding to the first indication information according to the corresponding relationship between the first indication information and the second indication information may be direct determination or indirect determination. Indirect determination: for example, the access network device determines the target information interaction corresponding to the first indication information according to the corresponding relationship between the first indication information and the target information interaction, and then determines the second indication information corresponding to the target information interaction according to the corresponding relationship between the target information interaction and the second indication information. The access network device determining the first indication information corresponding to the second indication information according to the corresponding relationship between the first indication information and the second indication information may be direct determination or indirect determination. Indirect determination: for example, the access network device determines the target information interaction corresponding to the second indication information according to the corresponding relationship between the second indication information and the target information interaction, and then determines the first indication information corresponding to the target information interaction according to the corresponding relationship between the target information interaction and the first indication information.

It can also be understood that, in a case where the second information indicated by the first indication information sent by the first terminal device is received, the access network device determines <the first logical functional entity, the second indication information> corresponding to the first indication information according to the corresponding relationship between the first indication information and <the first logical functional entity, the second indication information>, and sends the second information indicated by the second indication information to the first logical functional entity. In a case where the third information indicated by the second indication information sent by the first logical functional entity is received, the access network device determines the first indication information corresponding to <the first logical functional entity, the second indication information> according to the corresponding relationship between the first indication information and <the first logical functional entity, the second indication information>, and sends the third information indicated by the first indication information to the first terminal device.

For uplink interaction information, the first terminal device generates relevant service information (second information) of the target information interaction, the first terminal device determines the first indication information corresponding to the target information interaction, and sends the second information indicated by the first indication information to the access network device (indicating that the second information corresponds to the first indication information). After receiving the second information indicated by the first indication information, the access network device may determine the first logical functional entity corresponding to the target information interaction and the second indication information corresponding to the target information interaction, and send the second information indicated by the second indication information to the first logical functional entity.

For downlink interaction information, the first logical functional entity generates relevant service information (third information) of the information interaction of the target service or the target function or the target servicing, the first logical functional entity determines the second indication information corresponding to the third information, and sends the third information and the second indication information to the access network device (indicating that the third information corresponds to the second indication information). After receiving the third information indicated by the second indication information, the access network device may determine the first indication information corresponding to <the first logical functional entity, the second indication information>, and send the third information indicated by the first indication information to the first terminal device corresponding to the target information interaction.

If the second indication information is the same as the first indication information, that is, the same indication information, the routing control function of the access network device further includes the access network device indicating the second indication information (i.e., the first indication information) corresponding to the target information interaction to the first logical functional entity.

Optionally, for uplink interaction information, the access network device forwards the relevant service information (such as the second information) of the information interaction of the service/function/servicing or the information interaction of the logical functional entity in the terminal device to the first logical functional entity, and indicates to the first logical functional entity that the forwarded relevant service information corresponds to the second indication information (i.e., the first indication information). The first logical functional entity determines the information interaction of the service/function/servicing corresponding to the relevant service information forwarded by the access network device according to the second indication information.

Optionally, for downlink interaction information, the first logical functional entity determines the second indication information (i.e., the first indication information) corresponding to the relevant service information (such as the third information) of the target information interaction generated by the first logical functional entity. The first logical functional entity indicates to the access network device that the relevant service information of the target information interaction generated by the first logical functional entity corresponds to the second indication information.

The information transmission method provided by the embodiment of the present disclosure, the access network device determines the corresponding relationship between the second indication information and the first indication information in the case where the second indication information is different from the first indication information, thereby sending the second information to the first logical functional entity corresponding to the target information interaction according to the corresponding relationship between the second indication information and the first indication information in a case where the second information indicated by the first indication information sent by the first terminal device is received, and/or sending the third information indicated by the first indication information to the first terminal device corresponding to the target information interaction according to the corresponding relationship between the second indication information and the first indication information in a case where the third information of the target information interaction sent by the first logical functional entity is received. Thus, the access network device can forward the relevant service information of the target information interaction to the corresponding first terminal device or first logical functional entity based on the corresponding relationship between the second indication information and the first indication information.

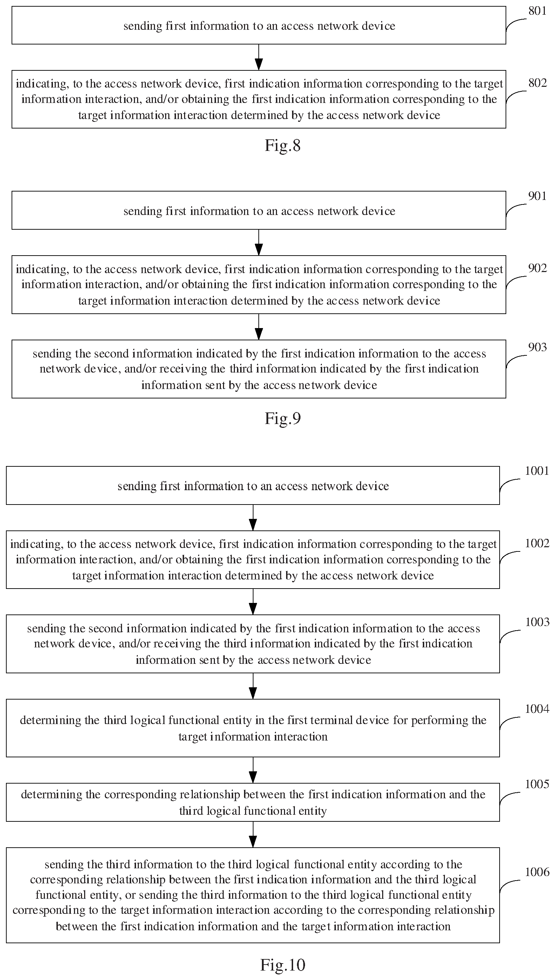

It should be noted that the above embodiments describe the implementation process of the information transmission method from the perspective of the access network device. The following describes a possible implementation manner of a method for transmitting information from the perspective of the first terminal device with reference to FIG. 8. FIG. 8 is a schematic flowchart of another information transmission method provided by an embodiment of the present disclosure.

As shown in FIG. 8, the information transmission method may include steps: 801-802.

Step 801: sending first information to an access network device.

The first information is used to indicate initiating a target information interaction, the target information interaction includes an information interaction of a target service or a target function or a target servicing, and the target information interaction is an information interaction between the first terminal device and the first logical functional entity.

In the embodiment of the present disclosure, the first terminal device may send the first information for indicating initiating the target information interaction to the access network device to inform the access network device that the first terminal device intends to initiate the target information interaction.

It should be noted that other execution processes of this step may refer to the execution process of step 301 in the above embodiment, and the principle is the same, which will not be repeated here.

Step 802: indicating, to the access network device, first indication information corresponding to the target information interaction, and/or obtaining the first indication information corresponding to the target information interaction determined by the access network device.

The first indication information is used to indicate second information of the target information interaction sent by the first terminal device to the access network device, and/or the first indication information is used to indicate third information of the target information interaction sent by the first logical functional entity to the first terminal device.

In the embodiment of the present disclosure, the first terminal device may indicate the first indication information corresponding to the target information interaction to the access network device, and/or obtain the first indication information corresponding to the target information interaction determined by the access network device. That is, the first indication information may be determined solely by the access network device, or solely by the first terminal device, or jointly determined by the access network device and the first terminal device, which is not limited in the embodiments of the present disclosure.

It should be noted that other execution processes of this step may refer to the execution process of step 302 in the above embodiment, and the principle is the same, which will not be repeated here.

The information transmission method provided by the embodiment of the present disclosure, the first terminal device sends first information to the access network device, where the first information is used to indicate initiating a target information interaction, thereby indicating the first indication information corresponding to the target information interaction to the access network device, and/or obtaining the first indication information corresponding to the target information interaction determined by the access network device, where the first indication information is used to indicate second information of the target information interaction sent by the first terminal device to the first logical functional entity, and/or the first indication information is used to indicate third information of the target information interaction sent by the first logical functional entity to the first terminal device. Thus, by allocating indication information for different information interactions, it is avoided to define special RRC information elements or RRC messages for each information interaction in the standard protocol to carry the messages, and the protocol design is flexible. Meanwhile, different first indication information can be allocated to information interactions of different network function instances of the same type of network function, so that the problem of the UE interacting with multiple network functions of the same type at the same time can be solved.

To clearly illustrate the previous embodiment, the embodiment of the present disclosure provides another information transmission method. FIG. 9 is a schematic flowchart of another information transmission method provided by an embodiment of the present disclosure.

Similarly, the information transmission method of the embodiment of the present disclosure is applied to a first terminal device.

As shown in FIG. 9, the information transmission method may include steps: 901-903.

Step 901: sending first information to an access network device.

It should be noted that the execution process of this step may refer to the execution process of step 801 in the above embodiment, and the principle is the same, which will not be repeated here.

Step 902: indicating, to the access network device, first indication information corresponding to the target information interaction, and/or obtaining the first indication information corresponding to the target information interaction determined by the access network device.

As a possible implementation manner, the first indication information includes one indication information, so that the first terminal device may determine the first indication information corresponding to the target information interaction and indicate the first indication information corresponding to the target information interaction to the access network device. Alternatively, the first indication information corresponding to the target information interaction indicated by the access network device is received (at this time, the first indication information is determined solely by the access network device).

As another possible implementation manner, the first indication information includes first type indication information and first instance indication information, so that the first terminal device may perform at least one of the following operations:
determine the first type indication information in the first indication information corresponding to the target information interaction, and indicate the first type indication information corresponding to the target information interaction to the access network device; or,
determine the first instance indication information in the first indication information corresponding to the target information interaction, and indicate the first instance indication information corresponding to the target information interaction to the access network device; or,
determine the first type indication information and the first instance indication information in the first indication information corresponding to the target information interaction, and indicate the first type indication information and the first instance indication information corresponding to the target information interaction to the access network device; or,
receive the first type indication information in the first indication information corresponding to the target information interaction determined by the access network device; or,
receive the first instance indication information in the first indication information corresponding to the target information interaction determined by the access network device; or,
receive the first type indication information and the first instance indication information in the first indication information corresponding to the target information interaction determined by the access network device.

It should be noted that other execution processes of this step may refer to the execution process of step 302 in the above embodiment, and the principle is the same, which will not be repeated here.

Step 903: sending the second information indicated by the first indication information to the access network device, and/or receiving the third information indicated by the first indication information sent by the access network device.

In the embodiment of the present disclosure, after determining the first indication information, the first terminal device may send the second information indicated by the first indication information to the access network device, so that the access network device forwards the second information to the first logical functional entity corresponding to the target information interaction according to the corresponding relationship between the first indication information and the target information interaction. And/or, the third information indicated by the first indication information sent by the access network device may be received. At this time, since the third information is indicated by the first indication information, the first terminal device may determine that the third information is sent by the first logical functional entity corresponding to the target information interaction according to the corresponding relationship between the first indication information and the target information interaction.

Optionally, in a case where the first terminal device receives the third information indicated by the first indication information sent by the access network device, the first terminal device may determine the target information interaction corresponding to the third information according to the first indication information.

It should be noted that other execution processes of this step may refer to the execution process of step 403 in the above embodiment, and the principle is the same, which will not be repeated here.

The information transmission method provided by the embodiment of the present disclosure, the first terminal device may send the second information indicated by the first indication information to the access network device, and/or receive the third information indicated by the first indication information sent by the access network device by indicating the first indication information corresponding to the target information interaction to the access network device and/or obtaining the first indication information corresponding to the target information interaction determined by the access network device when sending the first information for indicating initiating the target information interaction to the access network device. Thus, the first terminal device can associate the first indication information with the relevant service information of the target information interaction, so as to be able to identify and process the relevant service information of the target information interaction. Meanwhile, different first indication information can be allocated to information interactions of different network function instances of the same type of network function, so that the problem of the UE interacting with multiple network functions of the same type at the same time can be solved.

In the present disclosure, the first terminal device may forward the third information to the third logical functional entity in the first terminal device, which will be described below with reference to FIG. 10.

FIG. 10 is a schematic flowchart of another information transmission method provided by an embodiment of the present disclosure.

Similarly, the information transmission method of the embodiment of the present disclosure is applied to a first terminal device.

As shown in FIG. 10, the information transmission method may include steps: 1001-1006.

Step 1001: sending first information to an access network device.

Step 1002: indicating, to the access network device, first indication information corresponding to the target information interaction, and/or obtaining the first indication information corresponding to the target information interaction determined by the access network device.

Step 1003: sending the second information indicated by the first indication information to the access network device, and/or receiving the third information indicated by the first indication information sent by the access network device.

It should be noted that the execution process of steps 1001-1003 may refer to the execution process of steps 901-903 in the above embodiment, and the principle is the same, which will not be repeated here.

Step 1004: determining the third logical functional entity in the first terminal device for performing the target information interaction.

In the embodiment of the present disclosure, the UE also includes a logical functional entity for performing information interaction of a service/function/servicing (which can also be understood as a logical functional entity including a service/function/servicing), and each logical functional entity in the UE performs one or more services/functions/servicings. For example, a logical functional entity for session management, a logical functional entity for sensing, a logical functional entity for location/positioning function, a logical functional entity for AI function, a logical functional entity for short message function, a logical functional entity for UE policy function, a logical functional entity for user plane function, a logical functional entity for access management.

The relationship between the target information interaction and the third logical functional entity in the UE is specifically the same as the above "relationship between the target information interaction and the first logical functional entity".

Optionally, the first indication information may correspond to one or more of the following: information interaction of one or more services/functions/servicings, information interaction of one logical functional entity, and may also correspond to information interaction of a logical functional entity in the UE.

Step 1005: determining the corresponding relationship between the first indication information and the third logical functional entity.

In the embodiment of the present disclosure, the first terminal device may associate the first indication information corresponding to the target information interaction with the third logical functional entity corresponding to the target information interaction in the first terminal device. Optionally, it may be directly associated or indirectly associated, which is not limited in the embodiments of the present disclosure. Indirect association: for example, the first indication information is associated with the target information interaction, and the target information interaction is associated with the third logical functional entity. Correspondingly, the first terminal device determines the corresponding relationship between the first indication information and the target information interaction, and the corresponding relationship between the target information interaction and the third logical functional entity.

Optionally, the first terminal device may store/apply the corresponding relationship between the first indication information and the third logical functional entity. Alternatively, the first terminal device may store/apply the corresponding relationship between the first indication information and the target information interaction, and the corresponding relationship between the target information interaction and the third logical functional entity.

Optionally, one third logical functional entity may be in one-to-one correspondence with one first indication information. For example, the third logical functional entity 1 corresponds to the first indication information 1. The third logical functional entity 2 corresponds to the first indication information 2. Optionally, one third logical functional entity may also correspond to multiple first indication information. For example, when information interactions of multiple services/functions/servicings correspond to one third logical functional entity, and an information interaction of one service/function/servicing corresponds to one first indication information, one third logical functional entity corresponds to multiple first indication information. For example, the third logical functional entity 1 corresponds to the first indication information 1 and the first indication information 2.

Step 1006: sending the third information to the third logical functional entity according to the corresponding relationship between the first indication information and the third logical functional entity, or sending the third information to the third logical functional entity corresponding to the target information interaction according to the corresponding relationship between the first indication information and the target information interaction.

Optionally, when sending the third information to the third logical functional entity, since the third information is indicated by the first indication information, the first terminal device may directly send the third information to the third logical functional entity according to the corresponding relationship between the first indication information and the third logical functional entity if the corresponding relationship between the first indication information and the third logical functional entity is determined. Alternatively, if the corresponding relationship between the first indication information and the third logical functional entity is not determined, the third information may be sent to the third logical functional entity corresponding to the target information interaction according to the corresponding relationship between the first indication information and the target information interaction.

In summary, in the embodiment of the present disclosure, in addition to the routing marking function, the first terminal device further includes the following routing control functions:
1. The first terminal device determines the third logical functional entity in the first terminal device for performing the target information interaction;

Optionally, the access network device may indicate to the first terminal device that the target information interaction needs to be performed, so that the first terminal device determines the third logical functional entity in the first terminal device for performing the target information interaction. Alternatively, the third logical functional entity in the first terminal device indicates to the first terminal device that the target information interaction needs to be performed.

2. The first terminal device determines the first indication information corresponding to the target information interaction;
Optionally, the first terminal device may determine the first indication information, or the first type indication information in the first indication information, or the first instance indication information in the first indication information, or the first type indication information and the first instance indication information in the first indication information.

Optionally, the first terminal device may also receive the first indication information determined by the access network device indicated by the access network device to the first terminal device, or the first type indication information in the first indication information, or the first instance indication information in the first indication information, or the first type indication information and the first instance indication information in the first indication information.
3. The first terminal device determines the corresponding relationship between the first indication information and the third logical functional entity;
4. The first terminal device indicates the first indication information corresponding to the target information interaction to the access network device;

The first terminal device indicates the first indication information determined by itself to the access network device, or the first type indication information in the first indication information, or the first instance indication information in the first indication information, or the first type indication information and the first instance indication information in the first indication information.

This step is optional.

The first terminal device further includes a routing function:
5. The first terminal device receives the third information and the first indication information from the access network device, and the first indication information corresponds to the third information;

The access network device includes a routing marking function for indicating the first indication information corresponding to the service/function/servicing related information to the first terminal device. For downlink interaction information, the first logical functional entity generates relevant service information (third information) of the information interaction of the target service or the target function or the target servicing, and sends it to the access network device. After receiving the third information, the access network device may determine that the third information corresponds to the first indication information, and send the third information indicated by the first indication information to the first terminal device.

6. The first terminal device determines the third logical functional entity corresponding to the first indication information according to the corresponding relationship between the first indication information and the third logical functional entity, and forwards the third information to the third logical functional entity.

The access network device includes a routing function for delivering the service/function/servicing related information to the corresponding logical functional entity in the first terminal device. After receiving the third information indicated by the first indication information, the first terminal device may determine the third logical functional entity in the first terminal device corresponding to the first indication information, and send the third information to the third logical functional entity in the first terminal device. The routing function of the first terminal device determining the third logical functional entity in the first terminal device corresponding to the first indication information may be direct determination or indirect determination. Indirect determination: for example, the first terminal device determines the target service or the target function or the target servicing corresponding to the first indication information according to the corresponding relationship between the first indication information and the target information interaction, and then determines the third logical functional entity in the first terminal device corresponding to the target service or the target function or the target servicing according to the corresponding relationship between the target information interaction and the third logical functional entity in the first terminal device.

The information transmission method provided by the embodiment of the present disclosure, the first terminal device determines the third logical functional entity in the first terminal device for performing the target information interaction, thereby determining the corresponding relationship between the first indication information and the third logical functional entity, and further sending the third information to the third logical functional entity according to the corresponding relationship between the first indication information and the third logical functional entity, or sending the third information to the third logical functional entity corresponding to the target information interaction according to the corresponding relationship between the first indication information and the target information interaction. Thus, the first terminal device can send the third information to the third logical functional entity corresponding to the target information interaction according to the corresponding relationship between the first indication information and the third logical functional entity, or the corresponding relationship between the first indication information and the target information interaction.

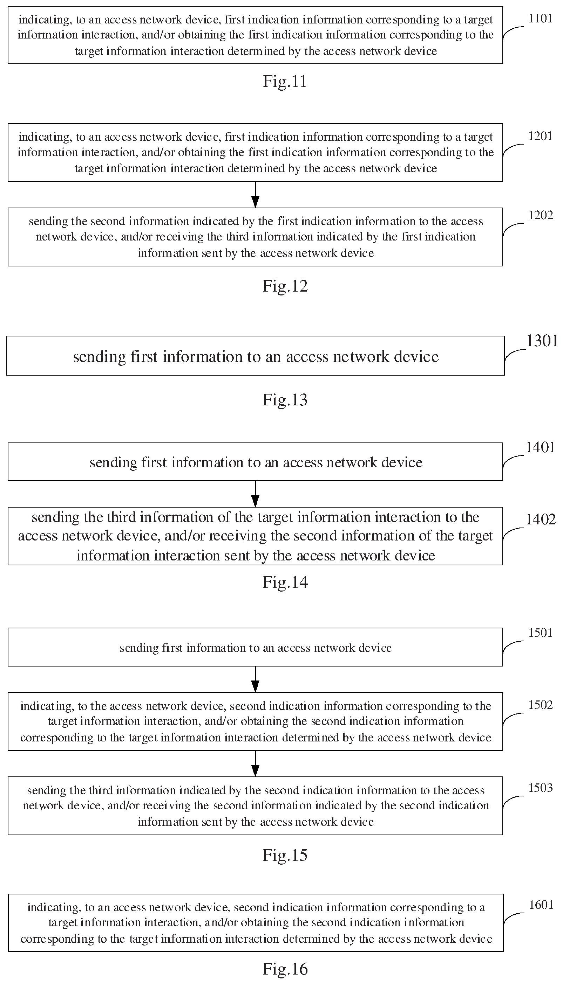

It should be noted that, in the present disclosure, the first terminal device may also determine the first indication information without sending the first information for indicating initiating the target information interaction to the access network device. This process will be described below with reference to FIG. 11.

FIG. 11 is a schematic flowchart of another information transmission method provided by an embodiment of the present disclosure.

As shown in FIG. 11, the information transmission method may include steps: 1101.

Step 1101: indicating, to an access network device, first indication information corresponding to a target information interaction, and/or obtaining the first indication information corresponding to the target information interaction determined by the access network device.

The target information interaction includes an information interaction of a target service or a target function or a target servicing, and the target information interaction is an information interaction between the first terminal device and the first logical functional entity.

It should be noted that the explanations of the "target information interaction", "first logical functional entity", and "target service or target function or target servicing" in this step may refer to the description of step 301 in the above embodiment, which will not be repeated here.

The first indication information is used to indicate second information of the target information interaction sent by the first terminal device to the access network device, and/or the first indication information is used to indicate third information of the target information interaction sent by the first logical functional entity to the first terminal device.

In the embodiment of the present disclosure, the first terminal device may indicate the first indication information corresponding to the target information interaction to the access network device, and/or obtain the first indication information corresponding to the target information interaction determined by the access network device. That is, the first indication information may be determined solely by the access network device, or solely by the first terminal device, or jointly determined by the access network device and the first terminal device, which is not limited in the embodiments of the present disclosure.

It should be noted that other execution processes of this step may refer to the execution process of step 302 in the above embodiment, and the principle is the same, which will not be repeated here.

The information transmission method provided by the embodiment of the present disclosure, the first terminal device sends first information to the access network device, where the first information is used to indicate initiating a target information interaction, thereby indicating the first indication information corresponding to the target information interaction to the access network device, and/or obtaining the first indication information corresponding to the target information interaction determined by the access network device, where the first indication information is used to indicate second information of the target information interaction sent by the first terminal device to the first logical functional entity, and/or the first indication information is used to indicate third information of the target information interaction sent by the first logical functional entity to the first terminal device. Thus, by allocating indication information for different information interactions, it is avoided to define special RRC information elements or RRC messages for each information interaction in the standard protocol to carry the messages, and the protocol design is flexible. Meanwhile, different first indication information can be allocated to information interactions of different network function instances of the same type of network function, so that the problem of the UE interacting with multiple network functions of the same type at the same time can be solved.

Optionally, in the present disclosure, the first terminal device may also determine the first indication information without sending the first information for indicating initiating the target information interaction to the access network device, and send the second information indicated by the first indication information to the access network device, and/or receive the third information indicated by the first indication information sent by the access network device. This process will be described below with reference to FIG. 12.

FIG. 12 is a schematic flowchart of another information transmission method provided by an embodiment of the present disclosure.

As shown in FIG. 12, the information transmission method may include steps: 1201-1202.

Step 1201: indicating, to an access network device, first indication information corresponding to a target information interaction, and/or obtaining the first indication information corresponding to the target information interaction determined by the access network device.

It should be noted that the execution process of this step may refer to the execution process of step 1101 in the above embodiment, and the principle is the same, which will not be repeated here.

Step 1202: sending the second information indicated by the first indication information to the access network device, and/or receiving the third information indicated by the first indication information sent by the access network device.

It should be noted that the execution process of this step may refer to the execution process of step 903 in the above embodiment, and the principle is the same, which will not be repeated here.

The information transmission method provided by the embodiment of the present disclosure may send the second information indicated by the first indication information to the access network device, and/or receive the third information indicated by the first indication information sent by the access network device by indicating the first indication information corresponding to the target information interaction to the access network device and/or obtaining the first indication information corresponding to the target information interaction determined by the access network device without sending the first information for indicating initiating the target information interaction to the access network device. Thus, the first terminal device can associate the first indication information with the relevant service information of the target information interaction, so as to be able to identify and process the relevant service information of the target information interaction. Meanwhile, different first indication information can be allocated to information interactions of different network function instances of the same type of network function, so that the problem of the UE interacting with multiple network functions of the same type at the same time can be solved.

The following describes a possible implementation manner of a method for transmitting information from the perspective of the first logical functional entity with reference to FIG. 13.

FIG. 13 is a schematic flowchart of another information transmission method provided by an embodiment of the present disclosure.

As shown in FIG. 13, the information transmission method may include steps: 1301.

Step 1301: sending first information to an access network device.

The first information is used to indicate initiating a target information interaction, the target information interaction includes an information interaction of a target service or a target function or a target servicing, the target information interaction is an information interaction between the first terminal device and the first logical functional entity, and the target information interaction corresponds to first indication information.

The first indication information is used to indicate second information of the target information interaction sent by the first terminal device to the first logical functional entity, and/or the first indication information is used to indicate third information of the target information interaction sent by the first logical functional entity to the first terminal device.

It should be noted that the explanation of the "first indication information" in this step may refer to the description of step 302 in the above embodiment, which will not be repeated here.

In the embodiment of the present disclosure, the first logical functional entity may send the first information for indicating initiating the target information interaction to the access network device to inform the access network device that the first logical functional entity intends to initiate the target information interaction.

It should be noted that when the first logical functional entity sends the first information for indicating initiating the target information interaction to the access network device, it will indicate to the access network device that the first terminal device performing the target information interaction with the first logical functional entity is the first terminal device.

It should be noted that other execution processes of this step may refer to the execution process of step 301 in the above embodiment, and the principle is the same, which will not be repeated here.

The information transmission method provided by the embodiment of the present disclosure, the first logical functional entity may send first information to the access network device, where the first information is used to indicate initiating a target information interaction, the target information interaction includes an information interaction of a target service or a target function or a target servicing, the target information interaction is an information interaction between the first terminal device and the first logical functional entity, and the target information interaction corresponds to first indication information, where the first indication information is used to indicate second information of the target information interaction sent by the first terminal device to the first logical functional entity, and/or the first indication information is used to indicate third information of the target information interaction sent by the first logical functional entity to the first terminal device. Thus, by allocating indication information for different information interactions, it is avoided to define special RRC information elements or RRC messages for each information interaction in the standard protocol to carry the messages, and the protocol design is flexible. Meanwhile, different first indication information can be allocated to information interactions of different network function instances of the same type of network function, so that the problem of the UE interacting with multiple network functions of the same type at the same time can be solved.

It should be noted that, in the present disclosure, the first logical functional entity may also send the third information of the target information interaction to the access network device, and/or receive the second information of the target information interaction sent by the access network device to realize the target information interaction with the first terminal device. This process will be described below with reference to FIG. 14.

FIG. 14 is a schematic flowchart of another information transmission method provided by an embodiment of the present disclosure.

Similarly, the information transmission method of the embodiment of the present disclosure is applied to a first logical functional entity.

As shown in FIG. 14, the information transmission method may include steps: 1401-1402.

Step 1401: sending first information to an access network device.

It should be noted that the execution process of this step may refer to the execution process of step 1101 in the above embodiment, and the principle is the same, which will not be repeated here.

Step 1402: sending the third information of the target information interaction to the access network device, and/or receiving the second information of the target information interaction sent by the access network device.

In the embodiment of the present disclosure, the first logical functional entity may generate relevant service information (third information) of the information interaction of the target service or the target function or the target servicing, and send the third information of the target information interaction to the access network device, so that the access network device forwards the third information to the first logical functional entity. And/or, the first logical functional entity may receive the second information of the target information interaction from the first terminal device sent by the access network device.

It should be noted that other execution processes of this step may refer to the execution process of step 403 in the above embodiment, and the principle is the same, which will not be repeated here.

The information transmission method provided by the embodiment of the present disclosure, after the first logical functional entity sends the first information to the access network device, may send the third information of the target information interaction to the access network device, and/or receive the second information of the target information interaction sent by the access network device. Thus, the target information interaction between the first logical functional entity and the first terminal device is realized.

In the present disclosure, a second indication information may also be allocated for the target information interaction. The following describes this process from the perspective of the first logical functional entity with reference to FIG. 15.

FIG. 15 is a schematic flowchart of another information transmission method provided by an embodiment of the present disclosure.

As shown in FIG. 15, the information transmission method may include steps: 1501-1503.

Step 1501: sending first information to an access network device.

It should be noted that the execution process of this step may refer to the execution process of step 1101 in the above embodiment, and the principle is the same, which will not be repeated here.

Step 1502: indicating, to the access network device, second indication information corresponding to the target information interaction, and/or obtaining the second indication information corresponding to the target information interaction determined by the access network device.

In the embodiment of the present disclosure, the first logical functional entity may indicate the second indication information corresponding to the target information interaction to the access network device, and/or obtain the second indication information corresponding to the target information interaction determined by the access network device. That is, the second indication information may be determined solely by the access network device, or solely by the first logical functional entity, or jointly determined by the access network device and the first logical functional entity, which is not limited in the embodiments of the present disclosure.

It should be noted that other execution processes of this step may refer to the execution process of step 603 in the above embodiment, and the principle is the same, which will not be repeated here.

Step 1503: sending the third information indicated by the second indication information to the access network device, and/or receiving the second information indicated by the second indication information sent by the access network device.

In the embodiment of the present disclosure, after determining the second indication information, the first logical functional entity may send the third information indicated by the second indication information to the access network device, so that the access network device forwards the third information to the first terminal device. And/or, the second information indicated by the second indication information sent by the access network device may be received.

Optionally, in a case where the first logical functional entity receives the second information indicated by the second indication information sent by the access network device, the first logical functional entity may determine that the second information corresponds to the target information interaction according to the first indication information.

It should be noted that other execution processes of this step may refer to the execution process of step 604 in the above embodiment, and the principle is the same, which will not be repeated here.

The information transmission method provided by the embodiment of the present disclosure, the first logical functional entity may send the third information indicated by the second indication information to the access network device, and/or receive the second information indicated by the second indication information sent by the access network device by indicating the second indication information corresponding to the target information interaction to the access network device and/or obtaining the second indication information corresponding to the target information interaction determined by the access network device when sending the first information for indicating initiating the target information interaction to the access network device. Thus, the first logical functional entity can associate the second indication information with the relevant service information of the target information interaction, so as to be able to identify and process the relevant service information of the target information interaction. Meanwhile, different second indication information can be allocated to information interactions of different services/functions/servicings of the same network function, so that the problem of the UE performing information interactions of multiple services/functions/servicings with the same network function at the same time can be solved.

It should be noted that, in the present disclosure, the first logical functional entity may also determine the second indication information without sending the first information for indicating initiating the target information interaction to the access network device. This process will be described below with reference to FIG. 16.

FIG. 16 is a schematic flowchart of another information transmission method provided by an embodiment of the present disclosure.

As shown in FIG. 16, the information transmission method may include steps: 1601.

Step 1601: indicating, to an access network device, second indication information corresponding to a target information interaction, and/or obtaining the second indication information corresponding to the target information interaction determined by the access network device.

The target information interaction includes an information interaction of a target service or a target function or a target servicing, and the target information interaction is an information interaction between the first terminal device and the first logical functional entity.

It should be noted that the explanations of the "target information interaction", "first logical functional entity", and "target service or target function or target servicing" in this step may refer to the description of step 301 in the above embodiment, which will not be repeated here.

The second indication information is used to indicate second information of the target information interaction sent by the first terminal device to the first logical functional entity, and/or the second indication information is used to indicate third information of the target information interaction sent by the first logical functional entity to the first terminal device.

In the embodiment of the present disclosure, the first logical functional entity may indicate the second indication information corresponding to the target information interaction to the access network device, and/or obtain the second indication information corresponding to the target information interaction determined by the access network device. That is, the second indication information may be determined solely by the access network device, or solely by the first logical functional entity, or jointly determined by the access network device and the first logical functional entity, which is not limited in the embodiments of the present disclosure.

It should be noted that other execution processes of this step may refer to the execution process of step 603 in the above embodiment, and the principle is the same, which will not be repeated here.

The information transmission method provided by the embodiment of the present disclosure, the first logical functional entity may indicate the second indication information corresponding to the target information interaction to the access network device, and/or obtain the second indication information corresponding to the target information interaction determined by the access network device, where the target information interaction includes an information interaction of a target service or a target function or a target servicing, the target information interaction is an information interaction between the first terminal device and the first logical functional entity, where the second indication information is used to indicate second information of the target information interaction sent by the first terminal device to the first logical functional entity, and/or the second indication information is used to indicate third information of the target information interaction sent by the first logical functional entity to the first terminal device. Thus, different second indication information can be allocated to information interactions of different services/functions/servicings of the same network function, and the problem of the UE performing information interactions of multiple services/functions/servicings with the same network function at the same time can be solved.

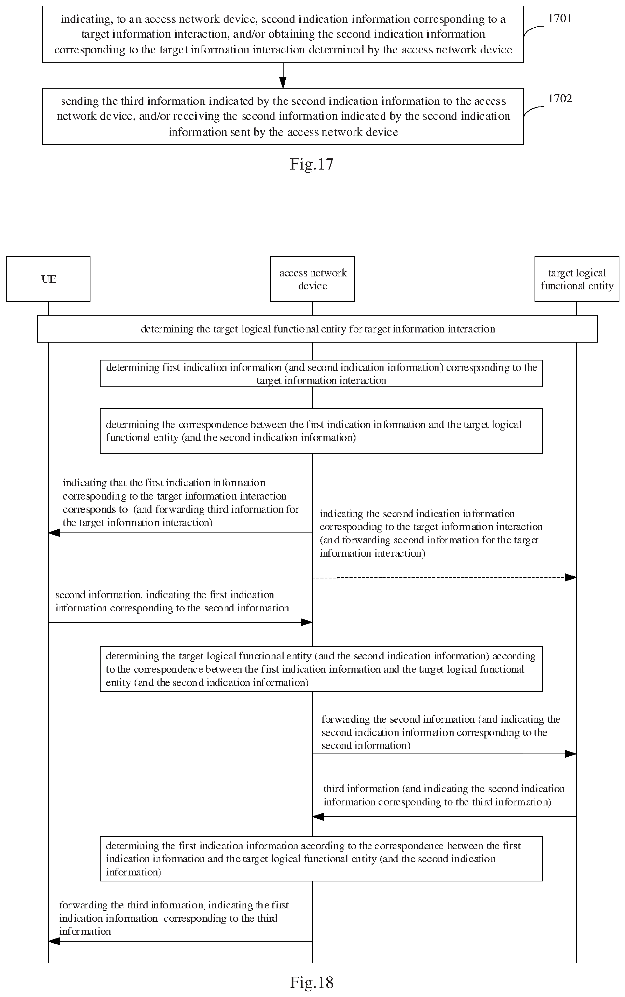

Optionally, in the present disclosure, the first logical functional entity may determine the second indication information without sending the first information for indicating initiating the target information interaction to the access network device, and send the third information indicated by the second indication information to the access network device, and/or receive the second information indicated by the second indication information sent by the access network device. This process will be described below with reference to FIG. 17.

FIG. 17 is a schematic flowchart of another information transmission method provided by an embodiment of the present disclosure.

As shown in FIG. 17, the information transmission method may include steps: 1701-1702.

Step 1701: indicating, to an access network device, second indication information corresponding to a target information interaction, and/or obtaining the second indication information corresponding to the target information interaction determined by the access network device.

It should be noted that the execution process of this step may refer to the execution process of step 1601 in the above embodiment, and the principle is the same, which will not be repeated here.

Step 1702: sending the third information indicated by the second indication information to the access network device, and/or receiving the second information indicated by the second indication information sent by the access network device.

It should be noted that the execution process of this step may refer to the execution process of step 1503 in the above embodiment, and the principle is the same, which will not be repeated here.

The information transmission method provided by the embodiment of the present disclosure, the first logical functional entity may send the third information indicated by the second indication information to the access network device, and/or receive the second information indicated by the second indication information sent by the access network device by indicating the second indication information corresponding to the target information interaction to the access network device and/or obtaining the second indication information corresponding to the target information interaction determined by the access network device without sending the first information for indicating initiating the target information interaction to the access network device. Thus, the first logical functional entity can associate the second indication information with the relevant service information of the target information interaction, so as to be able to identify and process the relevant service information of the target information interaction. Meanwhile, different second indication information can be allocated to information interactions of different services/functions/servicings of the same network function, so that the problem of the UE performing information interactions of multiple services/functions/servicings with the same network function at the same time can be solved.

To clearly illustrate the above embodiments, examples are given below.

FIG. 18 is a schematic flowchart of a method for transmitting information in a scenario provided by an embodiment of the present disclosure.

It should be noted that the "access network" in FIG. 18 is the access network device in each embodiment of the present disclosure. The actions of the access network device may be performed by one or more logical functional entities in the access network. The "UE" in FIG. 18 is the first terminal device in each embodiment of the present disclosure. The "target logical functional entity" in FIG. 18 is the first logical functional entity in each embodiment of the present disclosure.

For the schematic flowchart shown in FIG. 18, the following embodiments exist:

### Embodiment 1:

The UE indicates to the access network that a target information interaction needs to be performed.
1) The UE indicates to the access network that a target information interaction needs to be performed, and the access network determines the target logical functional entity for performing the target information interaction. For example, the target information interaction that the UE needs to perform is the information interaction related to session management of session 1. The UE indicates to the access network that the information interaction related to the session needs to be performed, and the access network determines that the target logical functional entity is, for example, SMF1.
2) The access network determines the first indication information corresponding to the target information interaction, including: the access network allocates the first indication information corresponding to the target information interaction. For example, the access network allocates the first indication information corresponding to the information interaction related to session management of session 1 as 001.
3) The access network determines the corresponding relationship between the first indication information and the target logical functional entity. For example, the access network determines that 001 corresponds to SMF1.
4) The access network indicates the first indication information corresponding to the target information interaction to the UE. For example, the access network indicates to the UE that the information interaction related to session management of session 1 corresponds to the first indication information 001.
5) The UE determines the first indication information corresponding to the target information interaction. For example, the UE determines that the information interaction related to session management of session 1 corresponds to 001.
6) The UE determines that the target logical functional entity in the UE corresponding to the target information interaction corresponds to the first indication information. For example, the UE determines that the target logical functional entity in the UE corresponding to the information interaction related to session management of session 1 is, for example, processing entity 1 corresponding to 001.
7) The UE generates the second information of the target information interaction. The UE determines that the second information corresponds to the first indication information corresponding to the target information interaction. The UE sends the second information to the access network, indicating that the second information corresponds to the first indication information. For example, the UE needs to perform the information interaction related to session management of session 1, and the UE generates the second information of the information interaction related to session management of session 1. According to 001 corresponding to the information interaction related to session management of session 1, the UE determines that the second information corresponds to 001. The UE sends the second information to the access network, and indicates that the second information corresponds to 001.
8) According to the corresponding relationship between the first indication information and the target logical functional entity, the access network determines the target logical functional entity corresponding to the first indication information, and forwards the second information corresponding to the first indication information to the target logical functional entity. For example, the access network determines that SMF1 corresponding to 001, and forwards the second information corresponding to 001 to SMF1.
9) The target logical functional entity generates the third information of the target information interaction, and sends the third information to the access network. For example, SMF1 needs to perform the information interaction related to session management of session 1 with the UE, and SMF1 generates the third information of the information interaction related to session management of session 1 and sends it to the access network.
10) The access network determines the first indication information corresponding to the target logical functional entity, forwards the third information to the UE, and indicates that the third information corresponds to the first indication information. For example, the access network determines that 001 corresponding to SMF1, forwards the third information to the UE, and indicates that the third information corresponds to 001.
11) The UE determines the target logical functional entity in the UE corresponding to the first indication information, and delivers the third information to the target logical functional entity in the UE. For example, the UE determines that 001 corresponds to processing entity 1 in the UE, and delivers the third information to processing entity 1 in the UE.

Optionally, the UE may also need to perform the target information interaction as the information interaction related to session management of session 2. The UE indicates to the access network that the information interaction related to session management needs to be performed, and the access network determines that the target logical functional entity is, for example, SMF2. The access network allocates the first indication information corresponding to the information interaction related to session management of session 2 as 002. The access network determines that the first indication information 002 corresponds to the target logical functional entity SMF2. The access network indicates to the UE that the information interaction related to session management of session 2 corresponds to the first indication information 002. The UE determines that the information interaction related to session management of session 2 corresponds to the first indication information 002. The UE determines that the target logical functional entity in the UE corresponding to the information interaction related to session management of session 2 is, for example, processing entity 1 corresponding to the first indication information 002. The UE generates the second information of the information interaction related to session management of session 2. The UE determines that the second information corresponds to the first indication information 002 corresponding to the information interaction related to session management of session 2. The UE sends the second information to the access network, indicating that the second information corresponds to the first indication information 002. The access network determines the target logical functional entity SMF2 corresponding to the first indication information 002, and forwards the second information corresponding to the first indication information 002 to the target logical functional entity SMF2. The target logical functional entity SMF2 generates the third information of the information interaction related to session management of session 2, and sends the third information to the access network. The access network determines the first indication information 002 corresponding to the target logical functional entity SMF2, forwards the third information to the UE, and indicates that the third information corresponds to the first indication information 002. The UE determines that the first indication information 002 corresponds to processing entity 1 in the UE, and delivers the third information to processing entity 1 in the UE.

Optionally, the UE may also need to perform the target information interaction as a sensing-related information interaction. The UE indicates to the access network that a sensing-related information interaction needs to be performed, and the access network determines that the target logical functional entity is, for example, SF1. The access network allocates the first indication information corresponding to the sensing-related information interaction as 004. The access network determines that the first indication information 004 corresponds to the target logical functional entity SF1. The access network indicates to the UE that the sensing-related information interaction corresponds to the first indication information 004. The UE determines that the sensing-related information interaction corresponds to the first indication information 004. The UE determines that the target logical functional entity in the UE corresponding to the sensing-related information interaction is, for example, processing entity 2 corresponding to the first indication information 004. The UE generates the second information of the sensing-related information interaction. The UE determines that the second information corresponds to the first indication information 004 corresponding to the sensing-related information interaction. The UE sends the second information to the access network, indicating that the second information corresponds to the first indication information 004. The access network determines the target logical functional entity SF1 corresponding to the first indication information 004, and forwards the second information corresponding to the first indication information 004 to SF1. The target logical functional entity SF1 generates the eighth information corresponding to the sensing-related information interaction, and sends the eighth information to the access network. The access network determines the first indication information 004 corresponding to the target logical functional entity SF1, forwards the eighth information to the UE, and indicates that the eighth information corresponds to the first indication information 004. The UE determines that the first indication information 004 corresponds to processing entity 2 in the UE, and delivers the eighth information to processing entity 2 in the UE.

### Embodiment 2:

Multiple service/function/servicing-related information interactions correspond to one first indication information. For example, both the information interaction related to session management of session 1 and the information interaction related to session management of session 3 correspond to the logical functional entity SMF1. Both the information interaction related to session management of session 1 and the information interaction related to session management of session 3 correspond to the first indication information 001.
1) The UE indicates to the access network that a target information interaction needs to be performed, and the access network determines the target logical functional entity for performing the target information interaction; where, the target information interaction that the UE needs to perform is, for example, the information interaction related to session management of session 3. The UE indicates to the access network that the information interaction related to the session needs to be performed, and the access network determines that the target logical functional entity is, for example, SMF1.
2) The access network determines the first indication information corresponding to the target information interaction, including: the access network determines that the first indication information corresponding to the target information interaction is the first indication information corresponding to the target logical functional entity. For example, the first indication information corresponding to the target logical functional entity SMF1 is 001, and the access network determines that the first indication information corresponding to the target information interaction is 001.
3) Same as 4) in Embodiment 1.
4) The UE determines the first indication information corresponding to the target information interaction. For example, the UE determines that the information interaction related to session management of session 3 corresponds to 001.
5) The UE determines that the target logical functional entity in the UE corresponding to the target information interaction corresponds to the first indication information. For example, the UE determines that the target logical functional entity in the UE corresponding to the information interaction related to session management of session 3 is, for example, processing entity 1 corresponding to 001.
6) The UE generates the second information of the target information interaction. The UE determines that the second information corresponds to the first indication information corresponding to the target information interaction. The UE sends the second information to the access network, indicating the first indication information corresponding to the second information. For example, the UE needs to perform the information interaction related to session management of session 3, and the UE generates the second information related to session management of session 3. According to 001 corresponding to the session management of session 3, the UE determines that the second information corresponds to 001. The UE sends the second information to the access network, and indicates that the second information corresponds to 001.
7) According to the corresponding relationship between the first indication information and the target logical functional entity, the access network determines the target logical functional entity corresponding to the first indication information, and forwards the second information corresponding to the first indication information to the target logical functional entity. For example, the access network determines that SMF1 corresponding to 001, and forwards the third information corresponding to 001 to SMF1.
8) The target logical functional entity generates the third information of the target information interaction, and sends the third information to the access network. For example, SMF1 needs to perform the information interaction related to session management of session 3 with the UE, and SMF1 generates the third information related to session management of session 3 and sends it to the access network.
9) The access network determines the first indication information corresponding to the target logical functional entity, forwards the third information to the UE, and indicates that the third information corresponds to the first indication information. For example, the access network determines that 001 corresponding to SMF1, forwards the second information to the UE, and indicates that the second information corresponds to 001.

The UE determines the target logical functional entity in the UE corresponding to the first indication information, and delivers the third information to the target logical functional entity in the UE. For example, the UE determines that the target logical functional entity in the UE corresponding to 001 is, for example, processing entity 1, and delivers the third information to processing entity 1 in the UE.

Embodiment 2 can be combined with Embodiment 1.

### Embodiment 3:

The logical functional entity obtains the second indication information.

1)-2) Same as 1)-2) in Embodiment 1.

3) The access network determines the second indication information corresponding to the target information interaction. For example, the access network allocates the second indication information corresponding to the information interaction related to session management of session 1 as 01.

4) The access network determines the corresponding relationship between the first indication information and the target logical functional entity. For example, the access network determines that 001 corresponds to SMF1. The access network also determines the corresponding relationship between the first indication information and the second indication information. For example, the access network determines that 001 corresponds to 01. It can also be understood that the access network determines the corresponding relationship between the first indication information and <the target logical functional entity, the second indication information>. For example, the access network determines that 001 corresponds to <SMF1, 01>.

5)-8) Same as 4)-7) in Embodiment 1.

9) According to the corresponding relationship between the first indication information and the target logical functional entity, the access network determines the target logical functional entity corresponding to the first indication information, and forwards the second information corresponding to the first indication information to the target logical functional entity. For example, the access network determines that SMF1 corresponding to 001, and forwards the second information corresponding to 001 to SMF1. The access network also determines the second indication information corresponding to the first indication information according to the corresponding relationship between the first indication information and the second indication information, and indicates to the target logical functional entity that the second information corresponds to the second indication information. For example, the access network determines that the second indication information 01 corresponding to 001, and indicates to SMF1 that the second information corresponds to 01.

It can also be understood that the access network determines <the target logical functional entity, the second indication information> corresponding to the first indication information according to the corresponding relationship between the first indication information and <the target logical functional entity, the second indication information>, forwards the second information to the target logical functional entity, and indicates that the second information corresponds to the second indication information. For example, the access network determines <SMF1, 01> corresponding to 001, forwards the second information to SMF1, and indicates that the second information corresponds to 01.

10) The target logical functional entity determines that the target information interaction corresponding to the second information corresponds to the second indication information. For example, SMF1 determines that the information interaction related to session management of session 1 corresponding to the second information corresponds to 01.

11) The target logical functional entity generates the third information of the target information interaction. The target logical functional entity determines that the third information corresponds to the second indication information corresponding to the target information interaction. The target logical functional entity sends the third information to the access network, indicating that the third information corresponds to the second indication information. For example, SMF1 needs to perform the information interaction related to session management of session 1 with the UE, and SMF1 generates the third information of the information interaction related to session management of session 1. According to 01 corresponding to the information interaction related to session management of session 1, SMF1 determines that the third information corresponds to 01. SMF1 sends the third information to the access network, and indicates that the third information corresponds to 01.

12) The access network determines the first indication information corresponding to <the target logical functional entity, the second indication information>, forwards the third information to the UE, and indicates that the third information corresponds to the first indication information. For example, the access network determines 001 corresponding to <SMF1, 01>, forwards the third information to the UE, and indicates that the third information corresponds to 001.

13) Same as 11) in Embodiment 1.

Optionally, the UE may also need to perform the target information interaction as the information interaction related to session management of session 2. The UE indicates to the access network that the information interaction related to session management needs to be performed, and the access network determines that the target logical functional entity is, for example, SMF2. The access network allocates the first indication information corresponding to the information interaction related to session management of session 2 as 002. The access network allocates the second indication information corresponding to the information interaction related to session management of session 2 as 01. The access network determines that the first indication information 002 corresponds to the target logical functional entity SMF2. The access network also determines that the first indication information 002 corresponds to the second indication information 01. The access network indicates to the UE that the information interaction related to session management of session 2 corresponds to the first indication information 002. The UE determines that the information interaction related to session management of session 2 corresponds to the first indication information 002. The UE determines that the target logical functional entity in the UE corresponding to the information interaction related to session management of session 2 is, for example, processing entity 1 corresponding to the first indication information 002. The UE generates the second information of the information interaction related to session management of session 2. The UE determines that the second information corresponds to the first indication information 002 corresponding to the information interaction related to session management of session 2. The UE sends the second information to the access network, indicating that the second information corresponds to 002. The access network determines the target logical functional entity SMF2 corresponding to the first indication information 002, and forwards the second information corresponding to the first indication information 002 to the target logical functional entity SMF2. The access network also determines the second indication information 01 corresponding to the first indication information 002, and indicates to the target logical functional entity SMF2 that the second information corresponds to the second indication information 01. The target logical functional entity SMF2 determines that the information interaction related to session management of session 2 corresponding to the second information corresponds to the second indication information 01. The target logical functional entity SMF2 generates the third information related to session management of session 2, and sends the third information to the access network. According to the second indication information 01 corresponding to the information interaction related to session management of session 2, the target logical functional entity SMF2 determines the second indication information 01 corresponding to the third information, and indicates to the access network that the third information corresponds to the second indication information 01. The access network determines the first indication information 002 corresponding to <the target logical functional entity SMF2, the second indication information 01>, forwards the third information to the UE, and indicates that the third information corresponds to the first indication information 002. The UE determines that the first indication information 002 corresponds to the target logical functional entity in the UE, such as processing entity 1, and delivers the third information to processing entity 1 in the UE.

Optionally, the UE may also need to perform the target information interaction as the information interaction related to session management of session 3. The UE indicates to the access network that the information interaction related to session management needs to be performed, and the access network determines that the target logical functional entity is, for example, SMF1. The access network allocates the first indication information corresponding to the information interaction related to session management of session 3 as 003. The access network allocates the second indication information corresponding to the information interaction related to session management of session 3 as 02. The access network determines that the first indication information 003 corresponds to the target logical functional entity SMF1. The access network also determines that the first indication information 003 corresponds to the second indication information 02. The access network indicates to the UE that the information interaction related to session management of session 3 corresponds to the first indication information 003. The UE determines that the information interaction related to session management of session 3 corresponds to the first indication information 003. The UE determines that the target logical functional entity in the UE corresponding to the information interaction related to session management of session 3 is, for example, processing entity 1 corresponding to the first indication information 003. The UE generates the second information of the information interaction related to session management of session 3. The UE determines that the second information corresponds to the first indication information 003 corresponding to the information interaction related to session management of session 3. The UE sends the second information to the access network, indicating that the second information corresponds to the first indication information 003. The access network determines the target logical functional entity SMF1 corresponding to the first indication information 003, and forwards the second information corresponding to the first indication information 003 to the target logical functional entity SMF1. The access network also determines the second indication information 02 corresponding to the first indication information 003, and indicates to the target logical functional entity SMF1 that the second information corresponds to the second indication information 02. The target logical functional entity SMF1 determines that the information interaction related to session management of session 3 corresponding to the second information corresponds to the second indication information 02. The target logical functional entity SMF1 generates the third information of the information interaction related to session management of session 3, and sends the third information to the access network. According to the second indication information 02 corresponding to the information interaction related to session management of session 3, the target logical functional entity SMF1 determines the second indication information 02 corresponding to the third information, and indicates to the access network that the third information corresponds to the second indication information 02. The access network determines the first indication information 003 corresponding to <the target logical functional entity SMF1, the second indication information 02>, forwards the third information to the UE, and indicates that the third information corresponds to the first indication information 003. The UE determines that the first indication information 003 corresponds to the target logical functional entity in the UE, such as processing entity 1, and delivers the third information to processing entity 1 in the UE.

Optionally, the UE may also need to perform the target information interaction as a sensing-related information interaction. The UE indicates to the access network that a sensing-related information interaction needs to be performed, and the access network determines that the target logical functional entity is, for example, SF1. The access network allocates the first indication information corresponding to the sensing-related information interaction as 004. The access network allocates the second indication information corresponding to the sensing-related information interaction as 01. The access network determines that the first indication information 004 corresponds to the target logical functional entity SF1. The access network also determines that the first indication information 004 corresponds to the second indication information 01. The access network indicates to the UE that the sensing-related information interaction corresponds to the first indication information 004. The UE determines that the sensing-related information interaction corresponds to the first indication information 004. The UE determines that the target logical functional entity in the UE corresponding to the sensing-related information interaction is, for example, processing entity 2 corresponding to the first indication information 004. The UE generates the second information of the sensing-related information interaction. The UE determines that the second information corresponds to the first indication information 004 corresponding to the sensing-related information interaction. The UE sends the second information to the access network, indicating that the second information corresponds to 004. The access network determines the target logical functional entity SF1 corresponding to the first indication information 004, and forwards the second information corresponding to the first indication information to SF1. The access network also determines the second indication information 01 corresponding to the first indication information 004, and indicates to the target logical functional entity SF1 that the second information corresponds to the second indication information 01. The target logical functional entity SF1 determines that the sensing-related information interaction corresponding to the second information corresponds to the second indication information 01. The target logical functional entity SF1 generates the third information of the sensing-related information interaction, and sends the third information to the access network. According to the second indication information 01 corresponding to the sensing-related information interaction, the target logical functional entity SF1 determines the second indication information 01 corresponding to the third information, and indicates to the access network that the third information corresponds to the second indication information 01. The access network determines the first indication information 004 corresponding to <the target logical functional entity SF1, the second indication information 01>, forwards the third information to the UE, and indicates that the third information corresponds to the first indication information 004. The UE determines that the first indication information 004 corresponds to the target logical functional entity in the UE, such as processing entity 2, and delivers the third information to processing entity 2 in the UE.

In the embodiment of the present disclosure, when the second indication information is the same as the first indication information, the access network does not need to determine the second indication information corresponding to the target information interaction (in step 3), the access network does not need to further determine the corresponding relationship between the first indication information and the second indication information (in step 4), the access network does not need to further determine the second indication information corresponding to the first indication information according to the corresponding relationship between the first indication information and the second indication information (in step 9), and the access network does not need to determine the first indication information corresponding to <the target logical functional entity, the second indication information> (in step 12).

### Embodiment 4:

The target logical functional entity indicates to the access network that a target information interaction with the UE needs to be performed.
1) The target logical functional entity indicates to the access network that a target information interaction with the UE needs to be performed. For example, the logical functional entity 1 needs to perform an information interaction related to measurement reporting of data 1 with the UE. The logical functional entity 1 indicates to the access network that an information interaction related to measurement reporting of data 1 with the UE needs to be performed. The access network determines that the target logical functional entity is the logical functional entity 1. Optionally, the target logical functional entity sends the third information of the target information interaction to the access network. For example, the logical functional entity 1 sends the third information of the information interaction related to measurement reporting of data 1 to the access network.
2) Same as 2) in Embodiment 1.
3) The access network determines the corresponding relationship between the first indication information and the target logical functional entity. For example, the access network determines that 001 corresponds to the logical functional entity 1.
4) The access network indicates the first indication information corresponding to the target information interaction to the UE. For example, the access network indicates to the UE that the information interaction related to measurement reporting of data 1 corresponds to the first indication information 001. Optionally, the access network sends the third information of the target information interaction to the UE. For example, the access network sends the third information of the information interaction related to measurement reporting of data 1 to the UE. The access network may also indicate the type of the target service or target function or target servicing corresponding to the target information interaction to the UE.
5) The UE determines the target logical functional entity in the UE corresponding to the target information interaction. The UE may determine the target logical functional entity in the UE corresponding to the target information interaction that matches the type of the target service or target function or target servicing corresponding to the target information interaction. For example, the UE determines that the information interaction related to measurement reporting of data 1 corresponds to processing entity 1 in the UE. Optionally, the UE delivers the third information of the target information interaction to the target logical functional entity in the UE. For example, the UE delivers the third information of the information interaction related to measurement reporting of data 1 to processing entity 1 in the UE. The UE determines that the target logical functional entity in the UE corresponds to the first indication information. For example, the UE determines that processing entity 1 in the UE corresponds to 001.
6) The UE determines the first indication information corresponding to the target information interaction. The UE may determine that the target information interaction corresponding to the third information corresponds to the first indication information. For example, the UE determines that the information interaction related to measurement reporting of data 1 corresponds to 001.
7) The UE generates the second information of the target information interaction. The UE determines that the second information corresponds to the first indication information corresponding to the target information interaction. The UE sends the second information to the access network, indicating that the second information corresponds to the first indication information. For example, the UE needs to perform the information interaction related to measurement reporting of data 1, and the UE generates the second information of the information interaction related to measurement reporting of data 1. According to 001 corresponding to the information interaction related to measurement reporting of data 1, the UE determines that the second information corresponds to 001. The UE sends the second information to the access network, and indicates that the second information corresponds to 001.
8) According to the corresponding relationship between the first indication information and the target logical functional entity, the access network determines the target logical functional entity corresponding to the first indication information, and forwards the second information corresponding to the first indication information to the target logical functional entity. For example, the access network determines that the logical functional entity 1 corresponding to 001, and forwards the second information corresponding to 001 to the logical functional entity 1.
9) The target logical functional entity generates new third information of the target information interaction, and sends the new third information to the access network. For example, the logical functional entity 1 needs to perform the information interaction related to measurement reporting of data 1 with the UE, and the logical functional entity 1 generates new third information of the information interaction related to measurement reporting of data 1 and sends it to the access network.
10) The access network determines the first indication information corresponding to the target logical functional entity, forwards the new third information to the UE, and indicates that the new third information corresponds to the first indication information. For example, the access network determines that 001 corresponding to the logical functional entity 1, forwards the new third information to the UE, and indicates that the new third information corresponds to 001.
11) The UE determines the target logical functional entity in the UE corresponding to the first indication information, and delivers the new third information to the target logical functional entity in the UE. For example, the UE determines that 001 corresponds to processing entity 1 in the UE, and delivers the new third information to processing entity 1 in the UE.

Optionally, another target logical functional entity, that is, the logical functional entity 2, may need to perform the target information interaction as measurement reporting of data 2 with the UE. The logical functional entity 2 indicates to the access network that an information interaction related to measurement reporting of data 2 with the UE needs to be performed. The access network determines that the target logical functional entity is the logical functional entity 2. The logical functional entity 2 sends the third information of the information interaction related to measurement reporting of data 2 to the access network. The access network allocates the first indication information corresponding to the information interaction related to measurement reporting of data 2 as 002. The access network determines that the first indication information 002 corresponds to the logical functional entity 2. The access network indicates to the UE that the information interaction related to measurement reporting of data 2 corresponds to the first indication information 002. The access network sends the third information of the information interaction related to measurement reporting of data 2 to the UE. The UE determines that the target logical functional entity in the UE corresponding to the information interaction related to measurement reporting of data 2 is, for example, processing entity 1. The UE determines that processing entity 1 in the UE corresponds to the first indication information 002. The UE determines that the information interaction related to measurement reporting of data 2 corresponds to the first indication information 002. The UE generates the second information of the information interaction related to measurement reporting of data 2. The UE determines that the second information corresponds to the first indication information 002 corresponding to the information interaction related to measurement reporting of data 2. The UE sends the second information to the access network, indicating that the second information corresponds to the first indication information 002. The access network determines the logical functional entity 2 corresponding to the first indication information 002, and forwards the second information corresponding to the first indication information to the logical functional entity 2. The logical functional entity 2 generates new third information of the information interaction related to measurement reporting of data 2, and sends the new third information to the access network. The access network determines the first indication information 002 corresponding to the logical functional entity 2, forwards the new third information to the UE, and indicates that the new third information corresponds to the first indication information 002. The UE determines that the first indication information 002 corresponds to the target logical functional entity in the UE, such as processing entity 1, and delivers the new third information to processing entity 1 in the UE.

Optionally, the logical functional entity 1 may need to perform the target information interaction as an information interaction related to measurement reporting of data 3 with the UE. The logical functional entity 1 sends the third information of the information interaction related to measurement reporting of data 3 to the access network. The access network determines the first indication information 001 corresponding to the logical functional entity 1, forwards the third information to the UE, and indicates that the third information corresponds to the first indication information 001. The UE determines the target logical functional entity in the UE corresponding to the first indication information, and delivers the third information to the target logical functional entity in the UE. For example, the UE determines that 001 corresponds to processing entity 1 in the UE, and delivers the third information to processing entity 1 in the UE.

### Embodiment 5:

The target logical functional entity indicates to the access network that a target information interaction with the UE needs to be performed. The logical functional entity obtains the second indication information.

1)-2) Same as 1)-2) in Embodiment 4.

3) The access network determines the second indication information corresponding to the target information interaction. For example, the access network allocates the second indication information corresponding to the information interaction related to measurement reporting of data 1 as 01.

4) The access network determines the corresponding relationship between the first indication information and the target logical functional entity. For example, the access network determines that 001 corresponds to the logical functional entity 1. The access network also determines the corresponding relationship between the first indication information and the second indication information. For example, the access network determines that 001 corresponds to 01. It can also be understood that the access network determines the corresponding relationship between the first indication information and <the target logical functional entity, the second indication information>. For example, the access network determines that 001 corresponds to <the logical functional entity 1, 01>.

5)-8) Same as 4)-7) in Embodiment 4.

9) According to the corresponding relationship between the first indication information and the target logical functional entity, the access network determines the target logical functional entity corresponding to the first indication information, and forwards the second information corresponding to the first indication information to the target logical functional entity. For example, the access network determines that the logical functional entity 1 corresponding to 001, and forwards the second information corresponding to 001 to the logical functional entity 1. The access network also determines the second indication information corresponding to the first indication information according to the corresponding relationship between the first indication information and the second indication information, and indicates to the target logical functional entity that the second information corresponds to the second indication information. For example, the access network determines that the second indication information 01 corresponding to 001, and indicates to the logical functional entity 1 that the first information corresponds to 01.

It can also be understood that the access network determines <the target logical functional entity, the second indication information> corresponding to the first indication information according to the corresponding relationship between the first indication information and <the target logical functional entity, the second indication information>, forwards the second information to the target logical functional entity, and indicates that the second information corresponds to the second indication information. For example, the access network determines <the logical functional entity 1, 01> corresponding to 001, forwards the first information to the logical functional entity 1, and indicates that the first information corresponds to 01.

10) The target logical functional entity determines that the target information interaction corresponding to the first information corresponds to the second indication information. For example, the logical functional entity 1 determines that the information interaction related to measurement reporting of data 1 corresponding to the first information corresponds to 01.

11) The target logical functional entity generates new third information of the target information interaction, and sends the new third information to the access network. For example, the logical functional entity 1 needs to perform the information interaction related to measurement reporting of data 1 with the UE, and the logical functional entity 1 generates new third information of the information interaction related to measurement reporting of data 1 and sends it to the access network. According to the second indication information corresponding to the target information interaction, the target logical functional entity determines the second indication information corresponding to the new third information, and indicates to the access network that the new third information corresponds to the second indication information. For example, according to 01 corresponding to the information interaction related to measurement reporting of data 1, the logical functional entity 1 determines 01 corresponding to the new third information of the information interaction related to measurement reporting of data 1, and indicates to the access network that the new third information corresponds to 01.

12) The access network determines the first indication information corresponding to <the target logical functional entity, the second indication information>, forwards the new third information to the UE, and indicates that the new third information corresponds to the first indication information. For example, the access network determines 001 corresponding to <the logical functional entity 1, 01>, forwards the new third information to the UE, and indicates that the new third information corresponds to 001.

13) Same as 11) in Embodiment 4.

Optionally, another target logical functional entity, that is, the logical functional entity 2, may indicate to the access network that a target information interaction as an information interaction related to measurement reporting of data 2 with the UE needs to be performed. The logical functional entity 2 indicates to the access network that an information interaction related to measurement reporting of data 2 with the UE needs to be performed. The access network determines that the target logical functional entity is the logical functional entity 2. The logical functional entity 2 sends the third information of the information interaction related to measurement reporting of data 2 to the access network. The access network allocates the first indication information corresponding to the information interaction related to measurement reporting of data 2 as 002. The access network allocates the second indication information corresponding to the information interaction related to measurement reporting of data 2 as 01. The access network determines that the first indication information 002 corresponds to the logical functional entity 2. The access network also determines that the first indication information 002 corresponds to the second indication information 01. The access network indicates to the UE that the information interaction related to measurement reporting of data 2 corresponds to the first indication information 002. The access network sends the third information of the information interaction related to measurement reporting of data 2 to the UE. The UE determines that the target logical functional entity in the UE corresponding to the information interaction related to measurement reporting of data 2 is, for example, processing entity 1. The UE determines that processing entity 1 in the UE corresponds to the first indication information 002. The UE determines that the information interaction related to measurement reporting of data 2 corresponds to the first indication information 002. The UE generates the second information of the information interaction related to measurement reporting of data 2. The UE determines that the second information corresponds to the first indication information 002 corresponding to the information interaction related to measurement reporting of data 2. The UE sends the second information to the access network, indicating that the second information corresponds to the first indication information 002. The access network determines the logical functional entity 2 corresponding to the first indication information 002, and forwards the second information corresponding to the first indication information to the logical functional entity 2. The access network also determines the second indication information 01 corresponding to the first indication information 002, and indicates to the logical functional entity 2 that the second information corresponds to the second indication information 01. The logical functional entity 2 determines that the information interaction related to measurement reporting of data 2 corresponding to the second information corresponds to the second indication information 01. The logical functional entity 2 generates new third information of the information interaction related to measurement reporting of data 2, and sends the new third information to the access network. According to the second indication information 01 corresponding to the information interaction related to measurement reporting of data 2, the logical functional entity 2 determines the second indication information 01 corresponding to the new third information, and indicates to the access network that the new third information corresponds to the second indication information 01. The access network determines the first indication information 002 corresponding to <the logical functional entity 2, the second indication information 01>, forwards the new third information to the UE, and indicates that the new third information corresponds to the first indication information 002. The UE determines that the first indication information 002 corresponds to the target logical functional entity in the UE, such as processing entity 1, and delivers the new third information to processing entity 1 in the UE.

Optionally, the logical functional entity 1 may also indicate to the access network that a target information interaction as an information interaction related to measurement reporting of data 3 with the UE needs to be performed. The logical functional entity 1 indicates to the access network that an information interaction related to measurement reporting of data 3 with the UE needs to be performed. The access network determines that the target logical functional entity is the logical functional entity 1. The logical functional entity 1 sends the third information of the information interaction related to measurement reporting of data 3 to the access network. The access network allocates the first indication information corresponding to the information interaction related to measurement reporting of data 3 as 003. The access network allocates the second indication information corresponding to the information interaction related to measurement reporting of data 3 as 02. The access network determines that the first indication information 003 corresponds to the logical functional entity 1. The access network also determines that the first indication information 003 corresponds to the second indication information 02. The access network indicates to the UE that the information interaction related to measurement reporting of data 3 corresponds to the first indication information 003. The access network sends the third information of the information interaction related to measurement reporting of data 3 to the UE. The UE determines that the target logical functional entity in the UE corresponding to the information interaction related to measurement reporting of data 3 is, for example, processing entity 1. The UE determines that processing entity 1 in the UE corresponds to the first indication information 003. The UE determines that the information interaction related to measurement reporting of data 3 corresponds to the first indication information 003. The UE generates the second information of the information interaction related to measurement reporting of data 3. The UE determines that the second information corresponds to the first indication information 003 corresponding to the information interaction related to measurement reporting of data 3. The UE sends the second information to the access network, indicating that the second information corresponds to the first indication information 003. The access network determines the logical functional entity 1 corresponding to the first indication information 003, and forwards the second information corresponding to the first indication information 003 to the logical functional entity 1. The access network also determines the second indication information 02 corresponding to the first indication information 003, and indicates to the logical functional entity 1 that the second information corresponds to the second indication information 02. The logical functional entity 1 determines that the information interaction related to measurement reporting of data 3 corresponding to the second information corresponds to the second indication information 02. The logical functional entity 1 generates new third information of the information interaction related to measurement reporting of data 3, and sends the new third information to the access network. According to the second indication information 02 corresponding to the information interaction related to measurement reporting of data 3, the logical functional entity 1 determines the second indication information 02 corresponding to the new third information, and indicates to the access network that the new third information corresponds to the second indication information 02. The access network determines the first indication information 003 corresponding to <the logical functional entity 1, the second indication information 02>, forwards the new third information to the UE, and indicates that the new third information corresponds to the first indication information 003. The UE determines that the first indication information 003 corresponds to the target logical functional entity in the UE, such as processing entity 1, and delivers the new third information to processing entity 1 in the UE.

Optionally, another target logical functional entity SF1 may need to perform a target information interaction as a sensing-related information interaction with the UE. SF1 indicates to the access network that a sensing-related information interaction with the UE needs to be performed. The access network determines that the target logical functional entity is SF1. The target logical functional entity SF1 sends the third information of the sensing-related information interaction to the access network. The access network allocates the first indication information corresponding to the sensing-related information interaction as 004. The access network allocates the second indication information corresponding to the sensing-related information interaction as 01. The access network determines that the first indication information 004 corresponds to the target logical functional entity SF1. The access network also determines that the first indication information 004 corresponds to the second indication information 01. The access network indicates to the UE that the sensing-related information interaction corresponds to the first indication information 004. The access network sends the third information of the sensing-related information interaction to the UE. The UE determines that the target logical functional entity in the UE, such as processing entity 2, corresponds to the first indication information 004. The UE determines that the sensing-related information interaction corresponds to the first indication information 004. The UE generates the second information of the sensing-related information interaction. The UE determines that the second information corresponds to the first indication information 004 corresponding to the sensing-related information interaction. The UE sends the second information to the access network, indicating that the second information corresponds to the first indication information 004. The access network determines the target logical functional entity SF1 corresponding to the first indication information 004, and forwards the second information corresponding to the first indication information 004 to SF1. The access network also determines the second indication information 01 corresponding to the first indication information 004, and indicates to the target logical functional entity SF1 that the second information corresponds to the second indication information 01. The target logical functional entity SF1 determines that the sensing-related information interaction corresponding to the second information corresponds to the second indication information 01. The target logical functional entity SF1 generates new third information of the sensing-related information interaction, and sends the new third information to the access network. According to the second indication information 01 corresponding to the sensing-related information interaction, the target logical functional entity SF1 determines the second indication information 01 corresponding to the new third information, and indicates to the access network that the new third information corresponds to the second indication information 01. The access network determines the first indication information 004 corresponding to <the target logical functional entity SF1, the second indication information 01>, forwards the new third information to the UE, and indicates that the new third information corresponds to the first indication information 004. The UE determines that the first indication information 004 corresponds to the target logical functional entity in the UE, such as processing entity 2, and delivers the new third information to processing entity 2 in the UE.

In the embodiment of the present disclosure, when the second indication information is the same as the first indication information, the access network does not need to determine the second indication information corresponding to the target information interaction (in step 3), the access network does not need to further determine the corresponding relationship between the first indication information and the second indication information (in step 4), the access network does not need to further determine the second indication information corresponding to the first indication information according to the corresponding relationship between the first indication information and the second indication information (in step 9), and the access network does not need to determine the first indication information corresponding to <the target logical functional entity, the second indication information> (in step 12).

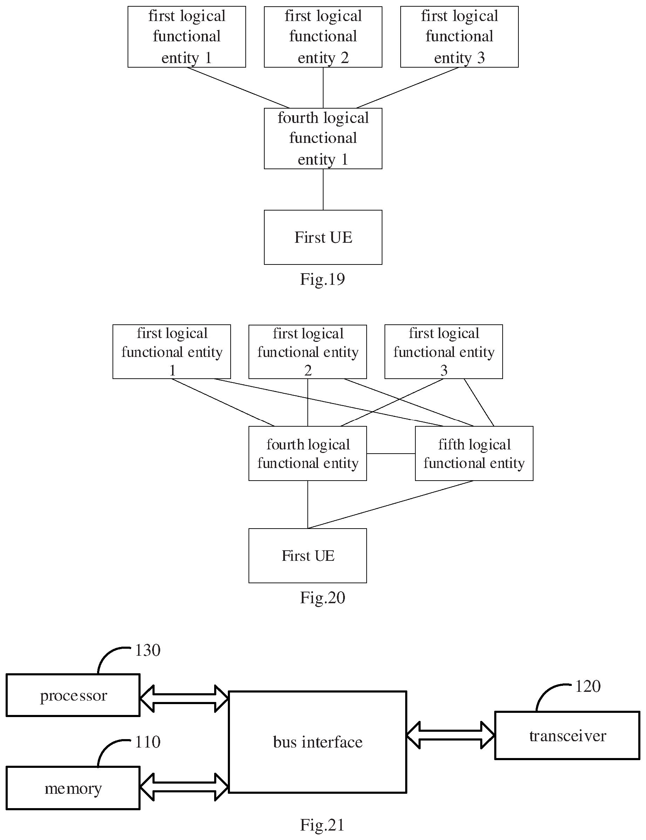

To clearly illustrate the connection relationship between the access network device, the first terminal device, and the first logical functional entity in the present disclosure, the embodiment of the present disclosure provides a schematic diagram of the connection relationship between the access network device, the first terminal device, and the first logical functional entity as shown in FIG. 19.

In FIG. 19, the fourth logical functional entity is a logical functional entity in the access network, which performs the actions of the access network device in each embodiment of the present disclosure. That is, the signaling routing control function of the access network and the signaling routing function of the access network are implemented by the fourth logical functional entity, that is, the actions related to the signaling routing control function of the access network and the signaling routing function of the access network are performed by the fourth logical functional entity. The first logical functional entity 1, the first logical functional entity 2, and the first logical functional entity 3 are the first logical functional entities that perform target information interaction with the first terminal device. Each of the first logical functional entity 1, the first logical functional entity 2, and the first logical functional entity 3 may perform the actions of the first logical functional entity in each embodiment of the present disclosure.

It should be noted that the connections in FIG. 19 are logical connections, and it is not limited that there is a direct connection between two entities. The number of first logical functional entities in FIG. 19 is only an example, and the embodiment of the present disclosure does not limit the number of first logical functional entities. The number of first logical functional entities may be one or more.

Since the actions of the access network device in the present disclosure may be performed by one or more logical functional entities in the access network, optionally, FIG. 20 shows the connection relationship between the access network device, the first terminal device, and the first logical functional entity when the actions of the access network device in each embodiment are performed by two logical functional entities in the access network. In FIG. 20, the fifth logical functional entity is a logical functional entity in the RAN, which performs the actions related to the signaling routing control function of the access network device in the present disclosure; the sixth logical functional entity is a logical functional entity in the RAN, which performs the actions related to the signaling routing function of the access network device in the present disclosure. The first logical functional entity 1, the first logical functional entity 2, and the first logical functional entity 3 are the first logical functional entities that perform target information interaction with the first terminal device. Each of the first logical functional entity 1, the first logical functional entity 2, and the first logical functional entity 3 may perform the actions of the first logical functional entity in each embodiment of the present disclosure.

The fifth logical functional entity sends the corresponding relationship between the first indication information and the first logical functional entity to the sixth logical functional entity. Optionally, the fifth logical functional entity sends the corresponding relationship between the first indication information and the second indication information to the sixth logical functional entity.

For example, the following is performed by the fifth logical functional entity:
1) The access network determines the target logical functional entity that needs to perform the target information interaction with the UE;
2) The access network determines the first indication information corresponding to the target information interaction; optionally, the access network determines the second indication information corresponding to the target information interaction.
3) The access network determines the corresponding relationship between the first indication information and the target logical functional entity; optionally, the access network determines the corresponding relationship between the first indication information and the second indication information.
4) The access network indicates the first indication information corresponding to the target information interaction to the UE;
5) The fifth logical functional entity indicates the corresponding relationship between the first indication information and the target logical functional entity to the sixth logical functional entity. The fifth logical functional entity may also indicate the address or identifier of the target logical functional entity to the sixth logical functional entity. Optionally, the fifth logical functional entity indicates the corresponding relationship between the first indication information and the second indication information to the sixth logical functional entity.

The following is performed by the sixth logical functional entity:
6) The access network receives the second information and the first indication information from the UE, and the first indication information corresponds to the second information;
7) According to the corresponding relationship between the first indication information and the target logical functional entity, the access network determines the target logical functional entity corresponding to the first indication information, and forwards the second information to the target logical functional entity.

4) may also be performed by the sixth logical functional entity.

For example, the fifth logical functional entity performs steps 301-302 in the above embodiment. Correspondingly, the access network device in steps 801-802 in the above embodiment is the fifth logical functional entity; the access network device in step 1101 in the above embodiment is the fifth logical functional entity; the access network device in step 1301 in the above embodiment is the fifth logical functional entity; the access network device in step 1601 in the above embodiment is the fifth logical functional entity.

Alternatively, the fifth logical functional entity performs steps 401-402 in the above embodiment, the fifth logical functional entity indicates to the sixth logical functional entity that: the target information interaction is an information interaction between the first terminal device and the first logical functional entity, and the target information interaction corresponds to the first indication information, and the sixth logical functional entity performs step 403 in the above embodiment. Correspondingly, the access network device in steps 901-902 in the above embodiment is the fifth logical functional entity, and the access network device in step 903 is the sixth logical functional entity; the access network device in steps 1001-1002 in the above embodiment is the fifth logical functional entity, and the access network device in step 1003 is the sixth logical functional entity; the access network device in step 1201 in the above embodiment is the fifth logical functional entity, and the access network device in step 1202 is the sixth logical functional entity; the access network device in step 1401 in the above embodiment is the fifth logical functional entity, and the access network device in step 1402 is the sixth logical functional entity.

Alternatively, the fifth logical functional entity performs steps 501-502 in the above embodiment, the fifth logical functional entity indicates to the sixth logical functional entity that: the target information interaction is an information interaction between the first terminal device and the first logical functional entity, and the target information interaction corresponds to the first indication information, and the sixth logical functional entity performs steps 503-504 in the above embodiment. Correspondingly, the access network device in steps 901-902 in the above embodiment is the fifth logical functional entity, and the access network device in step 903 is the sixth logical functional entity; the access network device in steps 1001-1002 in the above embodiment is the fifth logical functional entity, and the access network device in step 1003 is the sixth logical functional entity; the access network device in step 1201 in the above embodiment is the fifth logical functional entity, and the access network device in step 1202 is the sixth logical functional entity; the access network device in step 1401 in the above embodiment is the fifth logical functional entity, and the access network device in step 1402 is the sixth logical functional entity.

Alternatively, the fifth logical functional entity performs steps 601-603 in the above embodiment, the fifth logical functional entity indicates to the sixth logical functional entity that: the target information interaction is an information interaction between the first terminal device and the first logical functional entity, the target information interaction corresponds to the first indication information, and the target information interaction corresponds to the second indication information, and the sixth logical functional entity performs step 604 in the above embodiment. Correspondingly, the access network device in steps 901-902 in the above embodiment is the fifth logical functional entity, and the access network device in step 903 is the sixth logical functional entity; the access network device in steps 1001-1002 in the above embodiment is the fifth logical functional entity, and the access network device in step 1003 is the sixth logical functional entity; the access network device in step 1201 in the above embodiment is the fifth logical functional entity, and the access network device in step 1202 is the sixth logical functional entity; the access network device in step 1401 in the above embodiment is the fifth logical functional entity, and the access network device in step 1402 is the sixth logical functional entity; the access network device in steps 1501-1502 in the above embodiment is the fifth logical functional entity, and the access network device in step 1503 is the sixth logical functional entity; the access network device in step 1601 in the above embodiment is the fifth logical functional entity; the access network device in step 1701 in the above embodiment is the fifth logical functional entity, and the access network device in step 1702 is the sixth logical functional entity.

Alternatively, the fifth logical functional entity performs steps 701-703 in the above embodiment, the fifth logical functional entity indicates to the sixth logical functional entity that: the target information interaction is an information interaction between the first terminal device and the first logical functional entity, the target information interaction corresponds to the first indication information, and the target information interaction corresponds to the second indication information, and the sixth logical functional entity performs steps 704-705 in the above embodiment. Correspondingly, the access network device in steps 901-902 in the above embodiment is the fifth logical functional entity, and the access network device in step 903 is the sixth logical functional entity; the access network device in steps 1001-1002 in the above embodiment is the fifth logical functional entity, and the access network device in step 1003 is the sixth logical functional entity; the access network device in step 1201 in the above embodiment is the fifth logical functional entity, and the access network device in step 1202 is the sixth logical functional entity; the access network device in step 1401 in the above embodiment is the fifth logical functional entity, and the access network device in step 1402 is the sixth logical functional entity; the access network device in steps 1501-1502 in the above embodiment is the fifth logical functional entity, and the access network device in step 1503 is the sixth logical functional entity; the access network device in step 1601 in the above embodiment is the fifth logical functional entity; the access network device in step 1701 in the above embodiment is the fifth logical functional entity, and the access network device in step 1702 is the sixth logical functional entity.

Similarly, the connections in FIG. 20 are logical connections, and it is not limited that there is a direct connection between two entities. The number of first logical functional entities in FIG. 20 is only an example, and the embodiment of the present disclosure does not limit the number of first logical functional entities. The number of first logical functional entities may be one or more.

Optionally, FIG. 19 or FIG. 20 may be combined with the above Embodiment 1/2/3/4/5, or combined with the embodiments described in FIGS. 3 to 17.

In summary, by allocating/configuring indication information (first indication information) for information interactions related to different services/functions/servicings, it is avoided to define special information elements or RRC messages for each information interaction in the standard protocol to carry information, and the protocol design is flexible.

Specifically, an information interaction of a service/function/servicing between the UE and the network function is allocated a first indication information, and the access network associates the first indication information with the network function corresponding to the service/function/servicing, so as to be able to forward the service/function/servicing-related information to the corresponding network function. The UE associates the first indication information with the information interaction of the service/function/servicing, so as to identify and process the service/function/servicing-related information. Since the first indication information can correspond to different network function instances of the same type of network function, the problem of the UE interacting with multiple network functions of the same type at the same time can be solved.

An information interaction of a service/function/servicing between the UE and the network function is allocated a first indication information, and the access network associates the first indication information with the network function corresponding to the service/function/servicing, so as to be able to forward the service/function/servicing-related information to the corresponding network function. The UE associates the first indication information with the information interaction of the service/function/servicing, so as to identify and process the service/function/servicing-related information. Since the first indication information can correspond to different network function instances of the same type of network function, the problem of the UE interacting with multiple network functions of the same type at the same time can be solved.

Corresponding to the information transmission methods provided by the embodiments in FIGS. 3 to 7 above, the embodiment of the present disclosure also provides an apparatus for transmitting information. Since the information transmission apparatus provided by the embodiment of the present disclosure corresponds to the information transmission methods provided by the embodiments in FIGS. 3 to 7 above, the implementation manner of the information transmission method is also applicable to the information transmission apparatus provided by the embodiment of the present disclosure, which will not be described in detail in the embodiment of the present disclosure.

FIG. 21 is a schematic structural diagram of an apparatus for transmitting information provided by an embodiment of the present disclosure.

As shown in FIG. 21, the information transmission apparatus may include a memory 110, a transceiver 120, and a processor 130.

The memory 110 is used to store a computer program; the transceiver 120 is used to send and receive data under the control of the processor; the processor 130 is used to read the computer program in the memory and execute the following operations: receiving first information sent by a first terminal device or a first logical functional entity; where the first information is used to indicate initiating a target information interaction, the target information interaction includes an information interaction of a target service or a target function or a target servicing, and the target information interaction is an information interaction between the first terminal device and the first logical functional entity; and indicating, to the first terminal device, first indication information corresponding to the target information interaction, and/or obtaining the first indication information corresponding to the target information interaction determined by the first terminal device; where the first indication information is used to indicate second information of the target information interaction sent by the first terminal device to the first logical functional entity, and/or the first indication information is used to indicate third information of the target information interaction sent by the first logical functional entity to the first terminal device.

The transceiver 120 is used to receive and send data under the control of the processor 130.

In FIG. 21, the bus architecture may include any number of interconnected buses and bridges, specifically linking various circuits of one or more processors represented by the processor 130 and memories represented by the memory 110. The bus architecture can also link various other circuits such as peripheral devices, voltage regulators, and power management circuits, which are well known in the art and will not be further described herein. The bus interface provides an interface. The transceiver 120 may be multiple components, that is, including a transmitter and a receiver, providing a unit for communicating with various other devices over a transmission medium including a wireless channel, a wired channel, an optical cable, and other transmission media. The processor 130 is responsible for managing the bus architecture and general processing, and the memory 110 can store data used by the processor 130 when performing operations.

Optionally, the processor 130 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

As a possible implementation manner of the embodiment of the present disclosure, the processor 130 is further used to execute the following operations: determining the first indication information corresponding to the target information interaction, and indicating the first indication information corresponding to the target information interaction to the first terminal device; or, receiving the first indication information corresponding to the target information interaction indicated by the first terminal device.

As a possible implementation manner of the embodiment of the present disclosure, the first indication information includes first type indication information and first instance indication information; the processor 130 is further used to execute at least one of the following operations: determining the first type indication information in the first indication information corresponding to the target information interaction, and indicating the first type indication information corresponding to the target information interaction to the first terminal device; or, determining the first instance indication information in the first indication information corresponding to the target information interaction, and indicating the first instance indication information corresponding to the target information interaction to the first terminal device; or, determining the first type indication information and the first instance indication information in the first indication information corresponding to the target information interaction, and indicating the first type indication information and the first instance indication information corresponding to the target information interaction to the first terminal device; or, receiving the first type indication information in the first indication information corresponding to the target information interaction indicated by the first terminal device; or, receiving the first instance indication information in the first indication information corresponding to the target information interaction indicated by the first terminal device; or, receiving the first type indication information and the first instance indication information in the first indication information corresponding to the target information interaction indicated by the first terminal device.

As a possible implementation manner of the embodiment of the present disclosure, the processor 130 is further used to execute the following operations: in a case where the second information indicated by the first indication information sent by the first terminal device is received, sending the second information to the first logical functional entity corresponding to the target information interaction; and/or, in a case where the third information of the target information interaction sent by the first logical functional entity is received, sending the third information indicated by the first indication information to the first terminal device corresponding to the target information interaction.

As a possible implementation manner of the embodiment of the present disclosure, the processor 130 is further used to execute the following operations: determining the first logical functional entity corresponding to the target information interaction.

As a possible implementation manner of the embodiment of the present disclosure, the processor 130 is further used to execute the following operations: determining the first logical functional entity performing the target information interaction with the first terminal device according to the target service or the target function or the target servicing, where the first logical functional entity supports the target service or the target function or the target servicing; or, determining the first logical functional entity performing the target information interaction with the first terminal device according to the target logical functional entity type of the target information interaction, where the first logical functional entity belongs to the target logical functional entity type; or, receiving the first logical functional entity performing the target information interaction with the first terminal device determined by the second logical functional entity.

As a possible implementation manner of the embodiment of the present disclosure, the processor 130 is further used to execute the following operations: in a case where the second information indicated by the first indication information sent by the first terminal device is received, sending the second information to the first logical functional entity corresponding to the target information interaction according to the corresponding relationship between the first indication information and the target information interaction; and/or, in a case where the third information of the target information interaction sent by the first logical functional entity is received, sending the third information indicated by the first indication information to the first terminal device corresponding to the target information interaction according to the corresponding relationship between the first indication information and the target information interaction.

As a possible implementation manner of the embodiment of the present disclosure, the processor 130 is further used to execute the following operations: determining the corresponding relationship between the first indication information and the first logical functional entity.

As a possible implementation manner of the embodiment of the present disclosure, the processor 130 is further used to execute the following operations: in a case where the second information indicated by the first indication information sent by the first terminal device is received, sending the second information to the first logical functional entity corresponding to the target information interaction according to the corresponding relationship between the first indication information and the first logical functional entity; and/or, in a case where the third information of the target information interaction sent by the first logical functional entity is received, sending the third information indicated by the first indication information to the first terminal device corresponding to the target information interaction according to the corresponding relationship between the first indication information and the first logical functional entity.

As a possible implementation manner of the embodiment of the present disclosure, the processor 130 is further used to execute the following operations: sending second indication information corresponding to the target information interaction to the first logical functional entity, and/or obtaining the second indication information corresponding to the target information interaction determined by the first logical functional entity; where the second indication information is used to indicate second information of the target information interaction sent by the first terminal device to the first logical functional entity, and/or the second indication information is used to indicate third information of the target information interaction sent by the first logical functional entity to the first terminal device.

As a possible implementation manner of the embodiment of the present disclosure, the processor 130 is further used to execute the following operations: determining the second indication information corresponding to the target information interaction, and indicating the second indication information corresponding to the target information interaction to the first logical functional entity; or, receiving the second indication information corresponding to the target information interaction indicated by the first logical functional entity.

As a possible implementation manner of the embodiment of the present disclosure, the second indication information includes second type indication information and second instance indication information; the processor 130 is further used to execute at least one of the following operations: determining the second type indication information in the second indication information corresponding to the target information interaction, and indicating the second type indication information corresponding to the target information interaction to the first logical functional entity; or, determining the second instance indication information in the second indication information corresponding to the target information interaction, and indicating the second instance indication information corresponding to the target information interaction to the first logical functional entity; or, determining the second type indication information and the second instance indication information in the second indication information corresponding to the target information interaction, and indicating the second type indication information and the second instance indication information corresponding to the target information interaction to the first logical functional entity; or, receiving the second type indication information in the second indication information corresponding to the target information interaction indicated by the first logical functional entity; or, receiving the second instance indication information in the second indication information corresponding to the target information interaction indicated by the first logical functional entity; or, receiving the second type indication information and the second instance indication information in the second indication information corresponding to the target information interaction indicated by the first logical functional entity.

As a possible implementation manner of the embodiment of the present disclosure, the processor 130 is further used to execute the following operations: in a case where the second information indicated by the first indication information sent by the first terminal device is received, sending the second information indicated by the second indication information to the first logical functional entity corresponding to the target information interaction; and/or, in a case where the third information indicated by the second indication information sent by the first logical functional entity is received, sending the third information indicated by the first indication information to the first terminal device corresponding to the target information interaction.

As a possible implementation manner of the embodiment of the present disclosure, the processor 130 is further used to execute the following operations: in a case where the second information indicated by the first indication information sent by the first terminal device is received, sending the second information indicated by the second indication information to the first logical functional entity corresponding to the target information interaction according to the corresponding relationship between the first indication information and the target information interaction and the corresponding relationship between the second indication information and the target information interaction; and/or, in a case where the third information indicated by the second indication information sent by the first logical functional entity is received, sending the third information indicated by the first indication information to the first terminal device corresponding to the target information interaction according to the corresponding relationship between the second indication information and the target information interaction and the corresponding relationship between the first indication information and the target information interaction.

As a possible implementation manner of the embodiment of the present disclosure, the processor 130 is further used to execute the following operations: in a case where the second indication information is different from the first indication information, determining the corresponding relationship between the second indication information and the first indication information.

As a possible implementation manner of the embodiment of the present disclosure, the processor 130 is further used to execute the following operations: in a case where the second information indicated by the first indication information sent by the first terminal device is received, sending the second information indicated by the second indication information to the first logical functional entity corresponding to the target information interaction according to the corresponding relationship between the second indication information and the first indication information; and/or, in a case where the third information indicated by the second indication information sent by the first logical functional entity is received, sending the third information indicated by the first indication information to the first terminal device corresponding to the target information interaction according to the corresponding relationship between the second indication information and the first indication information.

As a possible implementation manner of the embodiment of the present disclosure, the first logical functional entity is a logical functional entity in a network or a second terminal device, and the logical functional entity in the network is a logical functional entity in an access network or a logical functional entity in a core network; and the target service or the target function or the target servicing includes at least one of the following: UE terminal device data transmission, session management, short message, UE policy, location or positioning, sensing, AI (Artificial Intelligence), service or function or servicing of the core network.

It should be noted here that the above information transmission apparatus provided by the embodiment of the present disclosure can implement all the method steps implemented by the above method embodiments in FIGS. 3 to 7, and can achieve the same technical effects. The parts and beneficial effects of the embodiment of the present disclosure that are the same as those of the method embodiments will not be described in detail here.

Corresponding to the information transmission methods provided by the embodiments in FIGS. 8 to 10 above, the embodiment of the present disclosure also provides an apparatus for transmitting information. Since the information transmission apparatus provided by the embodiment of the present disclosure corresponds to the information transmission methods provided by the embodiments in FIGS. 8 to 10 above, the implementation manner of the information transmission method is also applicable to the information transmission apparatus provided by the embodiment of the present disclosure, which will not be described in detail in the embodiment of the present disclosure.

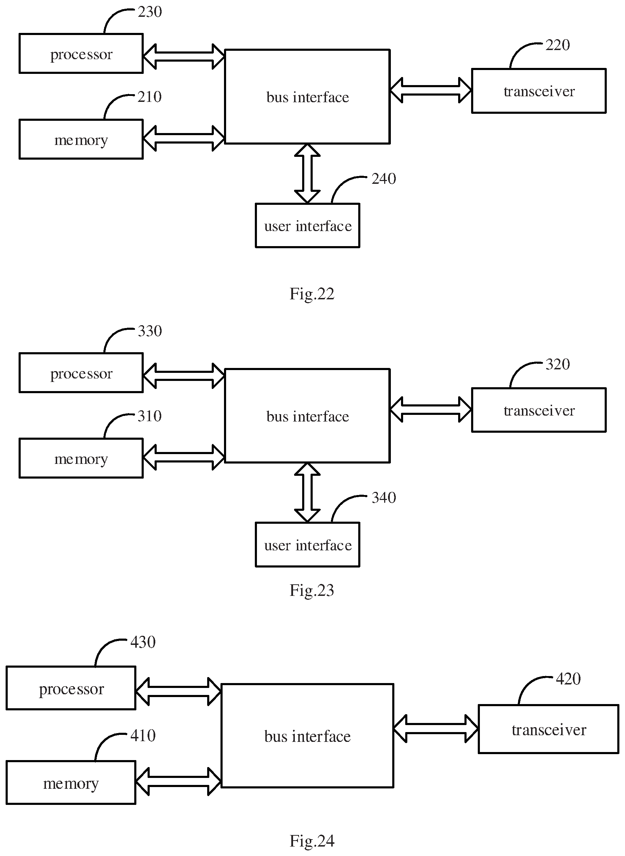

FIG. 22 is a schematic structural diagram of another information transmission apparatus provided by an embodiment of the present disclosure.

As shown in FIG. 22, the information transmission apparatus may include a memory 210, a transceiver 220, and a processor 230.

The memory 210 is used to store a computer program; the transceiver 220 is used to send and receive data under the control of the processor; the processor 230 is used to read the computer program in the memory and execute the following operations: sending first information to an access network device; where the first information is used to indicate initiating a target information interaction, the target information interaction includes an information interaction of a target service or a target function or a target servicing, and the target information interaction is an information interaction between the first terminal device and a first logical functional entity; and indicating, to the access network device, first indication information corresponding to the target information interaction, and/or obtaining the first indication information corresponding to the target information interaction determined by the access network device; where the first indication information is used to indicate second information of the target information interaction sent by the first terminal device to the access network device, and/or the first indication information is used to indicate third information of the target information interaction sent by the first logical functional entity to the first terminal device.

The transceiver 220 is used to receive and send data under the control of the processor 230.

In FIG. 22, the bus architecture may include any number of interconnected buses and bridges, specifically linking various circuits of one or more processors represented by the processor 230 and memories represented by the memory 210. The bus architecture can also link various other circuits such as peripheral devices, voltage regulators, and power management circuits, which are well known in the art and will not be further described herein. The bus interface provides an interface. The transceiver 120 may be multiple components, that is, including a transmitter and a receiver, providing a unit for communicating with various other devices over a transmission medium including a wireless channel, a wired channel, an optical cable, and other transmission media. For different user equipment, the user interface 240 may also be an interface capable of connecting external and internal required equipment, and the connected equipment includes but is not limited to a keypad, a display, a speaker, a microphone, a joystick, etc.

The processor 230 is responsible for managing the bus architecture and general processing, and the memory 210 can store data used by the processor 230 when performing operations.

Optionally, the processor 230 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

The processor calls the computer program stored in the memory to execute the information transmission methods provided by the above embodiments in FIGS. 8 to 10 according to the obtained executable instructions. The processor and the memory may also be arranged separately physically.

As a possible implementation manner of the embodiment of the present disclosure, the processor 230 is further used to execute the following operations: determining the first indication information corresponding to the target information interaction, and indicating the first indication information corresponding to the target information interaction to the access network device; or, receiving the first indication information corresponding to the target information interaction indicated by the access network device.

As a possible implementation manner of the embodiment of the present disclosure, the first indication information includes first type indication information and first instance indication information; the processor 230 is further used to execute at least one of the following operations: determining the first type indication information in the first indication information corresponding to the target information interaction, and indicating the first type indication information corresponding to the target information interaction to the access network device; or, determining the first instance indication information in the first indication information corresponding to the target information interaction, and indicating the first instance indication information corresponding to the target information interaction to the access network device; or, determining the first type indication information and the first instance indication information in the first indication information corresponding to the target information interaction, and indicating the first type indication information and the first instance indication information corresponding to the target information interaction to the access network device; or, receiving the first type indication information in the first indication information corresponding to the target information interaction determined by the access network device; or, receiving the first instance indication information in the first indication information corresponding to the target information interaction determined by the access network device; or, receiving the first type indication information and the first instance indication information in the first indication information corresponding to the target information interaction determined by the access network device.

As a possible implementation manner of the embodiment of the present disclosure, the processor 230 is further configured to perform the following operations: send the second information indicated by the first indication information to the access network device; and/or receive the third information indicated by the first indication information sent by the access network device.

As a possible implementation manner of the embodiment of the present disclosure, the processor 230 is further configured to perform the following operations: send the second information indicated by the first indication information to the access network device; and/or receive the third information indicated by the first indication information sent by the access network device.

As a possible implementation manner of the embodiment of the present disclosure, the processor 230 is further configured to perform the following operations: determine a third logical functional entity in the first terminal device that performs the target information interaction.

As a possible implementation manner of the embodiment of the present disclosure, the processor 230 is further configured to perform the following operations: determine a correspondence between the first indication information and the third logical functional entity.

As a possible implementation manner of the embodiment of the present disclosure, the processor 230 is specifically configured to perform the following operations: send the third information to the third logical functional entity according to the correspondence between the first indication information and the third logical functional entity; or
send the third information to the third logical functional entity corresponding to the target information interaction according to the correspondence between the first indication information and the target information interaction.

As a possible implementation manner of the embodiment of the present disclosure, the first logical functional entity is a logical functional entity in a network or a second terminal device, and the logical functional entity in the network is a logical functional entity in an access network or a logical functional entity in a core network; and the target service or the target function or the target servicing includes at least one of the following: UE data transmission, session management, short message, UE policy, location or positioning, sensing, AI (Artificial Intelligence), service or function or servicing of the core network.

It should be noted here that the above information transmission apparatus provided by the embodiment of the present disclosure can implement all the method steps implemented by the above method embodiments in FIGS. 8 to 10, and can achieve the same technical effects. The parts and beneficial effects of the embodiment of the present disclosure that are the same as those of the method embodiments will not be described in detail here.

Corresponding to the information transmission methods provided by the embodiments in FIGS. 11 to 12 above, the embodiment of the present disclosure also provides an apparatus for transmitting information. Since the information transmission apparatus provided by the embodiment of the present disclosure corresponds to the information transmission methods provided by the embodiments in FIGS. 11 to 12 above, the implementation manner of the information transmission method is also applicable to the information transmission apparatus provided by the embodiment of the present disclosure, which will not be described in detail in the embodiment of the present disclosure.

FIG. 23 is a schematic structural diagram of another information transmission apparatus provided by an embodiment of the present disclosure.

As shown in FIG. 23, the information transmission apparatus may include a memory 310, a transceiver 320, and a processor 330.

The memory 310 is used to store a computer program; the transceiver 320 is used to send and receive data under the control of the processor; the processor 330 is used to read the computer program in the memory and execute the following operations: indicate, to an access network device, first indication information corresponding to a target information interaction, and/or obtain the first indication information corresponding to the target information interaction determined by the access network device; where the target information interaction includes an information interaction of a target service or a target function or a target servicing, and the target information interaction is an information interaction between the first terminal device and a first logical functional entity; the first indication information is used to indicate second information of the target information interaction sent by the first terminal device to the access network device, and/or the first indication information is used to indicate third information of the target information interaction sent by the first logical functional entity to the first terminal device.

The transceiver 320 is used to receive and send data under the control of the processor 330.

In FIG. 23, the bus architecture may include any number of interconnected buses and bridges, specifically linking various circuits of one or more processors represented by the processor 330 and memories represented by the memory 310. The bus architecture can also link various other circuits such as peripheral devices, voltage regulators, and power management circuits, which are well known in the art and will not be further described herein. The bus interface provides an interface. The transceiver 320 may be multiple components, that is, including a transmitter and a receiver, providing a unit for communicating with various other devices over a transmission medium including a wireless channel, a wired channel, an optical cable, and other transmission media. For different user equipment, the user interface 340 may also be an interface capable of connecting external and internal required equipment, and the connected equipment includes but is not limited to a keypad, a display, a speaker, a microphone, a joystick, etc.

The processor 330 is responsible for managing the bus architecture and general processing, and the memory 310 can store data used by the processor 330 when performing operations.

Optionally, the processor 330 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

The processor calls the computer program stored in the memory to execute the information transmission methods provided by the above embodiments in FIGS. 11 to 12 according to the obtained executable instructions. The processor and the memory may also be arranged separately physically.

As a possible implementation manner of the embodiment of the present disclosure, the processor 330 is specifically configured to perform the following operations: determine the first indication information corresponding to the target information interaction, and indicate the first indication information corresponding to the target information interaction to the access network device; or, receive the first indication information corresponding to the target information interaction indicated by the access network device.

As a possible implementation manner of the embodiment of the present disclosure, the first indication information includes first type indication information and first instance indication information; the processor 330 is specifically configured to perform at least one of the following operations: determine the first type indication information in the first indication information corresponding to the target information interaction, and indicate the first type indication information corresponding to the target information interaction to the access network device; or, determine the first instance indication information in the first indication information corresponding to the target information interaction, and indicate the first instance indication information corresponding to the target information interaction to the access network device; or, determine the first type indication information and the first instance indication information in the first indication information corresponding to the target information interaction, and indicate the first type indication information and the first instance indication information corresponding to the target information interaction to the access network device; or, receive the first type indication information in the first indication information corresponding to the target information interaction determined by the access network device; or, receive the first instance indication information in the first indication information corresponding to the target information interaction determined by the access network device; or, receive the first type indication information and the first instance indication information in the first indication information corresponding to the target information interaction determined by the access network device.

As a possible implementation manner of the embodiment of the present disclosure, the processor 330 is further configured to perform the following operations: send the second information indicated by the first indication information to the access network device; and/or receive the third information indicated by the first indication information sent by the access network device.

As a possible implementation of the disclosed embodiments, the processor 330 is further configured to perform the following operation: upon receiving third information sent by the access network device and indicated by the first indication information, determine a target information interaction corresponding to the third information according to the first indication information.

As a possible implementation of the disclosed embodiments, the processor 330 is further configured to perform the following operation: send first information to the access network device; where the first information is used to indicate initiation of the target information interaction.

As a possible implementation manner of the embodiment of the present disclosure, the first logical functional entity is a logical functional entity in a network or a second terminal device, and the logical functional entity in the network is a logical functional entity in an access network or a logical functional entity in a core network; and the target service or the target function or the target servicing includes at least one of the following: UE data transmission, session management, short message, UE policy, location or positioning, sensing, AI (Artificial Intelligence), service or function or servicing of the core network.

It should be noted here that the above information transmission apparatus provided by the embodiment of the present disclosure can implement all the method steps implemented by the above method embodiments in FIGS. 11 to 12, and can achieve the same technical effects. The parts and beneficial effects of the embodiment of the present disclosure that are the same as those of the method embodiments will not be described in detail here.

Corresponding to the information transmission methods provided by the embodiments in FIGS. 13 to 14 above, the embodiment of the present disclosure also provides an apparatus for transmitting information. Since the information transmission apparatus provided by the embodiment of the present disclosure corresponds to the information transmission methods provided by the embodiments in FIGS. 13 to 14 above, the implementation manner of the information transmission method is also applicable to the information transmission apparatus provided by the embodiment of the present disclosure, which will not be described in detail in the embodiment of the present disclosure.

FIG. 24 is a schematic structural diagram of another information transmission apparatus provided by an embodiment of the present disclosure.

As shown in FIG. 24, the information transmission apparatus may include a memory 410, a transceiver 420, and a processor 430.

The memory 410 is used to store a computer program; the transceiver 420 is used to send and receive data under the control of the processor; the processor 430 is used to read the computer program in the memory and execute the following operations: send first information to an access network device; where the first information is used to indicate initiating a target information interaction, the target information interaction includes an information interaction of a target service or a target function or a target servicing, the target information interaction is an information interaction between a first terminal device and the first logical functional entity, and the target information interaction corresponds to first indication information; where the first indication information is used to indicate second information of the target information interaction sent by the first terminal device to the first logical functional entity, and/or the first indication information is used to indicate third information of the target information interaction sent by the first logical functional entity to the first terminal device.

The transceiver 420 is used to receive and send data under the control of the processor 430.

In FIG. 24, the bus architecture may include any number of interconnected buses and bridges, specifically linking various circuits of one or more processors represented by the processor 430 and memories represented by the memory 410. The bus architecture can also link various other circuits such as peripheral devices, voltage regulators, and power management circuits, which are well known in the art and will not be further described herein. The bus interface provides an interface. The transceiver 420 may be multiple components, that is, including a transmitter and a receiver, providing a unit for communicating with various other devices over a transmission medium including a wireless channel, a wired channel, an optical cable, and other transmission media. The processor 430 is responsible for managing the bus architecture and general processing, and the memory 410 can store data used by the processor 430 when performing operations.

Optionally, the processor 430 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

As a possible implementation manner of the embodiment of the present disclosure, the processor 430 is further configured to perform the following operations: send the third information of the target information interaction to the access network device; and/or receive the second information of the target information interaction sent by the access network device.

The second indication information is used to indicate second information of the target information interaction sent by the first terminal device to the first logical function entity, and/or the second indication information is used to indicate third information of the target information interaction sent by the first logical function entity to the first terminal device.

As a possible implementation of the disclosed embodiments, the processor 430 is specifically configured to perform the following operations: determine second indication information corresponding to the target information interaction, and indicate the second indication information corresponding to the target information interaction to the access network device; or receive the second indication information corresponding to the target information interaction indicated by the access network device.

As a possible implementation of the disclosed embodiments, the second indication information includes second type indication information and second instance indication information; the processor 430 is specifically configured to perform at least one of the following operations: determine second type indication information in the second indication information corresponding to the target information interaction, and indicate the second type indication information corresponding to the target information interaction to the access network device; or determine second instance indication information in the second indication information corresponding to the target information interaction, and indicate the second instance indication information corresponding to the target information interaction to the access network device; or determine second type indication information and second instance indication information in the second indication information corresponding to the target information interaction, and indicate the second type indication information and second instance indication information corresponding to the target information interaction to the access network device; or receive second type indication information in the second indication information corresponding to the target information interaction indicated by the access network device; or receive second instance indication information in the second indication information corresponding to the target information interaction indicated by the access network device; or receive second type indication information and second instance indication information in the second indication information corresponding to the target information interaction indicated by the access network device.

As a possible implementation of the disclosed embodiments, the processor 430 is specifically configured to perform the following operations: send third information indicated by the second indication information to the access network device; and/or receive second information indicated by the second indication information sent by the access network device.

As a possible implementation of the disclosed embodiments, the processor 430 is further configured to perform the following operation: upon receiving second information sent by the access network device and indicated by the second indication information, determine a target information interaction corresponding to the second information according to the second indication information.

As a possible implementation manner of the embodiment of the present disclosure, the first logical functional entity is a logical functional entity in a network or a second terminal device, and the logical functional entity in the network is a logical functional entity in an access network or a logical functional entity in a core network; and the target service or the target function or the target servicing includes at least one of the following: UE data transmission, session management, short message, UE policy, location or positioning, sensing, AI (Artificial Intelligence), service or function or servicing of the core network.

It should be noted here that the above information transmission apparatus provided by the embodiment of the present disclosure can implement all the method steps implemented by the above method embodiments in FIGS. 13 to 14, and can achieve the same technical effects. The parts and beneficial effects of the embodiment of the present disclosure that are the same as those of the method embodiments will not be described in detail here.

Corresponding to the information transmission methods provided by the embodiments in FIGS. 15 to 17 above, the embodiment of the present disclosure also provides an apparatus for transmitting information. Since the information transmission apparatus provided by the embodiment of the present disclosure corresponds to the information transmission methods provided by the embodiments in FIGS. 15 to 17 above, the implementation manner of the information transmission method is also applicable to the information transmission apparatus provided by the embodiment of the present disclosure, which will not be described in detail in the embodiment of the present disclosure.

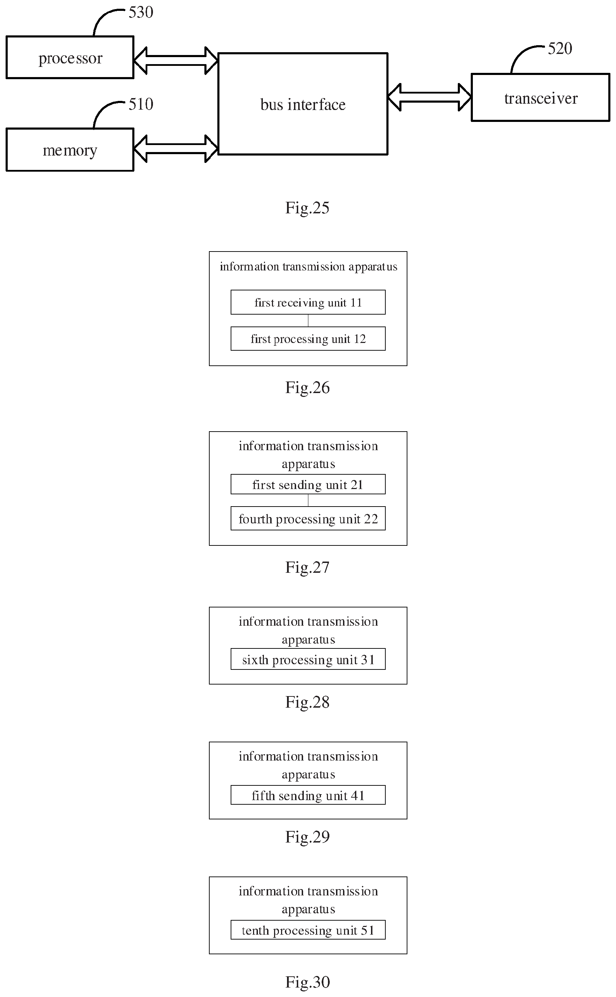

FIG. 25 is a schematic structural diagram of another information transmission apparatus provided by an embodiment of the present disclosure.

As shown in FIG. 25, the information transmission apparatus may include a memory 510, a transceiver 520, and a processor 530.

The memory 510 is used to store a computer program; the transceiver 520 is used to send and receive data under the control of the processor; the processor 530 is used to read the computer program in the memory and execute the following operations: send first information to an access network device; where the first information is used to indicate initiating a target information interaction, the target information interaction includes an information interaction of a target service or a target function or a target servicing, the target information interaction is an information interaction between a first terminal device and the first logical functional entity, and the target information interaction corresponds to first indication information; where the first indication information is used to indicate second information of the target information interaction sent by the first terminal device to the first logical functional entity, and/or the first indication information is used to indicate third information of the target information interaction sent by the first logical functional entity to the first terminal device; and indicate, to the access network device, second indication information corresponding to the target information interaction, and/or obtain the second indication information corresponding to the target information interaction determined by the access network device; where the second indication information is used to indicate second information of the target information interaction sent by the first terminal device to the first logical functional entity, and/or the second indication information is used to indicate third information of the target information interaction sent by the first logical functional entity to the first terminal device.

The transceiver 520 is used to receive and send data under the control of the processor 530.

In FIG. 25, the bus architecture may include any number of interconnected buses and bridges, specifically linking various circuits of one or more processors represented by the processor 530 and memories represented by the memory 510. The bus architecture can also link various other circuits such as peripheral devices, voltage regulators, and power management circuits, which are well known in the art and will not be further described herein. The bus interface provides an interface. The transceiver 520 may be multiple components, that is, including a transmitter and a receiver, providing a unit for communicating with various other devices over a transmission medium including a wireless channel, a wired channel, an optical cable, and other transmission media.

The processor 530 is responsible for managing the bus architecture and general processing, and the memory 510 can store data used by the processor 530 when performing operations.

Optionally, the processor 530 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

As a possible implementation manner of the embodiment of the present disclosure, the processor 530 is specifically configured to perform the following operations: determine the second indication information corresponding to the target information interaction, and indicate the second indication information corresponding to the target information interaction to the access network device; or, receive the second indication information corresponding to the target information interaction indicated by the access network device.

As a possible implementation manner of the embodiment of the present disclosure, the second indication information includes second type indication information and second instance indication information; the processor 530 is specifically configured to perform at least one of the following operations: determine the second type indication information in the second indication information corresponding to the target information interaction, and indicate the second type indication information corresponding to the target information interaction to the access network device; or, determine the second instance indication information in the second indication information corresponding to the target information interaction, and indicate the second instance indication information corresponding to the target information interaction to the access network device; or, determine the second type indication information and the second instance indication information in the second indication information corresponding to the target information interaction, and indicate the second type indication information and the second instance indication information corresponding to the target information interaction to the access network device; or, receive the second type indication information in the second indication information corresponding to the target information interaction indicated by the access network device; or, receive the second instance indication information in the second indication information corresponding to the target information interaction indicated by the access network device; or, receive the second type indication information and the second instance indication information in the second indication information corresponding to the target information interaction indicated by the access network device.

As a possible implementation manner of the embodiment of the present disclosure, the processor 530 is further configured to perform the following operations: send the third information indicated by the second indication information to the access network device; and/or receive the second information indicated by the second indication information sent by the access network device.

As a possible implementation manner of the embodiment of the present disclosure, the first logical functional entity is a logical functional entity in a network or a second terminal device, and the logical functional entity in the network is a logical functional entity in an access network or a logical functional entity in a core network; and the target service or the target function or the target servicing includes at least one of the following: UE data transmission, session management, short message, UE policy, location or positioning, sensing, AI (Artificial Intelligence), service or function or servicing of the core network.

It should be noted here that the above information transmission apparatus provided by the embodiment of the present disclosure can implement all the method steps implemented by the above method embodiments in FIGS. 15 to 17, and can achieve the same technical effects. The parts and beneficial effects of the embodiment of the present disclosure that are the same as those of the method embodiments will not be described in detail here.

Corresponding to the information transmission method provided by the embodiment in FIG. 3 above, the embodiment of the present disclosure also provides an apparatus for transmitting information. Since the information transmission apparatus provided by the embodiment of the present disclosure corresponds to the information transmission method provided by the embodiment in FIG. 3 above, the implementation manner of the information transmission method is also applicable to the information transmission apparatus provided by the embodiment of the present disclosure, which will not be described in detail in the embodiment of the present disclosure.

As shown in Figure 26, the information transmission apparatus may include: a first receiving unit 11 and a first processing unit 12.

The first receiving unit 11 is configured to receive first information sent by a first terminal device or a first logical function entity; the first information is used to instruct to initiate a target information interaction, the target information interaction includes an information interaction for a target service, a target function, or a target service, and the target information interaction is an information interaction between the first terminal device and the first logical function entity; the first processing unit 12 is configured to indicate, to the first terminal device, first indication information corresponding to the target information interaction, and/or obtain the first indication information corresponding to the target information interaction determined by the first terminal device; the first indication information is used to indicate second information of the target information interaction sent by the first terminal device to the first logical function entity, and/or the first indication information is used to indicate third information of the target information interaction sent by the first logical function entity to the first terminal device.

In a possible implementation manner of the embodiment of the present disclosure, the first processing unit 12 is specifically configured to: determine the first indication information corresponding to the target information interaction, and indicate the first indication information corresponding to the target information interaction to the first terminal device; or receive the first indication information corresponding to the target information interaction indicated by the first terminal device.

In a possible implementation manner of the embodiment of the present disclosure, the first indication information includes first type indication information and first instance indication information; the first processing unit 12 is specifically configured to perform at least one of the following operations: determine the first type indication information in the first indication information corresponding to the target information interaction, and indicate the first type indication information corresponding to the target information interaction to the first terminal device; or determine the first instance indication information in the first indication information corresponding to the target information interaction, and indicate the first instance indication information corresponding to the target information interaction to the first terminal device; or determine the first type indication information and the first instance indication information in the first indication information corresponding to the target information interaction, and indicate the first type indication information and the first instance indication information corresponding to the target information interaction to the first terminal device; or receive the first type indication information in the first indication information corresponding to the target information interaction indicated by the first terminal device; or receive the first instance indication information in the first indication information corresponding to the target information interaction indicated by the first terminal device; or receive the first type indication information and the first instance indication information in the first indication information corresponding to the target information interaction indicated by the first terminal device.

In a possible implementation manner of the embodiment of the present disclosure, the apparatus further includes: a second processing unit configured to send the second information to the first logical function entity corresponding to the target information interaction when receiving the second information indicated by the first indication information sent by the first terminal device; and/or send the third information indicated by the first indication information to the first terminal device corresponding to the target information interaction when receiving the third information of the target information interaction sent by the first logical function entity.

In a possible implementation manner of the embodiment of the present disclosure, the apparatus further includes: a first determining unit configured to determine the first logical function entity corresponding to the target information interaction.

In a possible implementation manner of the embodiment of the present disclosure, the first determining unit is specifically configured to: determine the first logical function entity that performs the target information interaction with the first terminal device according to the target service, the target function, or the target service, where the first logical function entity supports the target service, the target function, or the target service; or determine the first logical function entity that performs the target information interaction with the first terminal device according to the target logical function entity type of the target information interaction, where the first logical function entity belongs to the target logical function entity type; or receive the first logical function entity that performs the target information interaction with the first terminal device determined by a second logical function entity.

In a possible implementation manner of the embodiment of the present disclosure, the second processing unit is specifically configured to: send the second information to the first logical function entity corresponding to the target information interaction according to the correspondence between the first indication information and the target information interaction when receiving the second information indicated by the first indication information sent by the first terminal device; and/or send the third information indicated by the first indication information to the first terminal device corresponding to the target information interaction according to the correspondence between the first indication information and the target information interaction when receiving the third information of the target information interaction sent by the first logical function entity.

In a possible implementation manner of the embodiment of the present disclosure, the apparatus further includes: a second determining unit configured to determine the correspondence between the first indication information and the first logical function entity.

In a possible implementation manner of the embodiment of the present disclosure, the second processing unit is specifically configured to: send the second information to the first logical function entity corresponding to the target information interaction according to the correspondence between the first indication information and the first logical function entity when receiving the second information indicated by the first indication information sent by the first terminal device; and/or send the third information indicated by the first indication information to the first terminal device corresponding to the target information interaction according to the correspondence between the first indication information and the first logical function entity when receiving the third information of the target information interaction sent by the first logical function entity.

In a possible implementation manner of the embodiment of the present disclosure, the apparatus further includes: a third processing unit configured to send second indication information corresponding to the target information interaction to the first logical function entity, and/or obtain the second indication information corresponding to the target information interaction determined by the first logical function entity; the second indication information is used to indicate the second information of the target information interaction sent by the first terminal device to the first logical function entity, and/or the second indication information is used to indicate the third information of the target information interaction sent by the first logical function entity to the first terminal device.

In a possible implementation manner of the embodiment of the present disclosure, the third processing unit is specifically configured to: determine the second indication information corresponding to the target information interaction, and indicate the second indication information corresponding to the target information interaction to the first logical function entity; or receive the second indication information corresponding to the target information interaction indicated by the first logical function entity.

In a possible implementation manner of the embodiment of the present disclosure, the second indication information includes second type indication information and second instance indication information; the third processing unit is configured to perform at least one of the following operations: determine the second type indication information in the second indication information corresponding to the target information interaction, and indicate the second type indication information corresponding to the target information interaction to the first logical function entity; or determine the second instance indication information in the second indication information corresponding to the target information interaction, and indicate the second instance indication information corresponding to the target information interaction to the first logical function entity; or determine the second type indication information and the second instance indication information in the second indication information corresponding to the target information interaction, and indicate the second type indication information and the second instance indication information corresponding to the target information interaction to the first logical function entity; or receive the second type indication information in the second indication information corresponding to the target information interaction indicated by the first logical function entity; or receive the second instance indication information in the second indication information corresponding to the target information interaction indicated by the first logical function entity; or receive the second type indication information and the second instance indication information in the second indication information corresponding to the target information interaction indicated by the first logical function entity.

In a possible implementation manner of the embodiment of the present disclosure, the second processing unit is specifically configured to: send the second information indicated by the second indication information to the first logical function entity corresponding to the target information interaction when receiving the second information indicated by the first indication information sent by the first terminal device; and/or send the third information indicated by the first indication information to the first terminal device corresponding to the target information interaction when receiving the third information indicated by the second indication information sent by the first logical function entity.

In a possible implementation manner of the embodiment of the present disclosure, the second processing unit is specifically configured to: send the second information indicated by the second indication information to the first logical function entity corresponding to the target information interaction according to the correspondence between the first indication information and the target information interaction and the correspondence between the second indication information and the target information interaction when receiving the second information indicated by the first indication information sent by the first terminal device; and/or send the third information indicated by the first indication information to the first terminal device corresponding to the target information interaction according to the correspondence between the second indication information and the target information interaction and the correspondence between the first indication information and the target information interaction when receiving the third information indicated by the second indication information sent by the first logical function entity.

In a possible implementation manner of the embodiment of the present disclosure, the apparatus further includes: a third determining unit configured to determine the correspondence between the second indication information and the first indication information when the second indication information is different from the first indication information.

In a possible implementation manner of the embodiment of the present disclosure, the second processing unit is specifically configured to: send the second information indicated by the second indication information to the first logical function entity corresponding to the target information interaction according to the correspondence between the second indication information and the first indication information when receiving the second information indicated by the first indication information sent by the first terminal device; and/or send the third information indicated by the first indication information to the first terminal device corresponding to the target information interaction according to the correspondence between the second indication information and the first indication information when receiving the third information indicated by the second indication information sent by the first logical function entity.

In a possible implementation manner of the embodiment of the present disclosure, the first logical function entity is a logical function entity in a network or a second terminal device, and the logical function entity in the network is a logical function entity in an access network or a logical function entity in a core network; and the target service, the target function, or the target service includes at least one of the following: UE terminal device data transmission, session management, short message, UE policy, location or positioning, sensing, AI (Artificial Intelligence), and services, functions, or services of the core network.

It should be noted here that the above-mentioned information transmission apparatus provided by the embodiment of the present disclosure can implement all the method steps implemented by the method embodiments shown in Figures 3 to 7 of the present disclosure, and can achieve the same technical effects. The parts and beneficial effects of the embodiment of the present disclosure that are the same as those of the method embodiments will not be described in detail here.

Corresponding to the information transmission methods provided by the embodiments shown in Figures 8 to 10 above, the embodiment of the present disclosure also provides an information transmission apparatus. Since the information transmission apparatus provided by the embodiment of the present disclosure corresponds to the information transmission methods provided by the embodiments shown in Figures 8 to 10 above, the implementation manners of the information transmission methods are also applicable to the information transmission apparatus provided by the embodiment of the present disclosure, and will not be described in detail in the embodiment of the present disclosure.

Figure 27 is a schematic structural diagram of another information transmission apparatus provided by an embodiment of the present disclosure.

As shown in Figure 27, the information transmission apparatus may include: a first sending unit 21 and a fourth processing unit 22.

The first sending unit 21 is configured to send first information to an access network device; the first information is used to instruct to initiate a target information interaction, the target information interaction includes an information interaction for a target service, a target function, or a target service, and the target information interaction is an information interaction between the first terminal device and the first logical function entity; the fourth processing unit 22 is configured to indicate, to the access network device, first indication information corresponding to the target information interaction, and/or obtain the first indication information corresponding to the target information interaction determined by the access network device; the first indication information is used to indicate second information of the target information interaction sent by the first terminal device to the access network device, and/or the first indication information is used to indicate third information of the target information interaction sent by the first logical function entity to the first terminal device.

In a possible implementation manner of the embodiment of the present disclosure, the fourth processing unit 22 is specifically configured to: determine the first indication information corresponding to the target information interaction, and indicate the first indication information corresponding to the target information interaction to the access network device; or receive the first indication information corresponding to the target information interaction indicated by the access network device.

In a possible implementation manner of the embodiment of the present disclosure, the first indication information includes first type indication information and first instance indication information; the fourth processing unit 22 is specifically configured to perform at least one of the following operations: determine the first type indication information in the first indication information corresponding to the target information interaction, and indicate the first type indication information corresponding to the target information interaction to the access network device; or determine the first instance indication information in the first indication information corresponding to the target information interaction, and indicate the first instance indication information corresponding to the target information interaction to the access network device; or determine the first type indication information and the first instance indication information in the first indication information corresponding to the target information interaction, and indicate the first type indication information and the first instance indication information corresponding to the target information interaction to the access network device; or receive the first type indication information in the first indication information corresponding to the target information interaction determined by the access network device; or receive the first instance indication information in the first indication information corresponding to the target information interaction determined by the access network device; or receive the first type indication information and the first instance indication information in the first indication information corresponding to the target information interaction determined by the access network device.

In a possible implementation manner of the embodiment of the present disclosure, the apparatus further includes: a fifth processing unit configured to send the second information indicated by the first indication information to the access network device; and/or receive the third information indicated by the first indication information sent by the access network device.

In a possible implementation manner of the embodiment of the present disclosure, the apparatus further includes: a fourth determining unit configured to determine the target information interaction corresponding to the third information according to the first indication information when receiving the third information indicated by the first indication information sent by the access network device.

In a possible implementation manner of the embodiment of the present disclosure, the apparatus further includes: a fifth determining unit configured to determine a third logical function entity corresponding to the target information interaction in the first terminal device.

In a possible implementation manner of the embodiment of the present disclosure, the apparatus further includes: a sixth determining unit configured to determine the correspondence between the first indication information and the third logical function entity.

In a possible implementation manner of the embodiment of the present disclosure, the apparatus further includes: a second sending unit configured to send the third information to the third logical function entity according to the correspondence between the first indication information and the third logical function entity.

In a possible implementation manner of the embodiment of the present disclosure, the apparatus further includes: a third sending unit configured to send the third information to the third logical function entity corresponding to the target information interaction according to the correspondence between the first indication information and the target information interaction.

In a possible implementation manner of the embodiment of the present disclosure, the first logical function entity is a logical function entity in a network or a second terminal device, and the logical function entity in the network is a logical function entity in an access network or a logical function entity in a core network; and the target service, the target function, or the target service includes at least one of the following: UE terminal device data transmission, session management, short message, UE policy, location or positioning, sensing, AI (Artificial Intelligence), and services, functions, or services of the core network.

It should be noted here that the above-mentioned information transmission apparatus provided by the embodiment of the present disclosure can implement all the method steps implemented by the method embodiments shown in Figures 8 to 10 of the present disclosure, and can achieve the same technical effects. The parts and beneficial effects of the embodiment of the present disclosure that are the same as those of the method embodiments will not be described in detail here.

Corresponding to the information transmission methods provided by the embodiments shown in Figures 11 to 12 above, the embodiment of the present disclosure also provides an information transmission apparatus. Since the information transmission apparatus provided by the embodiment of the present disclosure corresponds to the information transmission methods provided by the embodiments shown in Figures 11 to 12 above, the implementation manners of the information transmission methods are also applicable to the information transmission apparatus provided by the embodiment of the present disclosure, and will not be described in detail in the embodiment of the present disclosure.

Figure 28 is a schematic structural diagram of another information transmission apparatus provided by an embodiment of the present disclosure.

As shown in Figure 28, the information transmission apparatus may include: a sixth processing unit 32.

Wherein, the sixth processing unit 32 is configured to indicate, to the access network device, first indication information corresponding to the target information interaction, and/or obtain the first indication information corresponding to the target information interaction determined by the access network device; the target information interaction includes an information interaction for a target service, a target function, or a target service, and the target information interaction is an information interaction between the first terminal device and the first logical function entity; the first indication information is used to indicate second information of the target information interaction sent by the first terminal device to the access network device, and/or the first indication information is used to indicate third information of the target information interaction sent by the first logical function entity to the first terminal device.

In a possible implementation manner of the embodiment of the present disclosure, the sixth processing unit 32 is specifically configured to: determine the first indication information corresponding to the target information interaction, and indicate the first indication information corresponding to the target information interaction to the access network device; or receive the first indication information corresponding to the target information interaction indicated by the access network device.

In a possible implementation manner of the embodiment of the present disclosure, the first indication information includes first type indication information and first instance indication information; the sixth processing unit 32 is specifically configured to perform at least one of the following operations: determine the first type indication information in the first indication information corresponding to the target information interaction, and indicate the first type indication information corresponding to the target information interaction to the access network device; or determine the first instance indication information in the first indication information corresponding to the target information interaction, and indicate the first instance indication information corresponding to the target information interaction to the access network device; or determine the first type indication information and the first instance indication information in the first indication information corresponding to the target information interaction, and indicate the first type indication information and the first instance indication information corresponding to the target information interaction to the access network device; or receive the first type indication information in the first indication information corresponding to the target information interaction determined by the access network device; or receive the first instance indication information in the first indication information corresponding to the target information interaction determined by the access network device; or receive the first type indication information and the first instance indication information in the first indication information corresponding to the target information interaction determined by the access network device.

In a possible implementation manner of the embodiment of the present disclosure, the apparatus further includes: a seventh processing unit configured to send the second information indicated by the first indication information to the access network device; and/or receive the third information indicated by the first indication information sent by the access network device.

In a possible implementation manner of the embodiment of the present disclosure, the apparatus further includes: a seventh determining unit configured to determine the target information interaction corresponding to the third information according to the first indication information when receiving the third information indicated by the first indication information sent by the access network device.

In a possible implementation manner of the embodiment of the present disclosure, the apparatus further includes: a fourth sending unit configured to send first information to the access network device; the first information is used to instruct to initiate the target information interaction.

In a possible implementation manner of the embodiment of the present disclosure, the first logical function entity is a logical function entity in a network or a second terminal device, and the logical function entity in the network is a logical function entity in an access network or a logical function entity in a core network; and the target service, the target function, or the target service includes at least one of the following: UE terminal device data transmission, session management, short message, UE policy, location or positioning, sensing, AI (Artificial Intelligence), and services, functions, or services of the core network.

It should be noted here that the above-mentioned information transmission apparatus provided by the embodiment of the present disclosure can implement all the method steps implemented by the method embodiments shown in Figures 11 to 12 of the present disclosure, and can achieve the same technical effects. The parts and beneficial effects of the embodiment of the present disclosure that are the same as those of the method embodiments will not be described in detail here.

Corresponding to the information transmission methods provided by the embodiments shown in Figures 13 to 15 above, the embodiment of the present disclosure also provides an information transmission apparatus. Since the information transmission apparatus provided by the embodiment of the present disclosure corresponds to the information transmission methods provided by the embodiments shown in Figures 13 to 15 above, the implementation manners of the information transmission methods are also applicable to the information transmission apparatus provided by the embodiment of the present disclosure, and will not be described in detail in the embodiment of the present disclosure.

Figure 29 is a schematic structural diagram of another information transmission apparatus provided by an embodiment of the present disclosure.

As shown in Figure 29, the information transmission apparatus may include: a fifth sending unit 41.

Wherein, the fifth sending unit 41 is configured to send first information to an access network device; the first information is used to instruct to initiate a target information interaction, the target information interaction includes an information interaction for a target service, a target function, or a target service, the target information interaction is an information interaction between the first terminal device and the first logical function entity, and the target information interaction corresponds to first indication information; the first indication information is used to indicate second information of the target information interaction sent by the first terminal device to the first logical function entity, and/or the first indication information is used to indicate third information of the target information interaction sent by the first logical function entity to the first terminal device.

In a possible implementation manner of the embodiment of the present disclosure, the apparatus further includes: an eighth processing unit configured to send the third information of the target information interaction to the access network device; and/or receive the second information of the target information interaction sent by the access network device.

In a possible implementation manner of the embodiment of the present disclosure, the apparatus further includes: a ninth processing unit configured to indicate, to the access network device, second indication information corresponding to the target information interaction, and/or obtain the second indication information corresponding to the target information interaction determined by the access network device; the second indication information is used to indicate the second information of the target information interaction sent by the first terminal device to the first logical function entity, and/or the second indication information is used to indicate the third information of the target information interaction sent by the first logical function entity to the first terminal device.

In a possible implementation manner of the embodiment of the present disclosure, the ninth processing unit is specifically configured to: determine the second indication information corresponding to the target information interaction, and indicate the second indication information corresponding to the target information interaction to the access network device; or receive the second indication information corresponding to the target information interaction indicated by the access network device.

In a possible implementation manner of the embodiment of the present disclosure, the second indication information includes second type indication information and second instance indication information; the ninth processing unit is specifically configured to perform at least one of the following operations: determine the second type indication information in the second indication information corresponding to the target information interaction, and indicate the second type indication information corresponding to the target information interaction to the access network device; or determine the second instance indication information in the second indication information corresponding to the target information interaction, and indicate the second instance indication information corresponding to the target information interaction to the access network device; or determine the second type indication information and the second instance indication information in the second indication information corresponding to the target information interaction, and indicate the second type indication information and the second instance indication information corresponding to the target information interaction to the access network device; or receive the second type indication information in the second indication information corresponding to the target information interaction indicated by the access network device; or receive the second instance indication information in the second indication information corresponding to the target information interaction indicated by the access network device; or receive the second type indication information and the second instance indication information in the second indication information corresponding to the target information interaction indicated by the access network device.

In a possible implementation manner of the embodiment of the present disclosure, the apparatus further includes: an eleventh processing unit configured to send the third information indicated by the second indication information to the access network device; and/or receive the second information indicated by the second indication information sent by the access network device.

In a possible implementation manner of the embodiment of the present disclosure, the apparatus further includes: an eighth determining unit configured to determine the target information interaction corresponding to the second information according to the second indication information when receiving the second information indicated by the second indication information sent by the access network device.

In a possible implementation manner of the embodiment of the present disclosure, the first logical function entity is a logical function entity in a network or a second terminal device, and the logical function entity in the network is a logical function entity in an access network or a logical function entity in a core network; and the target service, the target function, or the target service includes at least one of the following: UE terminal device data transmission, session management, short message, UE policy, location or positioning, sensing, AI (Artificial Intelligence), and services, functions, or services of the core network.

It should be noted here that the above-mentioned information transmission apparatus provided by the embodiment of the present disclosure can implement all the method steps implemented by the method embodiments shown in Figures 13 to 15 of the present disclosure, and can achieve the same technical effects. The parts and beneficial effects of the embodiment of the present disclosure that are the same as those of the method embodiments will not be described in detail here.

Corresponding to the information transmission methods provided by the embodiments shown in Figures 16 to 17 above, the embodiment of the present disclosure also provides an information transmission apparatus. Since the information transmission apparatus provided by the embodiment of the present disclosure corresponds to the information transmission methods provided by the embodiments shown in Figures 16 to 17 above, the implementation manners of the information transmission methods are also applicable to the information transmission apparatus provided by the embodiment of the present disclosure, and will not be described in detail in the embodiment of the present disclosure.

Figure 30 is a schematic structural diagram of another information transmission apparatus provided by an embodiment of the present disclosure.

As shown in Figure 30, the information transmission apparatus may include: a tenth processing unit 51.

The tenth processing unit 51 is configured to indicate, to the access network device, second indication information corresponding to the target information interaction, and/or obtain the second indication information corresponding to the target information interaction determined by the access network device; the target information interaction includes an information interaction for a target service, a target function, or a target service, and the target information interaction is an information interaction between the first terminal device and the first logical function entity; the second indication information is used to indicate the second information of the target information interaction sent by the first terminal device to the first logical function entity, and/or the second indication information is used to indicate the third information of the target information interaction sent by the first logical function entity to the first terminal device.

In a possible implementation manner of the embodiment of the present disclosure, the tenth processing unit is specifically configured to: determine the second indication information corresponding to the target information interaction, and indicate the second indication information corresponding to the target information interaction to the access network device; or receive the second indication information corresponding to the target information interaction indicated by the access network device.

In a possible implementation manner of the embodiment of the present disclosure, the second indication information includes second type indication information and second instance indication information; the tenth processing unit is specifically configured to perform at least one of the following operations: determine the second type indication information in the second indication information corresponding to the target information interaction, and indicate the second type indication information corresponding to the target information interaction to the access network device; or determine the second instance indication information in the second indication information corresponding to the target information interaction, and indicate the second instance indication information corresponding to the target information interaction to the access network device; or determine the second type indication information and the second instance indication information in the second indication information corresponding to the target information interaction, and indicate the second type indication information and the second instance indication information corresponding to the target information interaction to the access network device; or receive the second type indication information in the second indication information corresponding to the target information interaction indicated by the access network device; or receive the second instance indication information in the second indication information corresponding to the target information interaction indicated by the access network device; or receive the second type indication information and the second instance indication information in the second indication information corresponding to the target information interaction indicated by the access network device.

In a possible implementation manner of the embodiment of the present disclosure, the apparatus further includes: a twelfth processing unit configured to send the third information indicated by the second indication information to the access network device; and/or receive the second information indicated by the second indication information sent by the access network device.

In a possible implementation manner of the embodiment of the present disclosure, the apparatus further includes: a ninth determining unit configured to determine the target information interaction corresponding to the second information according to the second indication information when receiving the second information indicated by the second indication information sent by the access network device.

In a possible implementation manner of the embodiment of the present disclosure, the apparatus further includes: a sixth sending unit configured to send first information to the access network device; the first information is used to instruct to initiate the target information interaction.

In a possible implementation manner of the embodiment of the present disclosure, the first logical function entity is a logical function entity in a network or a second terminal device, and the logical function entity in the network is a logical function entity in an access network or a logical function entity in a core network; and the target service, the target function, or the target service includes at least one of the following: UE terminal device data transmission, session management, short message, UE policy, location or positioning, sensing, AI (Artificial Intelligence), and services, functions, or services of the core network.

It should be noted here that the above-mentioned information transmission apparatus provided by the embodiment of the present disclosure can implement all the method steps implemented by the method embodiments shown in Figures 16 to 17 of the present disclosure, and can achieve the same technical effects. The parts and beneficial effects of the embodiment of the present disclosure that are the same as those of the method embodiments will not be described in detail here.

It should be noted that the division of units in the embodiment of the present disclosure is schematic and only a logical function division. In actual implementation, there may be another division manner. In addition, each functional unit in each embodiment of the present disclosure may be integrated into one processing unit, or each unit may exist alone physically, or two or more units may be integrated into one unit. The above-mentioned integrated units may be implemented in the form of hardware or software functional units.

If the integrated unit is implemented in the form of a software functional unit and sold or used as an independent product, it may be stored in a processor-readable storage medium. Based on such an understanding, the technical solution of the present disclosure essentially or the part that contributes to the prior art or all or part of the technical solution may be embodied in the form of a software product. The computer software product is stored in a storage medium and includes several instructions to enable a computer device (which may be a personal computer, a server, or a network device, etc.) or a processor to execute all or part of the steps of the methods described in each embodiment of the present disclosure. The aforementioned storage medium includes: a USB flash drive, a mobile hard disk, a Read-Only Memory (ROM), a Random Access Memory (RAM), a magnetic disk, or an optical disk, etc., which can store program codes.

To implement the above embodiments, the embodiment of the present disclosure also proposes a processor-readable storage medium.

Wherein, the processor-readable storage medium stores a computer program, and the computer program is used to enable the processor to execute the information transmission method of any one of the embodiments shown in Figures 3 to 18 of the present disclosure.

The processor-readable storage medium may be any available medium or data storage device that can be accessed by a processor, including but not limited to magnetic memory (such as a floppy disk, a hard disk, a magnetic tape, a magneto-optical disk (MO), etc.), optical memory (such as a CD, a DVD, a BD, an HVD, etc.), and semiconductor memory (such as a ROM, an EPROM, an EEPROM, a Non-Volatile Memory (NAND FLASH), a Solid State Drive (SSD), etc.).

To implement the above embodiments, the embodiment of the present disclosure also proposes a computer program product, including a computer program, which when executed by a processor implements the information transmission method of any one of the embodiments shown in Figures 3 to 18 of the present disclosure.

To implement the above embodiments, the embodiment of the present disclosure also proposes a computer program, including computer program code. When the computer program code runs on a computer, the computer is caused to execute the information transmission method of any one of the embodiments shown in Figures 3 to 18 of the present disclosure.

It should be noted that the foregoing explanation and description of the information transmission method and apparatus embodiments are also applicable to the electronic device, the storage medium, the computer program product, and the computer program in the above embodiments, and will not be repeated here.

Those skilled in the art should understand that the embodiments of the present disclosure may be provided as methods, systems, or computer program products. Therefore, the present disclosure may adopt the form of an entirely hardware embodiment, an entirely software embodiment, or an embodiment combining software and hardware aspects. Moreover, the present disclosure may adopt the form of a computer program product implemented on one or more computer-usable storage media (including but not limited to disk storage, optical storage, etc.) containing computer-usable program codes.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general-purpose computer, a special-purpose computer, an embedded processor, or other programmable data processing devices to produce a machine, such that the instructions executed by the processor of the computer or other programmable data processing devices produce an apparatus for implementing the functions specified in one or more flows of the flowcharts and/or one or more blocks of the block diagrams.

These processor-executable instructions may also be stored in a processor-readable memory that can guide the computer or other programmable data processing devices to work in a specific manner, such that the instructions stored in the processor-readable memory produce an article of manufacture including an instruction apparatus, which implements the functions specified in one or more flows of the flowcharts and/or one or more blocks of the block diagrams.

These processor-executable instructions may also be loaded onto a computer or other programmable data processing devices, such that a series of operation steps are executed on the computer or other programmable devices to produce computer-implemented processing, so that the instructions executed on the computer or other programmable devices provide steps for implementing the functions specified in one or more flows of the flowcharts and/or one or more blocks of the block diagrams.

Obviously, those skilled in the art can make various modifications and variations to the present disclosure without departing from the spirit and scope of the present disclosure. In this way, if these modifications and variations of the present disclosure fall within the scope of the claims of the present disclosure and their equivalent technologies, the present disclosure also intends to include these modifications and variations.

All embodiments of the present disclosure can be executed independently or in combination with other embodiments, and all are regarded as the scope of protection required by the present disclosure.

## Claims

1. A method for transmitting information, applied to an access network device, comprising:
receiving first information sent by a first user equipment (UE) or a first logical functional entity, wherein the first information is configured to indicate an initiation of a target information interaction, the target information interaction comprises information interaction of a target service or a target function or a target servicing, and the target information interaction is between the first UE and the first logical functional entity; and
indicating, to the first UE, first indication information corresponding to the target information interaction, and/or obtaining first indication information corresponding to the target information interaction determined by the first UE;
wherein the first indication information is configured to indicate second information of the target information interaction sent by the first UE to the first logical functional entity, and/or the first indication information is configured to indicate third information of the target information interaction sent by the first logical functional entity to the first UE.

2. The method according to claim 1, wherein the indicating, to the first UE, the first indication information corresponding to the target information interaction and/or the obtaining the first indication information corresponding to the target information interaction determined by the first UE comprises:
determining the first indication information corresponding to the target information interaction, and indicating, to the first UE, the first indication information corresponding to the target information interaction; or
receiving the first indication information corresponding to the target information interaction indicated by the first UE.

3. The method according to claim 1 or 2, wherein the first indication information comprises first type indication information and first instance indication information, and the indicating, to the first UE, the first indication information corresponding to the target information interaction and/or the obtaining the first indication information corresponding to the target information interaction determined by the first UE comprises at least one of:
determining the first type indication information in the first indication information corresponding to the target information interaction, and indicating, to the first UE, the first type indication information corresponding to the target information interaction; or
determining the first instance indication information in the first indication information corresponding to the target information interaction, and indicating, to the first UE, the first instance indication information corresponding to the target information interaction; or
determining the first type indication information and the first instance indication information in the first indication information corresponding to the target information interaction, and indicating, to the first UE, the first type indication information and the first instance indication information corresponding to the target information interaction; or
receiving the first type indication information in the first indication information corresponding to the target information interaction indicated by the first UE; or
receiving the first instance indication information in the first indication information corresponding to the target information interaction indicated by the first UE; or
receiving the first type indication information and the first instance indication information in the first indication information corresponding to the target information interaction indicated by the first UE.

4. The method according to any one of claims 1 to 3, further comprising:
sending the second information to the first logical functional entity corresponding to the target information interaction, in a case where the second information indicated by the first indication information and sent by the first UE is received; and/or
sending the third information indicated by the first indication information to the first UE corresponding to the target information interaction, in a case where the third information of the target information interaction sent by the first logical functional entity is received.

5. The method according to any one of claims 1 to 4, wherein prior to sending the second information to the first logical functional entity corresponding to the target information interaction, the method further comprises:
determining the first logical functional entity corresponding to the target information interaction.

6. The method according to claim 5, wherein the determining the first logical functional entity corresponding to the target information interaction comprises:
determining, according to the target service or the target function or the target servicing, the first logical functional entity performing the target information interaction with the first UE, wherein the first logical functional entity supports the target service or the target function or the target servicing; or
determining, according to a target logical functional entity type of the target information interaction, the first logical functional entity performing the target information interaction with the first UE, wherein the first logical functional entity belongs to the target logical functional entity type; or
receiving the first logical functional entity performing the target information interaction with the first UE and determined by a second logical functional entity.

7. The method according to any one of claims 4 to 6, wherein
the sending the second information to the first logical functional entity corresponding to the target information interaction in a case where the second information indicated by the first indication information and sent by the first UE is received comprises:
sending the second information to the first logical functional entity corresponding to the target information interaction according to a correspondence between the first indication information and the target information interaction, in a case where the second information indicated by the first indication information and sent by the first UE is received;
and/or
the sending the third information indicated by the first indication information to the first UE corresponding to the target information interaction, in a case where the third information of the target information interaction sent by the first logical functional entity is received comprises:
sending the third information indicated by the first indication information to the first UE corresponding to the target information interaction according to a correspondence between the first indication information and the target information interaction, in a case where the third information of the target information interaction sent by the first logical functional entity is received.

8. The method according to any one of claims 4 to 7, further comprising:
determining a correspondence between the first indication information and the first logical functional entity.

9. The method according to claim 8, wherein
the sending the second information to the first logical functional entity corresponding to the target information interaction, in a case where the second information indicated by the first indication information and sent by the first UE is received comprises:
sending the second information to the first logical functional entity corresponding to the target information interaction according to the correspondence between the first indication information and the first logical functional entity, in a case where the second information indicated by the first indication information and sent by the first UE is received;
and/or,
the sending the third information indicated by the first indication information to the first UE corresponding to the target information interaction, in a case where the third information of the target information interaction sent by the first logical functional entity is received comprises:
sending the third information indicated by the first indication information to the first UE corresponding to the target information interaction according to the correspondence between the first indication information and the first logical functional entity, in a case where the third information of the target information interaction sent by the first logical functional entity is received.

10. The method according to any one of claims 4 to 9, further comprising:
sending, to the first logical functional entity, second indication information corresponding to the target information interaction, and/or obtaining second indication information corresponding to the target information interaction determined by the first logical functional entity;
wherein the second indication information is configured to indicate the second information of the target information interaction sent by the first UE to the first logical functional entity, and/or the second indication information is configured to indicate the third information of the target information interaction sent by the first logical functional entity to the first UE.

11. The method according to claim 10, wherein the sending, to the first logical functional entity, the second indication information corresponding to the target information interaction and/or obtaining the second indication information corresponding to the target information interaction determined by the first logical functional entity comprises:
determining the second indication information corresponding to the target information interaction, and indicating, to the first logical functional entity, the second indication information corresponding to the target information interaction; or,
receiving the second indication information corresponding to the target information interaction indicated by the first logical functional entity.

12. The method according to claim 10 or 11, wherein the second indication information comprises second type indication information and second instance indication information, and the sending, to the first logical functional entity, the second indication information corresponding to the target information interaction and/or the obtaining the second indication information corresponding to the target information interaction determined by the first logical functional entity comprises at least one of:
determining the second type indication information in the second indication information corresponding to the target information interaction, and indicating, to the first logical functional entity, the second type indication information corresponding to the target information interaction; or,
determining the second instance indication information in the second indication information corresponding to the target information interaction, and indicating, to the first logical functional entity, the second instance indication information corresponding to the target information interaction; or,
determining the second type indication information and the second instance indication information in the second indication information corresponding to the target information interaction, and indicating, to the first logical functional entity, the second type indication information and the second instance indication information corresponding to the target information interaction; or,
receiving the second type indication information in the second indication information corresponding to the target information interaction indicated by the first logical functional entity; or,
receiving the second instance indication information in the second indication information corresponding to the target information interaction indicated by the first logical functional entity; or,
receiving the second type indication information and the second instance indication information in the second indication information corresponding to the target information interaction indicated by the first logical functional entity.

13. The method according to any one of claims 10 to 12, wherein
the sending the second information to the first logical functional entity corresponding to the target information interaction, in a case where the second information indicated by the first indication information and sent by the first UE is received comprises:
sending the second information indicated by the second indication information to the first logical functional entity corresponding to the target information interaction, in a case where the second information indicated by the first indication information and sent by the first UE is received;
and/or,
the sending the third information indicated by the first indication information to the first UE corresponding to the target information interaction, in a case where the third information of the target information interaction sent by the first logical functional entity is received comprises:
sending the third information indicated by the first indication information to the first UE corresponding to the target information interaction, in a case where the third information indicated by the second indication information and sent by the first logical functional entity is received.

14. The method according to claim 13, wherein
the sending the second information indicated by the second indication information to the first logical functional entity corresponding to the target information interaction, in a case where the second information indicated by the first indication information and sent by the first UE is received comprises:
sending the second information indicated by the second indication information to the first logical functional entity corresponding to the target information interaction according to a correspondence between the first indication information and the target information interaction and a correspondence between the second indication information and the target information interaction, in a case where the second information indicated by the first indication information and sent by the first UE is received;
and/or,
the sending the third information indicated by the first indication information to the first UE corresponding to the target information interaction, in a case where the third information indicated by the second information and sent by the first logical functional entity is received comprises:
sending the third information indicated by the first indication information to the first UE corresponding to the target information interaction according to a correspondence between the second indication information and the target information interaction and a correspondence between the first indication information and the target information interaction, in a case where the third information indicated by the second information and sent by the first logical functional entity is received.

15. The method according to any one of claims 10 to 14, further comprising:
determining a correspondence between the second indication information and the first indication information, in a case where the second indication information is different from the first indication information.

16. The method according to claim 15, wherein
the sending the second information indicated by the second indication information to the first logical functional entity corresponding to the target information interaction, in a case where the second information indicated by the first indication information and sent by the first UE is received comprises:
sending the second information indicated by the second indication information to the first logical functional entity corresponding to the target information interaction according to the correspondence between the second indication information and the first indication information, in a case where the second information indicated by the first indication information and sent by the first UE is received;
and/or,
the sending the third information indicated by the first indication information to the first UE corresponding to the target information interaction in a case where the third information indicated by the second indication information and sent by the first logical functional entity is received comprises:
sending the third information indicated by the first indication information to the first UE corresponding to the target information interaction according to the correspondence between the second indication information and the first indication information, in a case where the third information indicated by the second indication information and sent by the first logical functional entity is received.

17. The method according to any one of claims 1 to 16, wherein
the first logical functional entity is a logical functional entity in a network or a second UE, and the logical functional entity in the network is a logical functional entity in an access network or a logical functional entity in a core network; and
the target service or the target function or the target servicing comprises at least one of: a UE data transmission, a session management, a short message, a UE policy, a location or positioning, a sensing, an artificial intelligence (AI), or a service or function or servicing of the core network.

18. A method for transmitting information, applied to a first user equipment (UE), comprising:
sending first information to an access network device, wherein the first information is configured to indicate an initiation of a target information interaction, the target information interaction comprises information interaction of a target service or a target function or a target servicing, and the target information interaction is between the first UE and a first logical functional entity; and
indicating, to the access network device, first indication information corresponding to the target information interaction, and/or obtaining first indication information corresponding to the target information interaction determined by the access network device;
wherein the first indication information is configured to indicate second information of the target information interaction sent by the first UE to the access network device, and/or the first indication information is configured to indicate third information of the target information interaction sent by the first logical functional entity to the first UE.

19. The method according to claim 18, wherein the indicating, to the access network device, the first indication information corresponding to the target information interaction and/or the obtaining the first indication information corresponding to the target information interaction determined by the access network device comprises:
determining the first indication information corresponding to the target information interaction, and indicating, to the access network device, the first indication information corresponding to the target information interaction; or
receiving the first indication information corresponding to the target information interaction indicated by the access network device.

20. The method according to claim 18 or 19, wherein the first indication information comprises first type indication information and first instance indication information, and the indicating, to the access network device, the first indication information corresponding to the target information interaction and/or the obtaining the first indication information corresponding to the target information interaction determined by the access network device comprises at least one of:
determining the first type indication information in the first indication information corresponding to the target information interaction, and indicating, to the access network device, the first type indication information corresponding to the target information interaction; or
determining the first instance indication information in the first indication information corresponding to the target information interaction, and indicating, to the access network device, the first instance indication information corresponding to the target information interaction; or
determining the first type indication information and the first instance indication information in the first indication information corresponding to the target information interaction, and indicating, to the access network device, the first type indication information and the first instance indication information corresponding to the target information interaction; or
receiving the first type indication information in the first indication information corresponding to the target information interaction determined by the access network device; or
receiving the first instance indication information in the first indication information corresponding to the target information interaction determined by the access network device; or
receiving the first type indication information and the first instance indication information in the first indication information corresponding to the target information interaction determined by the access network device.

21. The method according to any one of claims 18 to 20, further comprising:
sending, to the access network device, the second information indicated by the first indication information; and/or
receiving the third information indicated by the first indication information and sent by the access network device.

22. The method according to claim 21, further comprising:
determining the target information interaction corresponding to the third information according to the first indication information, in a case where the third information indicated by the first indication information and sent by the access network device is received.

23. The method according to any one of claims 18 to 22, further comprising:
determining a third logical functional entity performing the target information interaction within the first UE.

24. The method according to claim 23, further comprising:
determining a correspondence between the first indication information and the third logical functional entity.

25. The method according to claim 24, further comprising:
sending the third information to the third logical functional entity according to a correspondence between the first indication information and the third logical functional entity.

26. The method according to any one of claims 23 to 25, further comprising:
sending the third information to the third logical functional entity corresponding to the target information interaction according to a correspondence between the first indication information and the target information interaction.

27. The method according to any one of claims 18 to 26, wherein
the first logical functional entity is a logical functional entity in a network or a second UE, and the logical functional entity in the network is a logical functional entity in an access network or a logical functional entity in a core network; and
the target service or the target function or the target servicing comprises at least one of: a UE data transmission, a session management, a short message, a UE policy, a location or positioning, a sensing, an artificial intelligence (AI), or a service or function or servicing of the core network.

28. A method for transmitting information, applied to a first user equipment (UE), comprising:
indicating, to an access network device, first indication information corresponding to a target information interaction, and/or obtaining first indication information corresponding to the target information interaction determined by the access network device;
wherein the target information interaction comprises information interaction of a target service or a target function or a target servicing, and the target information interaction is between the first UE and a first logical functional entity;
the first indication information is configured to indicate second information of the target information interaction sent by the first UE to the access network device, and/or the first indication information is configured to indicate third information of the target information interaction sent by the first logical functional entity to the first UE.

29. The method according to claim 28, wherein the indicating, to the access network device, the first indication information corresponding to the target information interaction and/or the obtaining the first indication information corresponding to the target information interaction determined by the access network device comprises:
determining the first indication information corresponding to the target information interaction, and indicating, to the access network device, the first indication information corresponding to the target information interaction; or
receiving the first indication information corresponding to the target information interaction indicated by the access network device.

30. The method according to claim 28 or 29, wherein the first indication information comprises first type indication information and first instance indication information, and the indicating, to the access network device, the first indication information corresponding to the target information interaction and/or the obtaining the first indication information corresponding to the target information interaction determined by the access network device comprises at least one of:
determining the first type indication information in the first indication information corresponding to the target information interaction, and indicating, to the access network device, the first type indication information corresponding to the target information interaction; or
determining the first instance indication information in the first indication information corresponding to the target information interaction, and indicating, to the access network device, the first instance indication information corresponding to the target information interaction; or
determining the first type indication information and the first instance indication information in the first indication information corresponding to the target information interaction, and indicating, to the access network device, the first type indication information and the first instance indication information corresponding to the target information interaction; or
receiving the first type indication information in the first indication information corresponding to the target information interaction determined by the access network device; or
receiving the first instance indication information in the first indication information corresponding to the target information interaction determined by the access network device; or
receiving the first type indication information and the first instance indication information in the first indication information corresponding to the target information interaction determined by the access network device.

31. The method according to any one of claims 28 to 30, further comprising:
sending, to the access network device, the second information indicated by the first indication information; and/or
receiving the third information indicated by the first indication information and sent by the access network device.

32. The method according to claim 31, further comprising:
determining the target information interaction corresponding to the third information according to the first indication information, in a case where the third information indicated by the first indication information and sent by the access network device is received.

33. The method according to any one of claims 28 to 32, further comprising:
sending first information to the access network device, wherein the first information is configured to indicate an initiation of the target information interaction.

34. The method according to any one of claims 28 to 33, wherein
the first logical functional entity is a logical functional entity in a network or a second UE, and the logical functional entity in the network is a logical functional entity in an access network or a logical functional entity in a core network; and
the target service or the target function or the target servicing comprises at least one of: a UE data transmission, a session management, a short message, a UE policy, a location or positioning, a sensing, an artificial intelligence (AI), or a service or function or servicing of the core network.

35. A method for transmitting information, applied to a first logical functional entity, comprising:
sending first information to an access network device, wherein the first information is configured to indicate an initiation of a target information interaction, the target information interaction comprises information interaction of a target service or a target function or a target servicing, the target information interaction is between a first user equipment (UE) and the first logical functional entity, and the target information interaction corresponds to first indication information;
wherein the first indication information is configured to indicate second information of the target information interaction sent by the first UE to the first logical functional entity, and/or the first indication information is configured to indicate third information of the target information interaction sent by the first logical functional entity to the first UE.

36. The method according to claim 35, further comprising:
sending the third information of the target information interaction to the access network device; and/or
receiving the second information of the target information interaction sent by the access network device.

37. The method according to claim 35 or 36, further comprising:
indicating, to the access network device, second indication information corresponding to the target information interaction, and/or obtaining second indication information corresponding to the target information interaction determined by the access network device;
wherein the second indication information is configured to indicate the second information of the target information interaction sent by the first UE to the first logical functional entity, and/or the second indication information is configured to indicate the third information of the target information interaction sent by the first logical functional entity to the first UE.

38. The method according to claim 37, wherein the indicating, to the access network device, the second indication information corresponding to the target information interaction and/or the obtaining the second indication information corresponding to the target information interaction determined by the access network device comprises:
determining the second indication information corresponding to the target information interaction, and indicating, to the access network device, the second indication information corresponding to the target information interaction; or
receiving the second indication information corresponding to the target information interaction indicated by the access network device.

39. The method according to claim 37 or 38, wherein the second indication information comprises second type indication information and second instance indication information, and the indicating, to the access network device, the second indication information corresponding to the target information interaction and/or the obtaining the second indication information corresponding to the target information interaction determined by the access network device comprises at least one of:
determining the second type indication information in the second indication information corresponding to the target information interaction, and indicating, to the access network device, the second type indication information corresponding to the target information interaction; or
determining the second instance indication information in the second indication information corresponding to the target information interaction, and indicating, to the access network device, the second instance indication information corresponding to the target information interaction; or
determining the second type indication information and the second instance indication information in the second indication information corresponding to the target information interaction, and indicating, to the access network device, the second type indication information and the second instance indication information corresponding to the target information interaction; or
receiving the second type indication information in the second indication information corresponding to the target information interaction indicated by the access network device; or
receiving the second instance indication information in the second indication information corresponding to the target information interaction indicated by the access network device; or
receiving the second type indication information and the second instance indication information in the second indication information corresponding to the target information interaction indicated by the access network device.

40. The method according to any one of claims 35 to 39, further comprising:
sending, to the access network device, the third information indicated by the second indication information; and/or
receiving the second information indicated by the second indication information and sent by the access network device.

41. The method according to claim 40, further comprising:
determining the target information interaction corresponding to the second information according to the second indication information, in a case where the second information indicated by the second indication information and sent by the access network device is received.

42. The method according to any one of claims 35 to 41, wherein
the first logical functional entity is a logical functional entity in a network or a second UE, and the logical functional entity in the network is a logical functional entity in an access network or a logical functional entity in a core network; and
the target service or the target function or the target servicing comprises at least one of: a UE data transmission, a session management, a short message, a UE policy, a location or positioning, a sensing, an artificial intelligence (AI), or a service or function or servicing of the core network.

43. A method for transmitting information, applied to a first logical functional entity, comprising:
indicating, to an access network device, second indication information corresponding to a target information interaction, and/or obtaining second indication information corresponding to the target information interaction determined by the access network device;
wherein the target information interaction comprises information interaction of a target service or a target function or a target servicing, and the target information interaction is between a first user equipment (UE) and the first logical functional entity;
the second indication information is configured to indicate second information of the target information interaction sent by the first UE to the first logical functional entity, and/or the second indication information is configured to indicate third information of the target information interaction sent by the first logical functional entity to the first UE.

44. The method according to claim 43, wherein the indicating, to the access network device, the second indication information corresponding to the target information interaction and/or the obtaining the second indication information corresponding to the target information interaction determined by the access network device comprises:
determining the second indication information corresponding to the target information interaction, and indicating, to the access network device, the second indication information corresponding to the target information interaction; or
receiving the second indication information corresponding to the target information interaction indicated by the access network device.

45. The method according to claim 43 or 44, wherein the second indication information comprises second type indication information and second instance indication information, and the indicating, to the access network device, the second indication information corresponding to the target information interaction and/or the obtaining the second indication information corresponding to the target information interaction determined by the access network device comprises at least one of:
determining the second type indication information in the second indication information corresponding to the target information interaction, and indicating, to the access network device, the second type indication information corresponding to the target information interaction; or
determining the second instance indication information in the second indication information corresponding to the target information interaction, and indicating, to the access network device, the second instance indication information corresponding to the target information interaction; or
determining the second type indication information and the second instance indication information in the second indication information corresponding to the target information interaction, and indicating, to the access network device, the second type indication information and the second instance indication information corresponding to the target information interaction; or
receiving the second type indication information in the second indication information corresponding to the target information interaction indicated by the access network device; or
receiving the second instance indication information in the second indication information corresponding to the target information interaction indicated by the access network device; or
receiving the second type indication information and the second instance indication information in the second indication information corresponding to the target information interaction indicated by the access network device.

46. The method according to any one of claims 43 to 45, further comprising:
sending, to the access network device, the third information indicated by the second indication information; and/or
receiving the second information indicated by the second indication information and sent by the access network device.

47. The method according to claim 46, further comprising:
determining the target information interaction corresponding to the second information according to the second indication information, in a case where the second information indicated by the second indication information and sent by the access network device is received.

48. The method according to any one of claims 43 to 47, further comprising:
sending first information to the access network device, wherein the first information is configured to indicate an initiation of the target information interaction.

49. The method according to any one of claims 43 to 48, wherein
the first logical functional entity is a logical functional entity in a network or a second UE, and the logical functional entity in the network is a logical functional entity in an access network or a logical functional entity in a core network; and
the target service or the target function or the target servicing comprises at least one of: a UE data transmission, a session management, a short message, a UE policy, a location or positioning, a sensing, an artificial intelligence (AI), or a service or function or servicing of the core network.

50. An apparatus for transmitting information, comprising a memory, a transceiver, and a processor:
the memory is configured to store a computer program, the transceiver is configured to send and receive data under a control of the processor, and the processor is configured to read the computer program in the memory to perform:
receiving first information sent by a first user equipment (UE) or a first logical functional entity, wherein the first information is configured to indicate an initiation of a target information interaction, the target information interaction comprises information interaction of a target service or a target function or a target servicing, and the target information interaction is between the first UE and the first logical functional entity; and
indicating, to the first UE, first indication information corresponding to the target information interaction, and/or obtaining first indication information corresponding to the target information interaction determined by the first UE;
wherein the first indication information is configured to indicate second information of the target information interaction sent by the first UE to the first logical functional entity, and/or the first indication information is configured to indicate third information of the target information interaction sent by the first logical functional entity to the first UE.

51. The apparatus according to claim 50, wherein the processor is further configured to perform:
determining the first indication information corresponding to the target information interaction, and indicating, to the first UE, the first indication information corresponding to the target information interaction; or
receiving the first indication information corresponding to the target information interaction and indicated by the first UE.

52. The apparatus according to claim 50 or 51, wherein the first indication information comprises first type indication information and first instance indication information, and the processor is further configured to perform at least one of:
determining the first type indication information in the first indication information corresponding to the target information interaction, and indicating, to the first UE, the first type indication information corresponding to the target information interaction; or
determining the first instance indication information in the first indication information corresponding to the target information interaction, and indicating, to the first UE, the first instance indication information corresponding to the target information interaction; or
determining the first type indication information and the first instance indication information in the first indication information corresponding to the target information interaction, and indicating, to the first UE, the first type indication information and the first instance indication information corresponding to the target information interaction; or
receiving the first type indication information in the first indication information corresponding to the target information interaction indicated by the first UE; or
receiving the first instance indication information in the first indication information corresponding to the target information interaction indicated by the first UE; or
receiving the first type indication information and the first instance indication information in the first indication information corresponding to the target information interaction indicated by the first UE.

53. The apparatus according to any one of claims 50 to 52, wherein the processor is further configured to perform:
sending the second information to the first logical functional entity corresponding to the target information interaction, in a case where the second information indicated by the first indication information and sent by the first UE is received; and/or
sending the third information indicated by the first indication information to the first UE corresponding to the target information interaction, in a case where the third information of the target information interaction sent by the first logical functional entity is received.

54. The apparatus according to claim 53, wherein the processor is further configured to perform the following operation:
sending, to the first logical functional entity, second indication information corresponding to the target information interaction, and/or obtaining second indication information corresponding to the target information interaction determined by the first logical functional entity;
wherein the second indication information is configured to indicate the second information of the target information interaction sent by the first UE to the first logical functional entity, and/or the second indication information is configured to indicate the third information of the target information interaction sent by the first logical functional entity to the first UE.

55. An apparatus for transmitting information, comprising a memory, a transceiver, and a processor:
the memory is configured to store a computer program, the transceiver is configured to send and receive data under a control of the processor, and the processor is configured to read the computer program in the memory to perform:
sending first information to an access network device, wherein the first information is configured to indicate an initiation of a target information interaction, the target information interaction comprises information interaction of a target service or a target function or a target servicing, and the target information interaction is between the first UE and a first logical functional entity; and
indicating, to the access network device, first indication information corresponding to the target information interaction, and/or obtaining first indication information corresponding to the target information interaction determined by the access network device;
wherein the first indication information is configured to indicate second information of the target information interaction sent by the first UE to the access network device, and/or the first indication information is configured to indicate third information of the target information interaction sent by the first logical functional entity to the first UE.

56. The apparatus according to claim 55, wherein the processor is further configured to perform:
determining the first indication information corresponding to the target information interaction, and indicating, to the access network device, the first indication information corresponding to the target information interaction; or
receiving the first indication information corresponding to the target information interaction indicated by the access network device.

57. The apparatus according to claim 55 or 56, wherein the first indication information comprises first type indication information and first instance indication information, and the processor is further configured to perform at least one of:
determining the first type indication information in the first indication information corresponding to the target information interaction, and indicating, to the access network device, the first type indication information corresponding to the target information interaction; or
determining the first instance indication information in the first indication information corresponding to the target information interaction, and indicating, to the access network device, the first instance indication information corresponding to the target information interaction; or
determining the first type indication information and the first instance indication information in the first indication information corresponding to the target information interaction, and indicating, to the access network device, the first type indication information and the first instance indication information corresponding to the target information interaction; or
receiving the first type indication information in the first indication information corresponding to the target information interaction determined by the access network device; or
receiving the first instance indication information in the first indication information corresponding to the target information interaction determined by the access network device; or
receiving the first type indication information and the first instance indication information in the first indication information corresponding to the target information interaction determined by the access network device.

58. The apparatus according to any one of claims 55 to 57, wherein the processor is further configured to perform:
sending the second information indicated by the first indication information to the access network device; and/or
receiving the third information indicated by the first indication information and sent by the access network device.

59. An apparatus for transmitting information, comprising a memory, a transceiver, and a processor:
the memory is configured to store a computer program, the transceiver is configured to send and receive data under a control of the processor, and the processor is configured to read the computer program in the memory to perform:
indicating, to an access network device, first indication information corresponding to a target information interaction, and/or obtaining first indication information corresponding to the target information interaction determined by the access network device;
wherein the target information interaction comprises information interaction of a target service or a target function or a target servicing, and the target information interaction is between the first UE and a first logical functional entity;
the first indication information is configured to indicate second information of the target information interaction sent by the first UE to the access network device, and/or the first indication information is configured to indicate third information of the target information interaction sent by the first logical functional entity to the first UE.

60. The apparatus according to claim 59, wherein the processor is further configured to perform:
determining the first indication information corresponding to the target information interaction, and indicating, to the access network device, the first indication information corresponding to the target information interaction; or
receiving the first indication information corresponding to the target information interaction indicated by the access network device.

61. The apparatus according to claim 59 or 60, wherein the first indication information comprises first type indication information and first instance indication information, and the processor is further configured to perform at least one of:
determining the first type indication information in the first indication information corresponding to the target information interaction, and indicating, to the access network device, the first type indication information corresponding to the target information interaction; or
determining the first instance indication information in the first indication information corresponding to the target information interaction, and indicating, to the access network device, the first instance indication information corresponding to the target information interaction; or
determining the first type indication information and the first instance indication information in the first indication information corresponding to the target information interaction, and indicating, to the access network device, the first type indication information and the first instance indication information corresponding to the target information interaction; or
receiving the first type indication information in the first indication information corresponding to the target information interaction determined by the access network device; or
receiving the first instance indication information in the first indication information corresponding to the target information interaction determined by the access network device; or
receiving the first type indication information and the first instance indication information in the first indication information corresponding to the target information interaction determined by the access network device.

62. The apparatus according to any one of claims 59 to 61, wherein the processor is further configured to perform:
sending the second information indicated by the first indication information to the access network device; and/or
receiving the third information indicated by the first indication information and sent by the access network device.

63. The apparatus according to any one of claims 59 to 62, wherein the processor is further configured to perform:
sending first information to the access network device, wherein the first information is configured to indicate an initiation of the target information interaction.

64. An apparatus for transmitting information, comprising a memory, a transceiver, and a processor:
the memory is configured to store a computer program, the transceiver is configured to send and receive data under a control of the processor, and the processor is configured to read the computer program in the memory to perform:
sending first information to an access network device, wherein the first information is configured to indicate an initiation of a target information interaction, the target information interaction comprises information interaction of a target service or a target function or a target servicing, the target information interaction is between a first user equipment (UE) and the first logical functional entity, and the target information interaction corresponds to first indication information;
wherein the first indication information is configured to indicate second information of the target information interaction sent by the first UE to the first logical functional entity, and/or the first indication information is configured to indicate third information of the target information interaction sent by the first logical functional entity to the first UE.

65. The apparatus according to claim 64, wherein the processor is further configured to perform:
sending the third information of the target information interaction to the access network device; and/or
receiving the second information of the target information interaction sent by the access network device.

66. The apparatus according to claim 64 or 65, wherein the processor is further configured to perform the following operation:
indicating, to the access network device, second indication information corresponding to the target information interaction, and/or obtaining second indication information corresponding to the target information interaction determined by the access network device;
wherein the second indication information is configured to indicate the second information of the target information interaction sent by the first UE to the first logical functional entity, and/or the second indication information is configured to indicate the third information of the target information interaction sent by the first logical functional entity to the first UE.

67. The apparatus according to claim 66, wherein the processor is further configured to perform:
determining the second indication information corresponding to the target information interaction, and indicating, to the access network device, the second indication information corresponding to the target information interaction; or
receiving the second indication information corresponding to the target information interaction and indicated by the access network device.

68. The apparatus according to claim 66 or 67, wherein the second indication information comprises second type indication information and second instance indication information, and the processor is further configured to perform at least one of:
determining the second type indication information in the second indication information corresponding to the target information interaction, and indicating, to the access network device, the second type indication information corresponding to the target information interaction; or
determining the second instance indication information in the second indication information corresponding to the target information interaction, and indicating, to the access network device, the second instance indication information corresponding to the target information interaction; or
determining the second type indication information and the second instance indication information in the second indication information corresponding to the target information interaction, and indicating, to the access network device, the second type indication information and the second instance indication information corresponding to the target information interaction; or
receiving the second type indication information in the second indication information corresponding to the target information interaction indicated by the access network device; or
receiving the second instance indication information in the second indication information corresponding to the target information interaction indicated by the access network device; or
receiving the second type indication information and the second instance indication information in the second indication information corresponding to the target information interaction indicated by the access network device.

69. The apparatus according to any one of claims 64 to 68, wherein the processor is further configured to perform:
sending the third information indicated by the second indication information to the access network device; and/or
receiving the second information indicated by the second indication information and sent by the access network device.

70. An apparatus for transmitting information, comprising a memory, a transceiver, and a processor:
the memory is configured to store a computer program, the transceiver is configured to send and receive data under a control of the processor, and the processor is configured to read the computer program in the memory to perform:
indicating, to an access network device, second indication information corresponding to a target information interaction, and/or obtaining second indication information corresponding to the target information interaction determined by the access network device;
wherein the target information interaction comprises information interaction of a target service or a target function or a target servicing, and the target information interaction is between the first UE and a first logical functional entity;
the second indication information is configured to indicate second information of the target information interaction sent by the first UE to the first logical functional entity, and/or the second indication information is configured to indicate third information of the target information interaction sent by the first logical functional entity to the first UE.

71. The apparatus according to claim 70, wherein the processor is further configured to perform:
determining the second indication information corresponding to the target information interaction, and indicating, to the access network device, the second indication information corresponding to the target information interaction; or
receiving the second indication information corresponding to the target information interaction and indicated by the access network device.

72. The apparatus according to claim 70 or 71, wherein the second indication information comprises second type indication information and second instance indication information, and the processor is further configured to perform at least one of:
determining the second type indication information in the second indication information corresponding to the target information interaction, and indicating, to the access network device, the second type indication information corresponding to the target information interaction; or
determining the second instance indication information in the second indication information corresponding to the target information interaction, and indicating, to the access network device, the second instance indication information corresponding to the target information interaction; or
determining the second type indication information and the second instance indication information in the second indication information corresponding to the target information interaction, and indicating, to the access network device, the second type indication information and the second instance indication information corresponding to the target information interaction; or
receiving the second type indication information in the second indication information corresponding to the target information interaction indicated by the access network device; or
receiving the second instance indication information in the second indication information corresponding to the target information interaction indicated by the access network device; or
receiving the second type indication information and the second instance indication information in the second indication information corresponding to the target information interaction indicated by the access network device.

73. The apparatus according to any one of claims 70 to 72, wherein the processor is further configured to perform:
sending the third information indicated by the second indication information to the access network device; and/or
receiving the second information indicated by the second indication information and sent by the access network device.

74. The apparatus according to any one of claims 70 to 73, wherein the processor is further configured to perform the following operation:
sending first information to the access network device, wherein the first information is configured to indicate an initiation of the target information interaction.

75. An apparatus for transmitting information, applied to an access network device, comprising:
a first receiving unit configured to receive first information sent by a first user equipment (UE) or a first logical functional entity, wherein the first information is configured to indicate an initiation of a target information interaction, the target information interaction comprises information interaction of a target service or a target function or a target servicing, and the target information interaction is between the first UE and the first logical functional entity; and
a first processing unit configured to indicate, to the first UE, first indication information corresponding to the target information interaction, and/or obtain first indication information corresponding to the target information interaction determined by the first UE;
wherein the first indication information is configured to indicate second information of the target information interaction sent by the first UE to the first logical functional entity, and/or the first indication information is configured to indicate third information of the target information interaction sent by the first logical functional entity to the first UE.

76. The apparatus according to claim 75, wherein the first processing unit is further configured to:
determine the first indication information corresponding to the target information interaction, and indicate, to the first UE, the first indication information corresponding to the target information interaction; or
receive the first indication information corresponding to the target information interaction and indicated by the first UE.

77. The apparatus according to claim 75 or 76, wherein the first indication information comprises first type indication information and first instance indication information, and the first processing unit is further configured to perform at least one of:
determining the first type indication information in the first indication information corresponding to the target information interaction, and indicating, to the first UE, the first type indication information corresponding to the target information interaction; or
determining the first instance indication information in the first indication information corresponding to the target information interaction, and indicating, to the first UE, the first instance indication information corresponding to the target information interaction; or
determining the first type indication information and the first instance indication information in the first indication information corresponding to the target information interaction, and indicating, to the first UE, the first type indication information and the first instance indication information corresponding to the target information interaction; or
receiving the first type indication information in the first indication information corresponding to the target information interaction indicated by the first UE; or
receiving the first instance indication information in the first indication information corresponding to the target information interaction indicated by the first UE; or
receiving the first type indication information and the first instance indication information in the first indication information corresponding to the target information interaction indicated by the first UE.

78. The apparatus according to any one of claims 75 to 77, further comprising:
a second processing unit configured to send the second information to the first logical functional entity corresponding to the target information interaction, in a case where the second information indicated by the first indication information and sent by the first UE is received; and/or send the third information indicated by the first indication information to the first UE corresponding to the target information interaction, in a case where the third information of the target information interaction sent by the first logical functional entity is received.

79. The apparatus according to claim 78, further comprising:
a third processing unit configured to send, to the first logical functional entity, second indication information corresponding to the target information interaction, and/or obtain second indication information corresponding to the target information interaction determined by the first logical functional entity;
wherein the second indication information is configured to indicate the second information of the target information interaction sent by the first UE to the first logical functional entity, and/or the second indication information is configured to indicate the third information of the target information interaction sent by the first logical functional entity to the first UE.

80. An apparatus for transmitting information, applied to a first user equipment (UE), comprising:
a first sending unit configured to send first information to an access network device, wherein the first information is configured to indicate an initiation of a target information interaction, the target information interaction comprises information interaction of a target service or a target function or a target servicing, and the target information interaction is between the first UE and a first logical functional entity; and
a fourth processing unit configured to indicate, to the access network device, first indication information corresponding to the target information interaction, and/or obtain first indication information corresponding to the target information interaction determined by the access network device;
wherein the first indication information is configured to indicate second information of the target information interaction sent by the first UE to the access network device, and/or the first indication information is configured to indicate third information of the target information interaction sent by the first logical functional entity to the first UE.

81. The apparatus according to claim 80, wherein the fourth processing unit is further configured to:
determine the first indication information corresponding to the target information interaction, and indicate, to the access network device, the first indication information corresponding to the target information interaction; or
receive the first indication information corresponding to the target information interaction indicated by the access network device.

82. The apparatus according to claim 80 or 81, wherein the first indication information comprises first type indication information and first instance indication information, and the fourth processing unit is further configured to perform at least one of:
determining the first type indication information in the first indication information corresponding to the target information interaction, and indicating, to the access network device, the first type indication information corresponding to the target information interaction; or
determining the first instance indication information in the first indication information corresponding to the target information interaction, and indicating, to the access network device, the first instance indication information corresponding to the target information interaction; or
determining the first type indication information and the first instance indication information in the first indication information corresponding to the target information interaction, and indicating, to the access network device, the first type indication information and the first instance indication information corresponding to the target information interaction; or
receiving the first type indication information in the first indication information corresponding to the target information interaction determined by the access network device; or
receiving the first instance indication information in the first indication information corresponding to the target information interaction determined by the access network device; or
receiving the first type indication information and the first instance indication information in the first indication information corresponding to the target information interaction determined by the access network device.

83. The apparatus according to any one of claims 80 to 82, further comprising:
a fifth processing unit configured to send the second information indicated by the first indication information to the access network device; and/or receive the third information indicated by the first indication information and sent by the access network device.

84. An apparatus for transmitting information, applied to a first user equipment (UE), comprising:
a sixth processing unit configured to indicate, to an access network device, first indication information corresponding to a target information interaction, and/or obtain first indication information corresponding to the target information interaction determined by the access network device;
wherein the target information interaction comprises information interaction of a target service or a target function or a target servicing, and the target information interaction is between the first UE and a first logical functional entity;
the first indication information is configured to indicate second information of the target information interaction sent by the first UE to the access network device, and/or the first indication information is configured to indicate third information of the target information interaction sent by the first logical functional entity to the first UE.

85. The apparatus according to claim 84, wherein the sixth processing unit is further configured to:
determine the first indication information corresponding to the target information interaction, and indicate, to the access network device, the first indication information corresponding to the target information interaction; or
receive the first indication information corresponding to the target information interaction indicated by the access network device.

86. The apparatus according to claim 84 or 85, wherein the first indication information comprises first type indication information and first instance indication information, and the sixth processing unit is further configured to perform at least one of:
determining the first type indication information in the first indication information corresponding to the target information interaction, and indicating, to the access network device, the first type indication information corresponding to the target information interaction; or
determining the first instance indication information in the first indication information corresponding to the target information interaction, and indicating, to the access network device, the first instance indication information corresponding to the target information interaction; or
determining the first type indication information and the first instance indication information in the first indication information corresponding to the target information interaction, and indicating, to the access network device, the first type indication information and the first instance indication information corresponding to the target information interaction; or
receiving the first type indication information in the first indication information corresponding to the target information interaction determined by the access network device; or
receiving the first instance indication information in the first indication information corresponding to the target information interaction determined by the access network device; or
receiving the first type indication information and the first instance indication information in the first indication information corresponding to the target information interaction determined by the access network device.

87. The apparatus according to any one of claims 84 to 86, further comprising:
a seventh processing unit configured to send the second information indicated by the first indication information to the access network device; and/or receive the third information indicated by the first indication information and sent by the access network device.

88. The apparatus according to any one of claims 84 to 87, further comprising:
a fourth sending unit configured to send first information to the access network device, wherein the first information is configured to indicate an initiation of the target information interaction.

89. An apparatus for transmitting information, applied to a first logical functional entity, comprising:
a fifth sending unit configured to send first information to an access network device, wherein the first information is configured to indicate an initiation of a target information interaction, the target information interaction comprises information interaction of a target service or a target function or a target servicing, the target information interaction is between a first user equipment (UE) and the first logical functional entity, and the target information interaction corresponds to first indication information;
wherein the first indication information is configured to indicate second information of the target information interaction sent by the first UE to the first logical functional entity, and/or the first indication information is configured to indicate third information of the target information interaction sent by the first logical functional entity to the first UE.

90. The apparatus according to claim 89, further comprising:
an eighth processing unit configured to send the third information of the target information interaction to the access network device; and/or receive the second information of the target information interaction sent by the access network device.

91. The apparatus according to claim 89 or 90, further comprising:
a ninth processing unit configured to indicate, to the access network device, second indication information corresponding to the target information interaction, and/or obtain second indication information corresponding to the target information interaction determined by the access network device;
wherein the second indication information is configured to indicate the second information of the target information interaction sent by the first UE to the first logical functional entity, and/or the second indication information is configured to indicate the third information of the target information interaction sent by the first logical functional entity to the first UE.

92. The apparatus according to claim 91, wherein the ninth processing unit is further configured to:
determine the second indication information corresponding to the target information interaction, and indicate, to the access network device, the second indication information corresponding to the target information interaction; or
receive the second indication information corresponding to the target information interaction and indicated by the access network device.

93. The apparatus according to claim 91 or 92, wherein the second indication information comprises second type indication information and second instance indication information, and the ninth processing unit is further configured to perform at least one of:
determining the second type indication information in the second indication information corresponding to the target information interaction, and indicating, to the access network device, the second type indication information corresponding to the target information interaction; or
determining the second instance indication information in the second indication information corresponding to the target information interaction, and indicating, to the access network device, the second instance indication information corresponding to the target information interaction; or
determining the second type indication information and the second instance indication information in the second indication information corresponding to the target information interaction, and indicating, to the access network device, the second type indication information and the second instance indication information corresponding to the target information interaction; or
receiving the second type indication information in the second indication information corresponding to the target information interaction indicated by the access network device; or
receiving the second instance indication information in the second indication information corresponding to the target information interaction indicated by the access network device; or
receiving the second type indication information and the second instance indication information in the second indication information corresponding to the target information interaction indicated by the access network device.

94. The apparatus according to any one of claims 89 to 93, further comprising:
an eleventh processing unit configured to send the third information indicated by the second indication information to the access network device; and/or receive the second information indicated by the second indication information and sent by the access network device.

95. An apparatus for transmitting information, applied to a first logical functional entity, comprising:
a tenth processing unit configured to indicate, to an access network device, second indication information corresponding to a target information interaction, and/or obtain second indication information corresponding to the target information interaction determined by the access network device;
wherein the target information interaction comprises information interaction of a target service or a target function or a target servicing, and the target information interaction is between the first UE and the first logical functional entity;
the second indication information is configured to indicate second information of the target information interaction sent by the first UE to the first logical functional entity, and/or the second indication information is configured to indicate third information of the target information interaction sent by the first logical functional entity to the first UE.

96. The apparatus according to claim 95, wherein the tenth processing unit is further configured to:
determine the second indication information corresponding to the target information interaction, and indicate, to the access network device, the second indication information corresponding to the target information interaction; or
receive the second indication information corresponding to the target information interaction and indicated by the access network device.

97. The apparatus according to claim 95 or 96, wherein the second indication information comprises second type indication information and second instance indication information, and the tenth processing unit is further configured to perform at least one of:
determining the second type indication information in the second indication information corresponding to the target information interaction, and indicating, to the access network device, the second type indication information corresponding to the target information interaction; or
determining the second instance indication information in the second indication information corresponding to the target information interaction, and indicating, to the access network device, the second instance indication information corresponding to the target information interaction; or
determining the second type indication information and the second instance indication information in the second indication information corresponding to the target information interaction, and indicating, to the access network device, the second type indication information and the second instance indication information corresponding to the target information interaction; or
receiving the second type indication information in the second indication information corresponding to the target information interaction indicated by the access network device; or
receiving the second instance indication information in the second indication information corresponding to the target information interaction indicated by the access network device; or
receiving the second type indication information and the second instance indication information in the second indication information corresponding to the target information interaction indicated by the access network device.

98. The apparatus according to any one of claims 95 to 97, further comprising:
a twelfth processing unit configured to send the third information indicated by the second indication information to the access network device; and/or receive the second information indicated by the second indication information and sent by the access network device.

99. The apparatus according to any one of claims 95 to 98, further comprising:
a sixth sending unit configured to send first information to the access network device, wherein the first information is configured to indicate an initiation of the target information interaction.

100. A processor-readable storage medium, wherein the processor-readable storage medium stores a computer program, the computer program being configured to cause the processor to perform the method according to any one of claims 1 to 17, or perform the method according to any one of claims 18 to 27, or perform the method according to any one of claims 28 to 34, or perform the method according to any one of claims 35 to 42, or perform the method according to any one of claims 43 to 49.
